# EUROPEAN PATENT SPECIFICATION

(11) **EP 4 292 248 B1**
(45) Date of publication and mention of the grant of the patent: **31.12.2025**
(21) Application number: 22708813.5
(22) Date of filing: 10.02.2022
(51) Int. Cl.: H04L 12/28

(54) **CLOUD-BASED AUTOMATION SYSTEM, ZONE CONTROLLER, BUILDING GATEWAY, AND METHODS THEREOF FOR INCREASING ENERGY EFFICIENCY OF BUILDINGS**
CLOUD-BASIERTES AUTOMATISIERUNGSSYSTEM, ZONENSTEUERUNG, GEBÄUDEGATEWAY UND VERFAHREN DAFÜR ZUR ERHÖHUNG DER ENERGIEEFFIZIENZ VON GEBÄUDEN
SYSTÈME D'AUTOMATISATION EN NUAGE, CONTRÔLEUR DE ZONE, PASSERELLE DE BÂTIMENT ET PROCÉDÉS ASSOCIÉS PERMETTANT D'AUGMENTER L'EFFICACITÉ ÉNERGÉTIQUE DE BÂTIMENTS

(30) Priority: 15.02.2021 CA 3108929
(43) Date of publication of application: 20.12.2023
(73) Proprietor: Jones Lang Lasalle Technologies GmbH, 60325 Frankfurt/Main (DE)
(72) Inventor: ALAGHEHBAND, Reza, 10179 Berlin (DE); DEL VALLE CARRASCO, Rodolfo Ignacio, 10179 Berlin (DE); SUKA, Srdan, 10179 Berlin (DE)
(74) Representative: Savi, Massimiliano
(86) International application number: PCT/EP2022/053223
(87) International publication number: WO 2022/171730

(56) References cited:
- EP-A1- 3 737 042
- US-A1- 2013 346 559
- US-A1- 2019 190 992

## Description

### BACKGROUND OF THE INVENTION

### (1) Field of the Invention

The invention pertains generally to automatic control of energy-utilizing systems within buildings. More specifically, the invention relates to a cloud-based automation system that collects and analyses information from sensors in a building in order to dynamically control actuators and optimize energy efficiency of the building.

### (2) Description of the Related Art

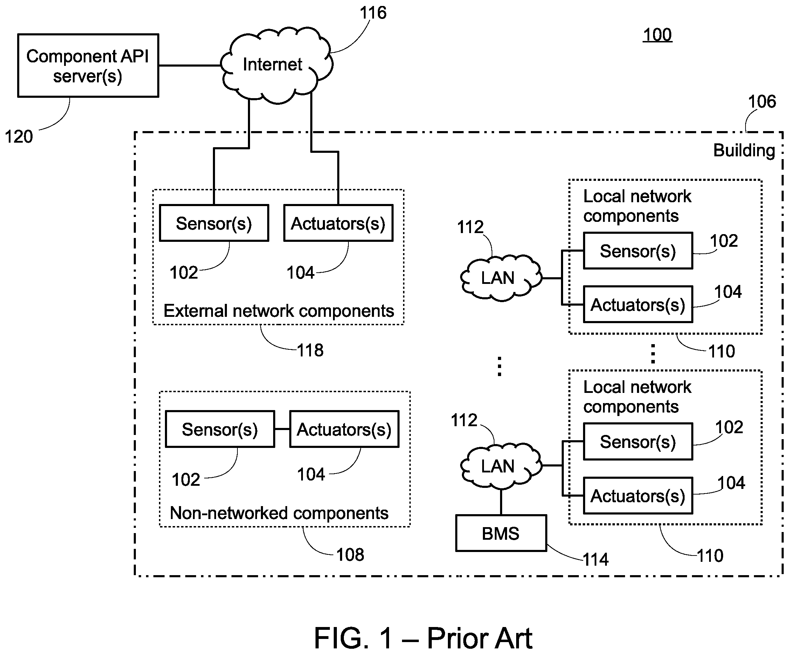

FIG. 1 shows a block diagram of a building automation system 100 according to the prior art. The system 100 includes a plurality of components including sensors 102 and actuators 104 distributed throughout various locations within a building 106. Sensors 102 typically measure some characteristic of another device or the environment, and actuators 104 typically change states of another device based on some type of command. Sensors 102 transmit information whereas actuators 104 receive information. Examples of sensors 102 include motion sensors, thermometers, light sensors, microphones, switches, pressure sensors, voltage sensors, carbon dioxide (CO2) sensors, electrical current sensors, electrical voltage sensors, etc. Examples of actuators 104 include fan controllers, switch controllers, heater controllers, power supply controllers, light controllers, electrical relays, etc. Some components may act as both a sensor 102 and an actuator 104.

Many buildings 106 include a plurality of non-networked components 108, often formed by one or more sensor-actuator pairs 102, 104. An example would be a motion sensor 102 within a bathroom coupled to a light switch actuator 104 for the bathroom lights. The light switch actuator 104 is designed to detect a signal from the motion sensor 102 indicating a person has entered the bathroom; in response, the actuator 104 automatically turns on the lights. A predetermined time period after motion is last detected by the sensor 102, the actuator 104 automatically turns off the lights. This simple design can help reduce the power requirements of the building 106 by ensuring the bathroom lights are only turned on when needed. Although sensor-actuator pairs 102, 104 are often beneficial, any number of sensor(s) 102 and actuator(s) 104 may work together in a similar manner. For instance, a bathroom fan actuator 104 may also be wired to the motion sensor 102 and turn on and off the bathroom fan based on the same motion sensor 102 signal as the one that turns on and off the lights. The motion sensor 102 and one or more light / fan actuators 104 in this example are non-networked because they are isolated and only send signals to each other. Their signals and state data are not transmitted to any other locations or devices within the building 106. These types of non-networked components 108 are very common in commercial buildings 106. Often they are single-purpose hardware devices physically installed and left in operation for years on end.

Many commercial buildings 106 also include locally networked components 110. In this situation, the components include sensors 102 and actuators 104 coupled to one another over an isolated network 112 or bus only utilized within the building 106. Local networks 112 offer benefits in terms of installation because many sensor / actuator components 102, 104 may communicate with each other over a common transmission line or medium. Common wired network protocols that may be used for purpose include Ethernet and RS-485 and common wireless networks include Bluetooth, Zigbee and Wi-Fi. Programming and development of networked sensor / actuator devices 102, 104 is often easier, faster and cheaper by leveraging common network protocols. Of course, proprietary network stacks and protocols are also utilized by some sensor / actuator device 102, 104 manufacturers. In some cases, manufactures deliberately make their devices incompatible with other manufactures as a form of vendor lock-in.

A single building may have any number of isolated local area networks 112 - each network 112 or bus being logically separate from other networks 112. Network 112 isolation is beneficial from a security standpoint and also for reliability and ease of installation. Providing devices and automated functions on a new isolated network 112 in the building 106 is generally safe from interfering with existing networks 112 and associated components 102, 104 already in the building 106.

Some local area networks 112 in the building 106 may include other components besides simple sensor / actuator devices 102, 104. For example, as illustrated in FIG. 1, a building management system (BMS) 114 is coupled to one of the local area networks 112 and thereby the building management system 114 can access any of those components 102, 104 over the network 112 as needed to monitor and control building 106 functions. An example of sensors 102 that may be coupled to a BMS 114 include thermostats in office rooms and examples of associated actuators 104 that are controlled by the BMS 114 according to the sensor 102 input include heaters, coolers and fans of the building's heating, ventilation, and air condition (HVAC) system. The BMS 114 is typically a standalone computer that runs some aspects of the building 106 according to time-based schedules in combination with the sensor 102 input. For instance, the BMS 114 may automatically send signals to actuators 104 to unlock the building 106 doors at 7am on weekdays, lock the building 106 doors at 6pm on weekdays, and otherwise keep the doors locked on the weekend, for example.

It is also possible that local components 102, 104, 114 in a building are coupled to an external network 116 outside the building 106. For instance, so-called Internet of Things (IoT) devices 102, 104 are often provided within commercial buildings 106. These components 118 are labeled in FIG. 1 as external network components 118 where the external network 116 to which these components 118 are coupled is typically the Internet. IoT sensors 102 and actuators 104 are beneficial to leverage the power of cloud-based component application programming interface (API) servers 120 and provide a wealth of possibilities very attractive to modern users and building owners. For instance, taking door locks as an example, a commercial building 106 could install Internet-connected door locks that are controllable by a building manager's mobile phone such as may be beneficial for remote operation or in other situations such as a lock-down. Likewise, there are some building management systems (BMS) 114 that have the capability to couple to the Internet 116 and allow remote control of certain operations via API servers 120 available on the Internet 116.

There are many problems and deficiencies with the above-described building management system 100 according to the prior art. From an energy efficiency standpoint, wasted energy is a big problem. For one, it is all too common that independent systems in a commercial building 106 compete with each other in manners that waste energy while providing no benefit to users. For example, an air conditioner (AC) may battle with a heating system - the AC cooling air temperature and the heating system heating it back up and the cycle repeating continuously wasting energy.

Another problem is the plurality of different components 102, 104, 114 in the building do not allow for easy sharing of their sensor 102 signals and actuator 104 controls. Different sensors 102 and actuators 104 often utilize different protocols and interconnection methods; as illustrated in FIG. 1, many of them are isolated from each other despite being located within a common building 106. The independence of the various sensors 102 and actuators 104 leads to waste. For instance, if the building 106 already has a motion sensor 102 controlling lights in a room (e.g., bathroom) and management wants to further use that same motion sensor 102 signal to control another function (such as a bathroom fan), it is often easiest to simply instal a second motion sensor 102 coupled to the bathroom fan than figure out how to re-use the existing motion sensor's signal and provide the appropriate hardware for any required protocol / signal conversions to make it work. The duplication of sensors 102 and devices raises initial costs in terms of hardware and installation expense, and further raises ongoing costs from increased electricity usage from the sensors 102 and actuators 104 themselves.

Even improving on the operation of the few components 102, 104 that are already coupled to and controlled by a building management system (BMS) 114 is extremely problematic. A typical building's BMS 114 is a locked down computer only accessible by an external vendor and these vendors generally charge exorbitant fees to make any changes to the BMS 114. Besides for profit reasons, one reason the fees are so high to modify the BMS 114 is because the existing automation system of the BMS 114 is typically both ancient and working. To tinker with the BMS 114 could risk causing an outage of critical building functionality. Most building managers will error on the side of caution and avoid making any changes to the BMS 114 in order to keep the building 106 running smoothly. Saving pennies on energy costs would be desirable as over long term as these cost savings would add up, but it is not worth the expense and risk to the stable BMS 114 that has been operating trouble-free for years.

In short, the non-optimal designs and risk of detrimental effects to the building 106 and associated costs often result in energy-saving projects not even being attempted. Unfortunately, it is often safer and more cost effective to simply let the building 106 waste energy.

Patent document US2013/0346559 discloses systems, methods and apparatus to provide automated configuration of local playback devices and networks based on external input are disclosed. An example media playback device includes a control interface to receive and process, at the media playback device, network configuration information for a local network from an external source, the control interface to receive and process the network configuration from the external source without requiring user intervention.

### BRIEF SUMMARY OF THE INVENTION

The invention is defined in independent claims 1, 16, and 17, and in dependent claims 2-15. According to an exemplary embodiment of the invention there is disclosed a building automation system that integrates with existing building HVAC and lighting controls and all other sensors available in a building to provide a 'smart' lighting, heating, and cooling system. By using a comprehensive set of sensors, the building automation system provides cost-effective HVAC and lighting solution for building owners. The system includes one or more zone controllers, each of which interacts with sensors, actuators and HVAC controls on a room by room or zone by zone basis. The system further includes one or more building gateways, each of which manages a group of zone controllers through a local wireless network and further acts as a point of contact for zone controllers to reach a cloud controller. The system further includes the cloud controller which communicates with multiple gateway units over the Internet to manage and report on an overall building control system.

According to an exemplary embodiment of the invention there is disclosed a building automation system that includes on-premises equipment include one or more zone controllers and building gateways that allow physical integration with sensors, actuators and other components at the building. The on-premises equipment collects sensor data and time stamps said data during local storage. The on-premises equipment then sends the timestamped sensor data to a cloud controller via the Internet when a connection is available. Examples of the sensors for which the on-premises equipment is coupled either wired or wirelessly and for the on-premises equipment collects and forwards timestamped sensor data include temperature sensors, humidity sensors, carbon dioxide (CO2) sensors, daylight sensors, occupancy sensors, current sensors, door contact sensors, volatile organic compounds (VOC) sensor, static pressure sensors, flow sensors, sound sensors, electricity/water/gas meters sensors, smoke sensors, water leak sensors, touch sensors, and mass sensors.

Beneficially, building automation systems disclosed herein according to some embodiments integrate all the above sensors utilizing universal on-premises hardware in order to provide sensor data to a cloud controller to control actuators at the building for energy efficiency enhancements and other beneficial applications. The on-premises equipment further operates according to local instructions to control the actuators at the building according to default instructions stored locally on the on-premises equipment so that the building continues to operate according to the default instructions even if the cloud controller is unavailable. Examples of actuators that may be coupled to the on-premises equipment and thereby controlled either by the on-premises equipment or the cloud controller include linear actuators, valves, fans, motors, dampers, pumps, lights, boilers, chillers, compressors, locks, light switches, thermostats, and relays.

The on-premises equipment such as zone controllers and building gateway in some embodiments include universal input output (UIO) ports that are customizable by software in order to power and/or communicate electronically with any of the above-mentioned sensors and actuators. Additional power supply output ports are provided on the on-premises equipment such as zone controllers and gateways, and both the universal input output (UIO) ports and the other power supply output ports may be configured by software instructions to output desired voltages for different sensors / actuators and may further power cycle said sensors / actuators by being configured to temporarily provide zero volts to a selected sensor / actuator for a predetermined period of time.

Protocols and configuration data such as the local instructions stored within the on-premises equipment such as zone controllers and building gateways according to some embodiments is dynamically customizable at any time by the cloud controller. In some embodiments, the on-premises equipment automatically scans for new sensors and actuators within the building and reports found equipment to the cloud controller in order to thereafter obtain updated software, hardware abstraction layers (HAL), and local instructions allowing the on-premises equipment of the system to integrate the new sensors / actuators into the system.

According to an exemplary embodiment, disclosed are a zone controller apparatus and a building gateway apparatus that each have a variety of wired and wireless communication interfaces in order to couple with, power, receiving signals from, and/or send signals to a variety of sensor and actuator components in a building. According to an exemplary embodiment, the zone controller is utilized to couple with non-networked components in the building or to couple with other components for which additional functionality is desired to be added such as to override commands sent by a legacy building management system (BMS). According to an exemplary embodiment, the building gateway is utilized to couple with networked components in the building.

According to an exemplary embodiment of the invention there is disclosed a building automation system includes a cloud controller coupled to an external network and one or more building gateways and/or zone controllers located on-premises at a building and coupled to the cloud controller via the external network. The building gateways include a communication interface and automatically scan the communication interface in order to collect a plurality of collected data and transmit the collected data to the cloud controller via the external network. The zone controllers have a variety of ports including universal input output ports with selectable power supply options and operating modes. The cloud controller analyses the collected data to determine sensor / actuator components at the building and transmits configuration data to the building gateways and zone controllers. This configuration data is utilized to dynamically reconfigure the ports and communication interfaces thereby allowing the building gateways and zone controllers to communicate with the component types at the building.

According to an exemplary embodiment, disclosed is a cloud-based automation system including zone controller, gateway, cloud controller, and methods thereof for combining local, networked and API based data sources for the adaptive optimization of space. Examples of the adaptive optimization includes operational optimization of any commercial real-estate space, which can result in energy efficiency of said space.

These and other advantages and embodiments of the present invention will no doubt become apparent to those of ordinary skill in the art after reading the following detailed description of preferred embodiments illustrated in the various figures and drawings.

### BRIEF DESCRIPTION OF THE DRAWINGS

The invention will be described in greater detail with reference to the accompanying drawings which represent preferred embodiments thereof:
FIG. 1 shows a block diagram of a building automation system according to the prior art.
FIG. 2 illustrates a block diagram of a building automation system according to an exemplary embodiment of the invention.
FIG. 3 illustrates a block diagram of a wireless mesh network formed between one or more zone controllers and the building gateway in an exemplary embodiment.
FIG. 4 illustrates a block diagram showing division of the system into a field level, a private cloud level and a public internet level according to an exemplary embodiment.
FIG. 5 illustrates a communication protocol stack diagram for the system of FIG. 2.
FIG. 6 illustrates a block diagram of a zone controller according to an exemplary embodiment.
FIG. 7 illustrates a block diagram of the power management circuit of the zone controller according to an exemplary embodiment.
FIG. 8 illustrates a perspective front-view of an enclosure of a zone controller according to an exemplary embodiment.
FIG. 9 illustrates a perspective back-view of the enclosure of the zone controller of FIG. 8 according to an exemplary embodiment.
FIG. 10 illustrates an example of the inside cage of a mounting frame for mounting a zone controller on a wall adjacent a junction box according to an exemplary embodiment.
FIG. 11 illustrates an example of a cover installed on the mounting frame after the zone controller has been connected to the junction box.
FIG. 12 illustrates a block diagram of a building gateway according to an exemplary embodiment.
FIG. 13 illustrates a perspective front-view of an enclosure of a building gateway according to an exemplary embodiment.
FIG. 14 illustrates a perspective back-view of the enclosure of the building gateway of FIG. 13 according to an exemplary embodiment.
FIG. 15 illustrates a block diagram showing how a non-networked, point-to-point wired sensor-actuator pair in a building may be connected to a zone controller or building gateway according to an exemplary embodiment.
FIG. 16 illustrates a block diagram showing how a set of wired components on a local network bus such as RS485 in a building may be coupled to a zone controller or building gateway according to an exemplary embodiment.
FIG. 17 illustrates a block diagram showing how a set of wired components on a local area network such as an Ethernet network in a building may be coupled to a zone controller or building gateway according to an exemplary embodiment.
FIG. 18 illustrates a block diagram of internal configuration data for universal input output ports UIO of a zone controller according to an exemplary embodiment.
FIG. 19 illustrates a pinout of a universal input output (UIO) port of the zone controller and coupling of said UIO port to an occupancy sensor according to an exemplary embodiment.
FIG. 20 illustrates a resistance R value that will be measured by the UIO port when the occupancy sensor is detecting a positive occupancy.
FIG. 21 illustrates a second resistance R value that will be measured by the UIO port when the occupancy sensor is detecting a negative occupancy.
FIG. 22 illustrates utilizing an UIO port in a current sense mode to measure electrical current flowing through a wire.
FIG. 23 illustrates an example of coupling a universal input output (UIO) port of the zone controller to an optical pulse sensor utilizing transistor-transistor logic (TTL) communications according to an exemplary embodiment.
FIG. 24 illustrates an example of powering one or more external sensors or other loads via the auxiliary power output ports of the zone controller according to an exemplary embodiment.
FIG. 25 shows a block diagram of how the processors supervise the current flow through each UIO port according to an exemplary embodiment.
FIG. 26 illustrates a block diagram of the processors performing supervision of currents flowing in external devices as measured by the CT ports.
FIG. 27 shows a flowchart of a method of the building gateway automatically scanning for sensor / actuator components that are coupled to the building gateway in order to obtain required configuration data for said components from the cloud controller according to an exemplary embodiment.
FIG. 28 shows a flowchart of a method of the zone controller automatically scanning for sensor / actuator components that are coupled to the zone controller in order to obtain required configuration data for said components from the cloud controller according to an exemplary embodiment.
FIG. 29 shows a flowchart of a method of processing performed by the zone controller, building gateway and cloud controller of the system in response to an event trigger occurring on a zone controller according to an exemplary embodiment.
FIG. 30 shows a flowchart of a method of processing performed by the zone controller, building gateway and cloud controller of the system in response to an event trigger occurring on a building gateway according to an exemplary embodiment.
FIG. 31 shows a flowchart of a method of processing performed by the zone controller, building gateway and cloud controller of the system in response to an event trigger occurring on the cloud controller according to an exemplary embodiment.
FIG. 32 shows a flowchart of a method of overriding a legacy building management system (BMS) or other actuator in the building according to an exemplary embodiment.
FIG. 33 illustrates a component point selection user interface screen generated and provided by the webBMS front end web server according to an exemplary embodiment.
FIG. 34 illustrates a condition set-up screen for configuring rules for carrying out desired actions based on any points available with a building according to an exemplary embodiment.
FIG. 35 illustrates a point priority diagram showing how different inputs and outputs such as sensor inputs and actuator outputs are ranked in a priority order according to an exemplary embodiment.
FIG. 36 illustrates a zone controller communicating directly with the cloud controller via Narrow Band IoT (NB-IoT) or with Cat-M1 direct link to the Private Cloud/Central Controller according to an exemplary embodiment.

### DETAILED DESCRIPTION

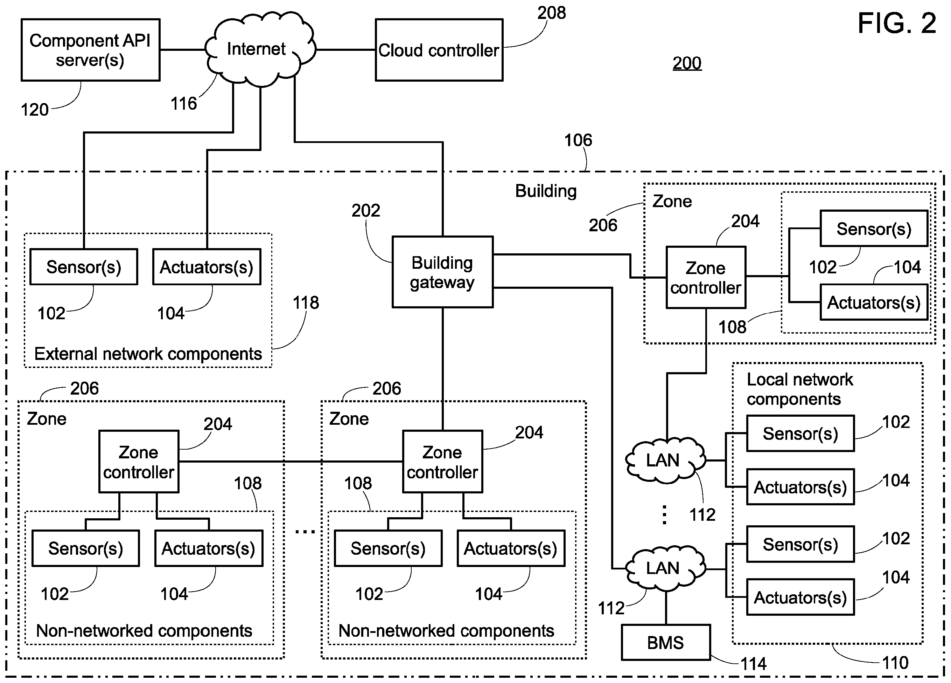

FIG. 2 illustrates a block diagram of a building automation system 200 according to an exemplary embodiment of the invention. Like the prior art system 100 of FIG. 1, the system 200 of FIG. 2 includes a legacy building management system (BMS) 114, a plurality of non-networked components 108, a plurality of local network components 110 each coupled to a local area network (LAN) 112, and a plurality of external network components 118 that are coupled to one or more third-party application programming interface (API) servers 120 on the Internet 116. As before, the components 108, 110, 118 include sensors 102 and actuators 104. As will be apparent, in this embodiment, all of the elements of the prior art system 100 of FIG. 1 are included in the system 200 of FIG. 2; however, unlike the diagram of FIG. 1, the system 200 of this embodiment includes further elements.

Firstly, at least one building gateway 202 is provided within the building 106 and is coupled to the Internet 116. Next a plurality of zone controllers 204 are optionally distributed throughout different zones 206 within the building 106 and are coupled to various components 108 and local area networks (LANS) 112 within said zones 206. Lastly, a cloud controller 208 is provided at a site external to the building 106 and is coupled to the Internet 116. The cloud controller 208 communicates with the building gateway 202, and the building gateway 202 in turn communicates with the various zone controllers 204 within the building 206. In preferred embodiments, although FIG. 2 illustrates a single building 106, the cloud controller 208 supports automation of components 108, 110, 114, 118 at a plurality of different buildings 106, and at least one respective building gateway 202 located at each different building 106 communicates with the central cloud controller 208 via the Internet 116.

To briefly introduce the operation of the system 200 of FIG. 2, each zone controller 204 is responsible for communications with one or more sensors 102 and actuators 104 within the building 106. The zone controllers 204 include a plurality of dynamically reconfigurable communications interfaces, both wired and wireless, as described further below. This capability allows attachment of each zone controller 204 to desired sensor and actuator components 102, 104 regardless of the different protocols utilized by the various components 102, 104. In this embodiment, the zone controllers 204 act as universal interfacing elements to receive information from the sensors 102 coupled thereto and to send information to the actuators 104 coupled thereto. In normal operation, the information received from the sensors 102 is passed by the zone controllers 204 to the building gateway 202. Thereafter, the building gateway 202 sends instructions and other configuration data to the zone controllers 204 so the zone controllers 204 can in turn send commands to actuators 104 coupled thereto.

The building gateway 202 is in communication with all of the zone controllers 204 in the building in order to receive sensors 102 data and send actuator 104 data via the various zone controllers 204. The communication between the building gateway 202 and a particular zone controller 204 may be direct or indirect. In this embodiment, a first zone controller 204 may be coupled to the building gateway 202 via any number of second, intermediate zone controllers 204. The building gateway 202 further communicates with the cloud controller 208 in order to pass sensor 102 data received from the various zone controllers 204 to the cloud controller 208 and to send commands to the zone controllers 204 based on instructions received from the cloud controller 208.

The building gateway 202 can also be coupled directly to sensor and actuator components 102, 104 in the building 106 such as by coupling the building gateway to a local area network (LAN) 112 in the building 106. However, because there may be many components 102, 104 distributed throughout the building 106, the zone controllers 204 beneficially extend the reach of the building gateway 202 and allow the building gateway 202 to received sensor signals and transmit actuator commands with any number of sensors and actuators 102, 104.

Normal operations of the system 200 involve sensor 102 and actuator 104 signals "taking the long way around", which means that sensor / actuator 102, 104 signals and associated data traverse the various connections between zone controllers 204 and building gateway 202 up to the cloud controller 208 and vice versa. For instance, a temperature sensor 102 may be polled by a first zone controller 204 to obtain a temperature value representing air temperature in a certain room of the building 106. The zone controller 204 then passes the temperature value to the building gateway 202 (possibly through a plurality of intermediate zone controllers 204). The building gateway 202 sends the temperature value to the cloud controller 208, which analyses the value in order to make decisions about actions that need to be carried out at the building 106. If the cloud controller 208 determines that the action should be trigged as a result of the temperature value, the cloud controller 208 will send instructions to the building gateway 202, which in turn sends instructions to one or more zone controllers 204 in the building to command appropriate actuators 204 to carry out the action.

As will be described in further detail below, the system 200 in this embodiment is installed to compliment, not replace, the existing building management system (BMS) 114. The various building gateway 202 and zone controllers 204 are programmed with local instructions such that they will operate independently from the cloud controller 208 in the event that the Internet 116 connection goes down and/or other failures of the cloud controller 208. In this embodiment, the local instructions of the building gateway 202 and zone controllers 204 cause the various components 104 of the building to operate exactly as they did prior to the installation of the system 200. Beneficially, in a situation that the Internet 116 goes down or even if building management decides to simply disable the system 200, the building 106 will revert to legacy operation without requiring any further involvement of the cloud controller 208.

In addition to receiving instructions and commands from the cloud controller 208, the zone controllers 204 as well as building gateways 202 have their own logic stored locally in their storage devices submitted from the cloud controller 208. As such, the zone controller 204 can make decisions and issue actions based on such local logic just like the building gateway 202 can do the same. Further, the cloud controller 208 can issue commands based on data received from a zone controller 204 and/or building gateway 202. Due to the logic a zone controller 204 has stored, the zone controller 204 can also provide control to the level of predefined rules in stored configuration that contains that logic.

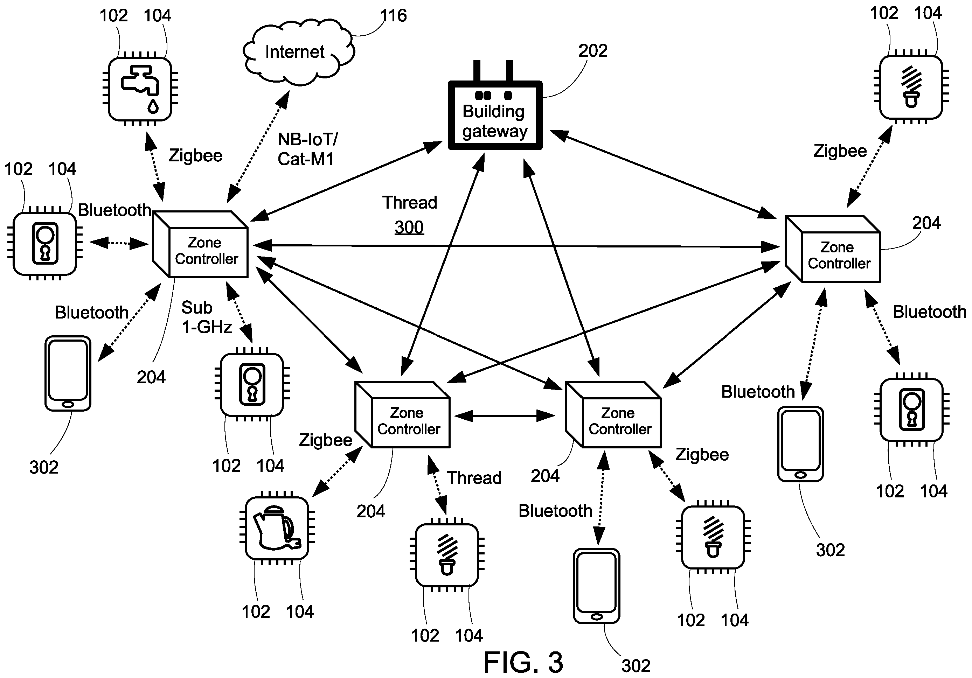

FIG. 3 illustrates a block diagram of a wireless mesh network 300 formed between one or more zone controllers 204 and the building gateway 202 in an exemplary embodiment. As illustrated, each zone controller 204 may be coupled to any number of components such as sensors 102 and actuators 104. The zone controllers 204 are coupled to each other and the gateway 202 in this embodiment utilizing a Thread-based mesh network 300. Thread is an IP-based low-power mesh networking technology available and well-known for IoT products. Further description of Thread is thus omitted herein for brevity.

The sensor / actuator components 102, 104 are coupled to each zone controller 204 in this embodiment utilizing any desired connection mechanism as supported by both the component 102, 104 in question and the zone controller 204. Each zone controller 204 in this embodiment includes both wired and wireless interfaces and is dynamically reprogrammable by the cloud controller 208 to support a wide variety of protocols. For example, taking wireless connections, each zone controller 204 includes one or more wireless interfaces for communicating with sensor and actuator components 102, 104 utilizing Thread, Zigbee, Bluetooth, Sub 1-Ghz and/or Wi-Fi. Different components 102, 104 coupled to a same zone controller 204 may utilize different protocols or may use one or more common protocols.

Direct data transfer is possible between the zone controller 204 and the cloud controller 208 with NB-IOT / Ethernet and communication with sub 1-Ghz modules. The NB-IoT/Cat-M1 connectivity interface on zone controller 204 in this embodiment provides direct link from zone controller 204 to cloud controller 208 aka central controller. Ethernet connectivity interface on zone controller 204 provides IP link between zone controller 204 and building gateway 202 when the Thread protocol (radio link) is not or can not be used for various reasons. Sub-1GHz radio connectivity interface (865/915 MHz) on zone controller 204 provides a radio link between the zone controller 204 and various sensors 102 / actuators 104 over sub-1GHz radio link.

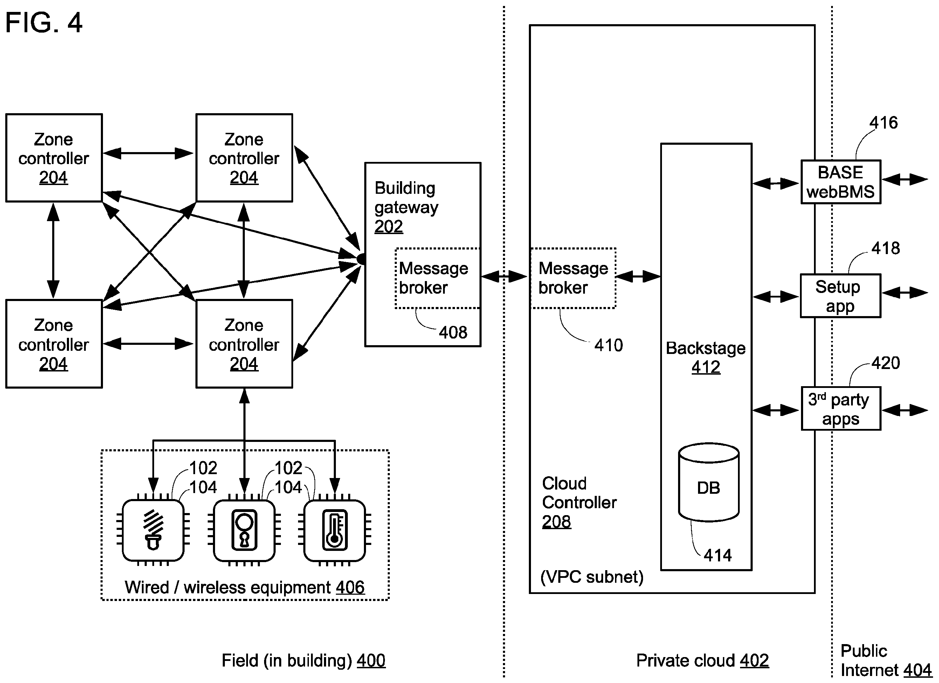

FIG. 4 illustrates a block diagram showing division of the system 200 into a field level 400, a private cloud level 402 and a public Internet level 404 according to an exemplary embodiment. As illustrated, the building gateway 202, zone controllers 204, and wired / wireless equipment 406 coupled thereto are located within the building 106. These "in field" elements 400 of the system 200 utilize the building gateway 202 as a central point of contact within the building 106. The building gateway 202 is a computing device running software of which a part of said software is a message broker 408. The message broker 408 aggregates messages for sending to the cloud controller 208 and likewise receives messages from the cloud controller 208. The message broker 408 is similar to a mailbox system for storing messages for pickup and ensuring that messages sent on one side (i.e., field 400) are securely and reliably delivered to the other side (i.e., private cloud 402).

The cloud controller 208 is also a computing device, typically a dynamically scalable virtual server in the cloud 116 running on one or more bare-metal servers located at one or more data centers. The software running on the cloud controller 208 includes a message broker 410 for communicating with the message broker 408 of the building gateway 202. As previously mentioned, in preferred embodiments, the cloud controller 208 is coupled to many different building gateways 202 and the message broker 410 ensures messages intended for a particular building 106 are sent to the correct building gateway 202. In this embodiment, the cloud controller 208 and the building gateway 202 communicate with each other over a virtual private network and the cloud controller resides on a virtual private cloud subnet.

The backstage 412 part of the cloud controller 208 again represents a section or module of software that controls elements and functionality of the cloud controller 208 that occur "behind the scenes". Further details of specific functionality is described in the following but a short list here includes sensor 102 data ingestion and analysis, scheduling of events, automatic event triggering, determining actions and sending commands to control actuators 104 in buildings 106, and provisioning and simulating of buildings 106.

The backstage 412 includes one or more databases 414 that stored data such as configuration data, sensor history data, building information, associations between sensors 102 and actuators 104, and user data. In this embodiment, a relational database is utilized to store the database 414; however, the term "database" 414 as utilized in this description is meant to refer to any stored collection of organized data.

Coupled to the backstage 412 in FIG. 4 are a plurality of front-end modules of software including a base webBMS 416, a setup app 418, and a third-party apps 420. Each of these front-end modules 416, 418, 420 represent ways that external devices on the public Internet 116 can interact with the cloud controller 208. For example, the base webBMS 416 is a webserver that provides building managers with a user interface to view and control their building 106. The webBMS 416 is the main interface for human building managers to interact with the cloud controller 208 utilizing a standard web browser running on a mobile device or other computer operated by the building manager.

The setup app 418 represents software running on the cloud controller 208 to receive and communicate information to installer devices when installing and/or troubleshooting the system 200. For instance, a predetermined software application may be installed on a mobile phone 302 operated by an installer. Such a mobile phone 302 is illustrated in FIG. 3 for example and may be carried by the installer and utilized to access configuration information on the various zone controllers 204 and building gateway devices 202 installed on-premises in the customer building 106. Likewise, technical personal of the building 106 may also install a similar app on their mobile device 302 for provisioning. In addition to interfacing with the local, in field 400 zone controllers 204 and building gateway 202, the software application also communicates with the cloud controller 208 in this embodiment using a set of APIs that are dedicated to the mobile application and provided by the setup app module 418 of the cloud controller 208.

Another front-end software module illustrated in FIG. 4 is the third-party applications interface 420. The third-party applications front end module 420 provides another set of APIs for external parties to interact with the cloud controller 208. For instance, a third-party sensor 102 vendor may wish to send sensor 102 data directly to the cloud controller 208 and the third-party apps interface 420 provides them this capability.

Direct data transfer is also possible with NB-IOT and Ethernet. One way zone controllers 204 communicate with the cloud controller 208 (Private Cloud) is via a building gateway 202. Zone controllers 204 are part of a MESH network 300 through which they can deliver data to the building gateway 202 using hops from one zone controller 204 to another before the data reaches the building gateway 202.

Different network architectures may be employed in different embodiments. For instance, in a building 106 without any existing BMS 114 or associated infrastructure, a building management system 200 disclosed herein is installed according to an exemplary embodiment by adding a one or more zone controllers 204 to the building. Each zone controller 204 is coupled to one or more sensor / actuator components 102, 104, and these couplings between components 102, 104 to zone controller 204 may be hard wired or wireless. Any combination of different wired / wireless components 102, 104 may be coupled to a single zone controller 204. The zone controllers 204 in this embodiment communicate with each other via a long-range radio frequency (RF) mesh network 300. One or more building gateways 202 are installed within the building 106 and provide(s) local instructions for the zone controllers 204 and further provide(s) a point of contact between the zone controllers 204 and a cloud controller 208 on the Internet 116.

In another network architecture example, a hybrid integration may be utilized in a building 106 that already includes a building management system (BMS) 116. In an embodiment of the hybrid integration, the system 200 includes one or more zone controllers 204 to which sensors / actuators 102, 104 are coupled similar to the above embodiment, but in this embodiment, the zone controllers 204 are further coupled to one or more buses or networks 112 to which the BMS 114 is coupled. The zone controllers 204 can thereby monitor communications between the BMS 114 and some sensor actuator components 102, 104 as transmitted on the buses / networks 112. Further additional sensor / actuator components 102, 104 not in communication with the BMS 114 can also be integrated into the system 200 by coupling to a zone controller 204 utilizing either a hardwired connection or wireless connection. One or more building gateways 202 are installed within the building 106 and provide local instructions for the zone controllers 204 and further provide a point of contact between the zone controllers 204 and a cloud controller 208 on the Internet 116. The building gateway(s) 202 are added to the bus / networks 112 to which the BMS 114 is coupled and also communicate via the mesh network 300 with the zone controllers 204.

In yet another network architecture example, a BMS integration may be utilized in a building 106 that already includes a building management system (BMS) 114. In an embodiment of the BMS integration, the system 200 does not include any zone controllers 204 at all. Instead, one or more building gateways 202 are installed within the building 106 and provides a point of contact between a cloud controller 208 on the Internet 116. The building gateway(s) 202 are added to the bus / networks 112 to which the BMS 114 is coupled.

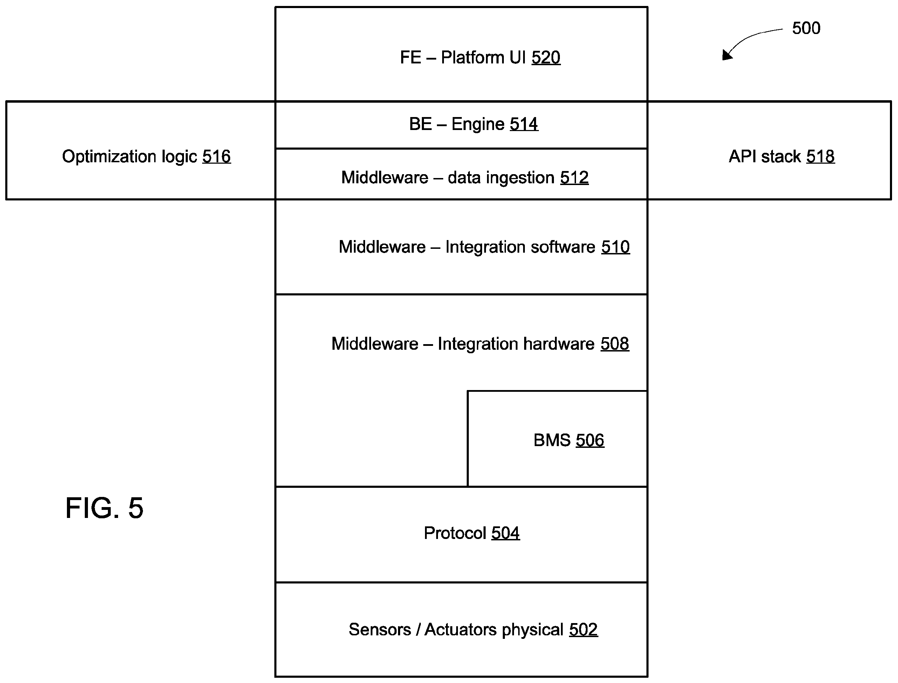

FIG. 5 illustrates a communication protocol stack 500 diagram for the system 200 of FIG. 2. The lowest level of the stack is the sensors / actuators physical level 502. Each sensor 102 and actuator 104 includes certain communication interface(s) and that hardware limits physical characteristics of the communication said components 102, 104. For instance, the hardware of a particular sensor 102 may utilize certain voltage for transmitting sensor information or may utilize a current or resistance level in a similar manner. Each sensor / actuator component 102, 104 may have different physical layer requirements.

The next layer up is the protocol layer 504. This layer 504 represents the protocol that is running over the sensor / actuator physical layer 502. For instance, some sensors 102 send information utilizing time division multiplexed (TDM) protocols, others utilize pulse width modulated (PWM), others utilize RS-485 or RS-232, others utilize Ethernet or TCP/IP, etc. Some protocols may be proprietary and some may be open standards.

The next layer up is the BMS layer 506. Many buildings 106 have a legacy building management system (BMS) 114 and this layer shows where the BMS 114 sits in the stack 500. The BMS 114 itself utilizes the various protocols 504 to communicate with sensors 102 and actuators 104. In the prior art system 100 of FIG. 1, the BMS layer 506 may be the top layer of the stack 500; however, in the embodiment of FIG. 5 there are still several stack 500 layers that are above the BMS layer 506.

The middleware - integration hardware layer 508 sits atop the BMS layer 506 and also above the protocol layer 504. The middleware integration hardware layer 508 represents the hardware that is provided by the zone controllers and building gateway and cloud controller devices 204, 202, 208 in the system 200 of FIG. 2. Just like how the sensors 102 and actuators 104 have physical interfaces, the integration hardware 202, 204, 208 also has physical hardware. As will be described further in the following, the zone controllers 204 have a plurality of hardware interfaces that are dynamically configurable to support a large variety of physical network and communications protocols.

The reason the middleware integration hardware layer 508 has an L-shape and is adjacent both the BMS layer 506 and protocol layer 504 in this embodiment is because many of the sensors 102 and actuators 104 in the building are not actually coupled to the BMS 114. One example where this happens in many buildings 106 is the bathroom motion sensor and bathroom lights example provided earlier. These sensors / actuators 102, 104 are independent of the BMS 114 and thus a zone controller 204 would intercept this sensor 102 signal and actuator 104 control signal to allow passing said signals to the building gateway 202 and to allow associated automation and energy efficiency improvements by the cloud controller 208. Another reason for the L-shape is that the BMS 114 is not a required component of the system. Some buildings 106 have them and others do not. The systems 200 disclosed here work regardless of whether or not the building 106 already includes a BMS 114.

The next level in the stack in the middleware - integration software 510 which is the various software running on the zone controllers 204, building gateway 202 and cloud controller 208. Functionality of this software involves polling sensors 102 and / actuator 104 components, sending messages to/from the cloud controller 208, as well as carrying out local instructions in the event that communications with the cloud controller 208 are interrupted.

The next level in the stack is the middleware - data ingestion layer 512. This layer 512 is the software running on the cloud controller 208 that receives the various messages from the building gateway 202 and stores said data into the database 414 for analysis by the cloud controller 208.

Above the data ingestion layer is the backend (BE) engine layer 514. This layer 514 corresponds to the backstage 412 of FIG. 4 and is the software running on the cloud controller 208. It performs a variety of functions including detecting and triggering events according to data in the database 414 and sending associated instructions to appropriate building gateways 202 in order to change actuator 104 settings.

Beside and spanning across the BE engine and middleware data ingestion layers 514, 512 is an optimization logic layer 516, which in this embodiment performs analysis on the building data stored in the database 414 and determines actions to perform in order to optimize building 106 energy efficiency. Whereas the backend engine layer 514 actually generates and sends messages to the various building gateways 202 when certain events occur or are otherwise triggered, the optimization logic 516 is involved in determining the situations and events that should trigger actions. The optimization logic 516 may be separate software that analyses the building data stored in the database 414 in order to test for and determine what changes can be made to the building 106 operation by the cloud controller 208 in order to optimize energy efficiency.

In some embodiments, the cloud controller 208 utilizing the optimization logic layer 516 learns how a particular building 106 operates by analyzing time stamped data collected by the zone controller(s) 204 and / building gateway(s) 202 at the building 106. The optimization logic 516 of the cloud controller 208 thereafter makes adjustments based on the learned building operation.

To give a concrete example, the optimization logic 516 of the cloud controller 208 may learn from the timestamped sensor 102 and actuator 104 data collected at a building 106 that it takes about thirty minutes for a floor of the building 106 (as measured by one or more temperature sensors 102) to experience a temperature change after the boiler has been activated by a boiler actuator 104 in the event that outside temperature is at least 23 degrees. Given this information deduced by the cloud controller 208 based on the historic data, in the event that a user creates a schedule to have the temperature of the floor increase to a desired set point starting at 9am in the morning, the cloud controller 208 in this embodiment will automatically activate the boiler actuator at 8:30am assuming the outside building temperature meets the 23 degrees threshold. 8:30am in this case is only thirty minutes prior to when the set point temperature needs to be met and the cloud controller 208 is enabled to make this optimization based on outside temperature. Activating the boiler only thirty minutes in advance is more energy efficient than activating the boiler everyday at 6am regardless of outside temperature as may be done by the default BMS 114 schedule. Other sensor 102 data can also be learned and/or utilized by the cloud controller 208 to further optimize this example such as occupancy data which can be determined indirectly from a CO2 sensor showing a raising in detected CO2, for example.

On the other side of the diagram is an API stack 518, which also spans across the backend engine and middleware data ingestion layers 514, 512. The API stack 518 corresponds to the setup app 418 and third-party apps 420 in FIG. 4. The API stack 518 allows external computing agents such as custom software applications and third-party software systems to access the cloud controller 208.

At the top of the stack 500 is the front-end platform user interface 520, which corresponds to the base webBMS software module 416 in FIG. 4 - this layer 520 of the stack 500 is involved with presenting a graphic user interface to human users of the cloud controller 208.

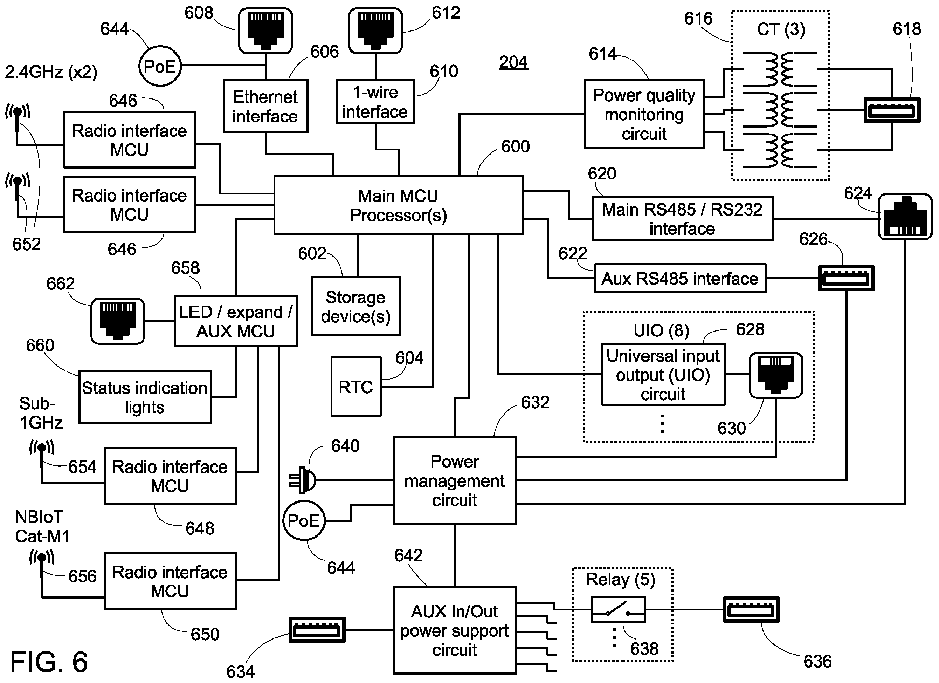

FIG. 6 illustrates a block diagram of a zone controller 204 according to an exemplary embodiment. Each zone controller 204 is this embodiment includes one or more processors 600. The one or more processors 600 may be included in a microcontroller unit (MCU) or central processing unit (CPU) of a computing device acting as the zone controller 204. The heart of the zone controller 204 in some embodiments is a microcontroller, which includes one or more 32-bit processors 600. The one or more processors 600 are coupled to one or more storage devices 602 such as integrated FLASH and RAM memory. The one or more processors 600 are also coupled to a set of peripherals such as a real-time clock 604, analog-to-digital (A/D) converters, and various communications ports such as UART, SPI, and I2C ports. Core software code is executed by the one or more processors 600 of the microcontroller.

In the following description the plural form of the word "processors" 600 will be utilized as it is common an embedded computing device to have multiple processors 600 in a single MCU / CPU (sometimes also referred to as cores) and/or to have multiple MCUs or CPUs each with at least one processor 600; however, it is to be understood that a single processor 600 may also be configured to perform the described functionality in other implementations.

The processors 600 are coupled to an Ethernet interface 606 which is physical layer transceiver and controller providing the physical signal requirements and protocol firmware for communicating over wired Ethernet via an RJ45 Ethernet port 608. In some embodiments, the Ethernet interface 606 is an IEEE 802.3^{™} compatible Ethernet controller, fully compatible with 10/100/1000Base-T Networks.

The processors 600 are further coupled to a 1-Wire^{®} bridge interface 610 for 1-Wire slave devices. The 1-wire bridge interface 610 is a transceiver and controller providing the physical signal requirements and protocol firmware for communicating utilizing the 1-Wire communication bus system. The 1-wire communication port 612 is a two-position terminal block header including a signal input/output (IO) line and a ground line. The 1-wire protocol port 612 allows zone controller 204 to communicate with sensors 102 and devices with 1-wire protocol medium, making the zone controller 204 the master in this wired network.

The processors 600 are further to a power quality monitoring circuit 614 with is coupled to three current sense transformers 616 for monitoring power quality by measuring currents in external wires. The other sides of the current transformers are coupled to the outside world via a six-position terminal block header 618, where each of the three CTs 614 is coupled across two adjacent ports on the terminal block 618.

In this embodiment, the current sense CT devices 616 are air-core transformers that output a voltage proportional to the amount of current flowing through the wires that the device 618 is wrapped around. As the CT devices 618 are basically one side of a transformer, the power quality monitoring circuit 614 does not need to provide a bias voltage to these devices 616. Each of the current transformer (CT) 616 inputs are connected across a resistive load to generate a voltage that will be fed into a high frequency ADC then the values are read by processors 600. A protective device is placed across the resistor to guard against transient voltages that may be generated by the current transformer (CT) 616. The power quality monitoring circuitry 614 is this embodiment is designed to work with a 75A max split core current transformer CT 616 or similar.

The processors 600 are further coupled to a main RS-485 / RS-232 interface 620 and an auxiliary RS-485 interface 622. The RS-485 / RS-232 and RS-485 aux interfaces 620, 622 are one or more universal asynchronous receiver/transmitters (UARTs) supporting both RS-485 and RS-232. In some embodiments, the RS-485 ports 624, 626 are half-duplex designed for interfacing with the CO2/RH/Temperature 'thermostat' or other Modbus^{™} or BACnet MS/TP slave devices. The main interface connector port 624 in this embodiment is an RJ12, p6c connector. The second, auxiliary port 626 is accessible through a different four position terminal block header different than the main interface connector 624.

The processors 600 are further coupled to a plurality of eight universal input / output (UIO) circuits 628 and associated ports 630. The universal input / output (UIO) circuits 628 are capable of driving and reading from a variety of industry-standard devices via each UIO port 630. Each input and output circuit 628 is independently controllable by the processors 600 according to control signals provided by the processors 600. Each UIO circuit 628 and associated port 630 has functionality for analog output, analog input, digital input, and resistance temperature detector (RTD) measurements as follows:
- Digital input (0 - 24V)
- Digital output (0 - 10V)
- Analog input (0 - 10V, 0 - 25 mA)
- Analog output (0 - 11V, 0 - 25mA)
- Resistance measurements

Each UIO circuit 628 in conjunction with a power management circuit 632 (described below) also optionally supplies voltage for external devices connected to the respective UIO port 630. This voltage is controllable by software, the user can choose between 0VDC, 5VDC, 12VDC, 24VDC, or voltage available on the optional external power supply.

As shown in FIG. 6, a first terminal block 634 may be utilized for input voltages and a second terminal block 636 for output voltages. A plurality of relays 638 allow the processors 600 to forward output power voltages to the output power terminal port 636.

The processors 600 are further coupled to a power management circuit 632, which receives power from a main power jack 640 and/or from an auxiliary input/output power support circuit 642 and/or from power over Ethernet (PoE) 646. Control signals from the processor 600 cause the power management circuit 632 to select the voltage as required for a particular device coupled to each UIO port 630. Power can also be selectively supplied from the power management circuit 632 to each of the main and auxiliary RS485 interfaces 620, 622 under control of the software running on the processors 600. In some embodiments, a similar PoE supply circuit is added thereby allowing the processors 600 to selectively supply to components on the Ethernet network by the power management circuit 632 outputting PoE 644 in addition to the option of powering the zone controller 204 from PoE 644.

The processors 600 are further coupled to one or more radio interfaces 646, 648, 650. Each radio interface 646, 648, 650 may be formed by a separate microcontroller enabling Wi-Fi, Thread, Zigbee and Bluetooth. To a large extent, the radio interfaces 646, 648, 650 appear to the processors 600 of the zone controller 204 to be a direct communication link with the building gateway unit 202, other zone controllers 204, other 3rd party devices and to smart phones 302 for local commissioning. In this embodiment, there are two 2.4GHz radio interface modules 646 each with a separate external antenna 652, so two antennas 652 for 2.4GHz. Further, there is a sub 1-Ghz module 648 and it has its own external antenna 654, and further an NBIoT interface 650 with its own external antenna 656. In this embodiment, the sub-1GHz and NBIoT radio interfaces 648, 650 are handled by an auxiliary MCU 658 that also handles the indicator lights 660 and expansion capabilities, see below.

As well as managing wireless communications, the radio interface microcontroller 646, 648, 650 also temporarily stores any firmware upgrade images that are downloaded from the cloud controller 208 and through a building gateway 202 to the zone controller 204. The processors 600 will validate any downloaded image before installing new image firmware in the storage device 602 for the processors 600 to thereafter execute.

In some embodiments, the radio interface 646, 648, 650 is actually two separate MCUs: one acting as a transceiver for each antenna 652, 654, 656.

The processors 600 are further coupled to the LED / expansion / auxiliary (AUX) microcontroller unit (MCU) 658. A plurality of light emitting diodes (LEDs) 660 and an expansion port 662 is coupled to this sub microcontroller 658. A light guide connected to zone controller enclosure is controlled by processors 600 to offer information about the general status of the zone controller 204. The light guide provides light from one or more red-green-blue (RGB) LEDs 660 that can be also controlled from the smart phone 302 app.

Adding board extensions to the zone controller 204 is possible via an mPCIe connector 662, which is connected to the expansion microcontroller 658. The processors 600 of the main CPU establish communication with the expansion microcontroller 658 and add the new device connected to the mPCIe connector 662 as a new extension to the zone controller 204. Available market mPCIe modules can thereby be used as extensions for the zone controller 204 such as adding other types of networking technologies including long term evolution (LTE) modules and LoRa modules compliant with the LoRa Alliance. Although expansions are supported by the AUX MCU 658 (expansion microcontroller 658) in this embodiment via an mPCIe connector 662, expansion in other embodiments are not limited to this connector 662 type only. Other examples that may be employed include other standard (e.g., M.2) and proprietary extension interfaces.

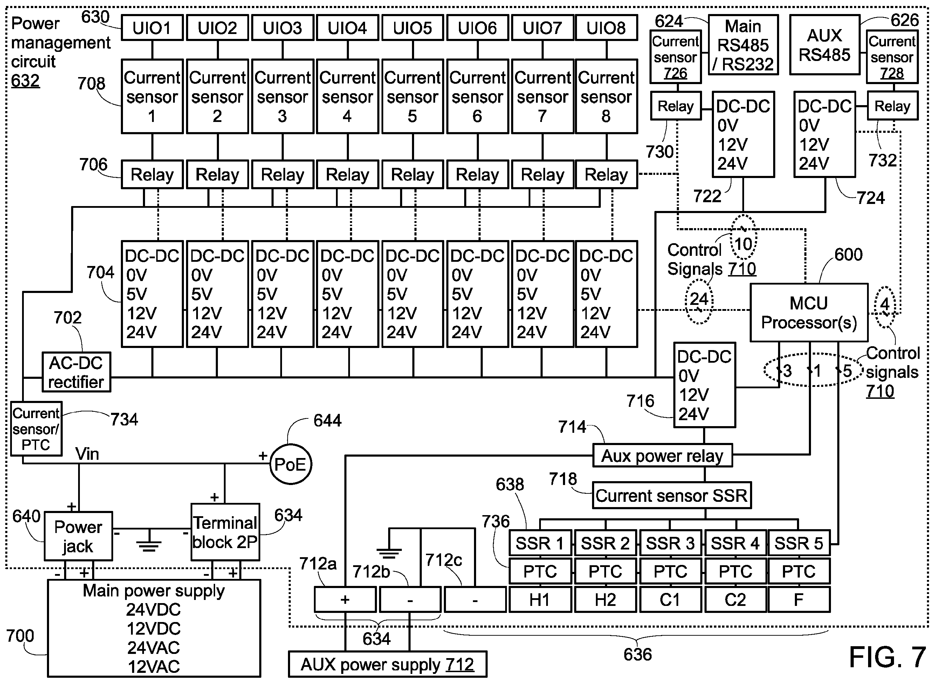

FIG. 7 illustrates a block diagram of the power management circuit 632 of the zone controller 204 according to an exemplary embodiment. The zone controller 204 is powered by an external 220 or 110 VAC to 24 VDC/ 12 VDC/ 24 VAC/ 12 VAC power supply 700. Main power enters the zone controller 204 through either the main power jack 640 or 2-pin input terminal block 641. Further, in this embodiment, the power supply source can also be Power over Ethernet (PoE) 644 (any voltage 12VDC-24VDC) in addition to the 24 VDC/ 12 VDC/ 24 VAC/ 12 VAC power supply via the auxiliary power input terminal block 634.

Assuming the main power supply 700 is being utilized, the voltage from the power supply 700 is rectified at an AC-DC rectifier 702 (if input power is AC) and is then regulated for internal use in the zone controller 204 and for powering external devices.

Each of the UIO circuits 628 includes a DC-DC regulator 704, a relay 706 and a current sensor 708 coupled to a UIO port 630. The DC-DC regulator 704 receives an input voltage being one of 24 VDC, 12 VDC, 24 VAC, 12 VAC depending on the power supply used. Each of the UIO DC-DC regulators 704 outputs an output voltage selected according to a control signal 710 from the processors 600 to be one of the following:
- 0 VDC (e.g., prior to provisioning, and utilized to power cycle a sensor 102 / actuator 104 components coupled to the UIO port 630)
- regulated 5 VDC
- regulated 12 VDC
- regulated 24 VDC

The relay 706 of each UIO circuit 628 selectively forwards either the output of the DC-DC regular 704 or a global Vin signal (i.e., forwarded Vin supply line) to a UIO port 630. Alternating current (AC) Vin and AC outputs from the power supply 700 to the associated UIO port 630 are available when an AC power supply 700 is present. Again, the processors 600 operate each of the UIO circuit relays 706 by generating control signals 710 according to software running on the processors 600.

Each UIO circuit 628 further includes a current sensor 708 used to measure current flowing through the UIO port 630. Feedback signals from the current sensors 708 are routed through analog digital converters (ADCs) back to the processors 600 to allow the processors 600 to monitor current on each UIO port 630 when desired for certain external sensor components 102 coupled thereto. The current sensors 708 further act as safeties; in the event the output current for a particular UIO port 630 exceeds a predetermined threshold, power will be cut.

In some embodiments, each DC-DC regulator 704 simultaneously generates all the various output voltages 0V, 5V, 12V, 24V, and the relay 706 selects which of the output voltages to forward to the current sensor 708 and UIO port 630 according to control signals 710 from the processors 600.

The universal input output (UIO) ports 630 (eight ports 630 available in this embodiment) can be remotely configured by the cloud controller 208 to operate in any of the following modes:
- Voltage input
- Current input
- Voltage output
- Current output
- Digital input
- RTD measurement

For illustration purposes, the following are some examples of different applications of a UIO port 630:
1. Lighting Subsystem control: designed to control lighting based on the presence of people in a monitored area. The Lighting Subsystem will have a dry contact output which will close when people are detected in the monitoring area(s). This contact will be an input to the zone controller 204 via a UIO port 630.
2. 4-20 mA Control Outputs: these provide industry standard 4 to 20 mA current outputs to allow the zone controller 204 to control various HVAC devices.
3. 0-10V Controller Outputs: these provide standard variable analog outputs to allow the zone controller 204 to control various HVAC devices.
4. Sensor Inputs: these inputs work with analog signals in the range of 0-12V or 0-20mA when in current mode.

Beneficially, each universal input output (UIO) port 630 can be controlled by the processors 600 to provide voltage supply for external devices connected to the port 630 (sensors 102 or actuators 104). This voltage is selectable by the processor 600 and multiple options are available such as: 0VDC, 5VDC, 12VDC, 24VDC, or forwarded Vin input voltage.

Typically, during provisioning, the component 102, 104 attached to a particular UIO port 630 will determine the desired voltage and the processors 600 will send control signals to the DC-DC regulator 704 and/or relay 706 in order to select the desired voltage. Once a UIO port 630 is provisioned in this manner, the processors 600 will thereafter only select the desired voltage for the component 102, 104 or 0VDC such as when the processors 600 wish to shut off (power cycle) the external component 102, 104 or in the event of a fault such as an overcurrent situation detected by the current sensor 708.

In some embodiments, the processors 600 ensure that each UIO port 630 is disabled having a 0 VCD output until the UIO port 630 has a verified and validated configuration received from the cloud controller 208. The configuration specifies to the processors 600 the desired output voltage for the UIO port 630. Only after the provisioning process is complete and the UIO configuration is confirmed does the processor 600 activate the power circuit 632 for providing an output voltage on the power pins of the UIO port 630. This helps protect external equipment getting invalid voltages and also prevents shorts circuits which may damage the UIO port 630 itself. However, in preferred embodiments, even after the port 630 is configured and power is turned on, the processors 600 continue to monitor for overcurrent situations utilizing the current sensor 708 and will dynamically disable the power output to the UIO port 630 in the event an over current situation is detected on that port 630.

Concerning the auxiliary power supply 712, the first two pins 712a,b of the AUX In/Out Power supply port 634 are used for inputting voltage supply to the solid state relays (SSRs) and the other six pins 712c, H1, H2, C1, C2, F are for selectively outputting said voltage supply to power external devices connected to the port 636 (e.g., sensors 102 or actuators 104 or HVAC system). This output voltage is selectable by the processors 600 and multiple options are available: 12VDC, 24VDC, or voltage from the AUX In/Out Power supply 712 (terminal block connector 636).

An auxiliary power relay 714 operated under control of the processors 600 allows the processors 600 to forward either of the aux power input or a regulated DC voltage for usage by the auxiliary output port pins H1, H2, C1, C2, F. The regulated DC voltage is generated by an auxiliary DC-DC regulator 716 controlled by the processors 600 to output any of 0V, 12V, or 24V. A current sensor 718 again allows the processors 600 to measure current flow and further acts a safety - in the event the output current exceeds a predetermined threshold, power will be cut. Solid state relays (SSR) 638 on each auxiliary port H1, H2, C1, C2, F allow the processors 600 to selectively forward and not forward the auxiliary power to a particular port H1, H2, C1, C2, F.

Both RS485/RS232 ports 624, 626 can power external devices connected to the ports 624, 626 (sensors 102 or actuators 104). For this purpose, a first DC-DC regulator 722 is coupled to the main RS-485 / RS-232 port 624 and a second DC-DC regulator 724 is coupled to the auxiliary RS-485 port 626. The voltage outputted by each of these regulators 722, 724 is selectable by the processors 600 and multiple options are available including O0VDC, 12VDC or 24VDC. Each RS485 power circuit further includes a current sensor 726, 728 used to measure current flowing through the RS485 port 624, 626 along with a relay 730, 732 controlled by the processors 600. Feedback signals from the current sensors 726, 728 are routed through analog digital converters (ADCs) back to the processors 600 to allow the processors 600 to monitor current on each RS485 port 624, 626 when desired for certain external sensor components 102 coupled thereto. The current sensors 726, 728 further act as safeties - in the event the output current for a particular RS485 port 624, 626 exceeds a predetermined threshold, power will be cut.

Additionally, the main power line (Vin) also has a current sensor 734 in series therein and the MCU processors 600 monitor the input power. Input power voltage level is being measured by the main MCU microcontroller 600 (via one or more ADC) while over current protection is supported by hardware (PTC thermistors - resistors with a positive temperature coefficient) or by software with current measurement to switch the illustrated relays 706, 714, 730, 732. The processors 600 in this embodiment measure both the Vin voltage and current. Although not specifically illustrated in FIG. 7 due to space limitations, it is to be understood that all of the current sensors 708, 718, 726, 728, 734 shown in FIG. 7 feed their measured current signals, as required through one or more ADC, back to the MCU processors 600 for monitoring and supervision purposes. Additional details of the supervision are provided below. Furthermore, all of the current sensors 708, 718, 726, 728, 734 may also be integrated with a PTC that will shut off current flow automatically without processor 600 involvement in the event the current exceeds a threshold current. PTCs 736 are also included in the output paths of the auxiliary power output terminal block 636 for this purpose to protect against overcurrent as well.

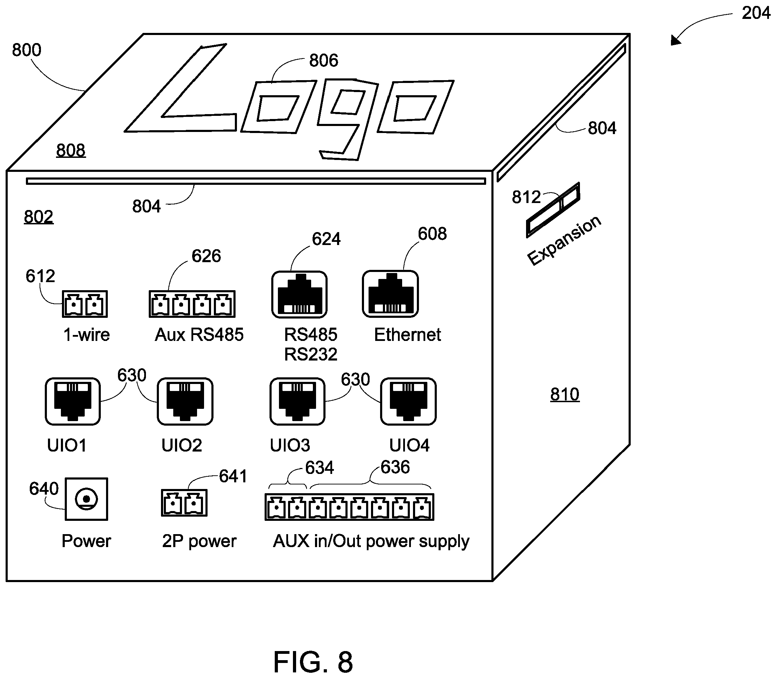

FIG. 8 illustrates a perspective front-view of an enclosure 800 of a zone controller 204 according to an exemplary embodiment. As illustrated, the zone controller 204 is a cube-shaped device in this embodiment and a front side 802 of the zone controller 204 includes a plurality of ports including four UIO ports 630, the 1-wire terminal block port 612, the auxiliary RS-485 terminal block port 626, the main RS-485 / RS-232 connector port 624, the main power jack plug 640, a two-pin terminal block 641, the Ethernet port 608, and the auxiliary power input / output terminal block port 634, 636. An LED indicator light 660 is directed via a light tunnel to a horizontal strip of translucent material running on all four sides of the zone controller 204 and the logo 806 on the top surface 808 is also translucent and acts as display for an LED indicator light 660. Finally, visible on a side wall 810 of the enclosure is the mPCIe connector 812 optionally available to connect expansion modules to the side 810 of the zone controller 204.

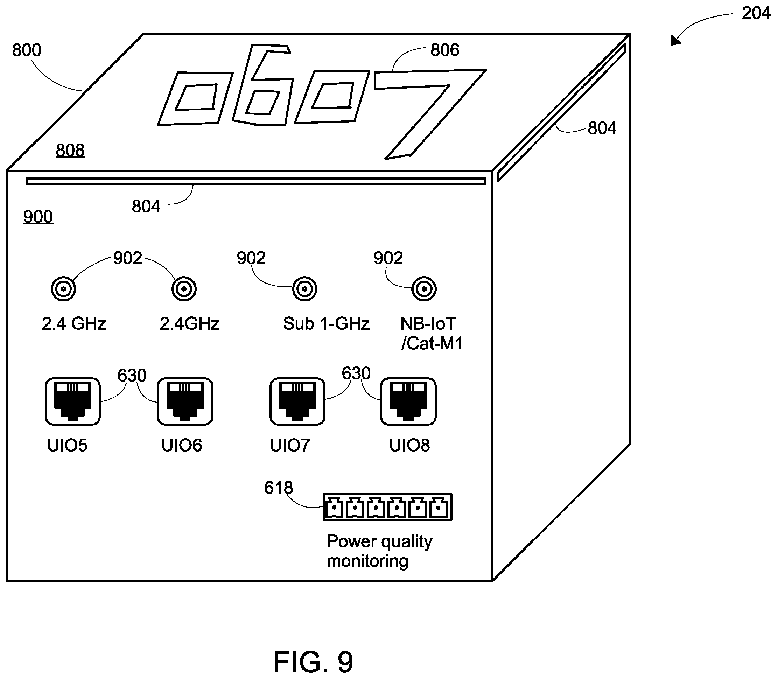

FIG. 9 illustrates a perspective back-view of the enclosure of the zone controller 204 of FIG. 8 according to an exemplary embodiment. The back side 900 in this embodiment includes the additional four UIO ports 630 along with the CT connector block 618. Up to four additional antenna connectors 902 are available in this embodiment for connection of optional external antennas for a first 2.4GHz antenna 652, a second 2.4GHz antenna 652, a sub-1GHz antenna 654, and an NB-IoT/Cat-M1 antenna 656, respectively. In some embodiments, the zone controller 204 includes internal antennas 652, 654, 656 and the external antennas need only be used when extended ranges are desired.

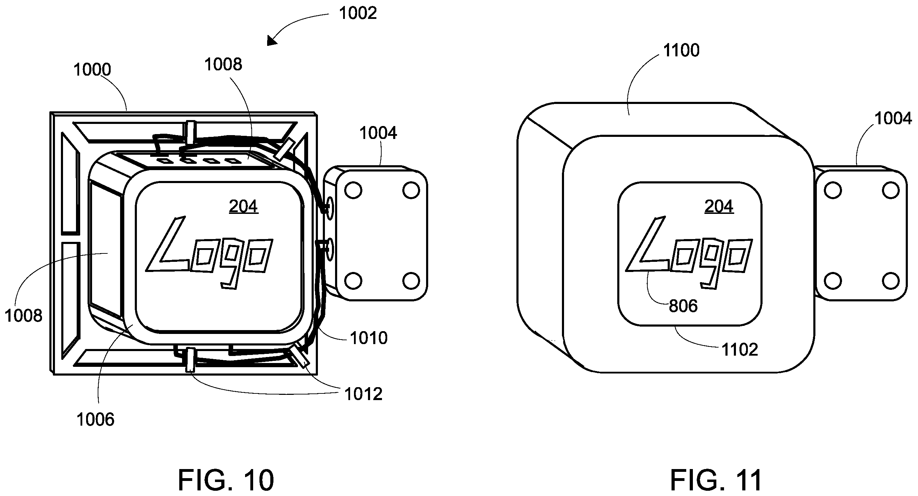

FIG. 10 illustrates an example of the inside cage 1000 of a mounting frame 1002 for mounting a zone controller 204 on a wall adj acent a junction box 1004 according to an exemplary embodiment. As shown, the cage 1000 of the mounting frame 1002 has a protruding holder section 1006 that wraps around the zone controller 204 enclosure. The holder section 1006 includes large windows 1008 that expose all ports and all connection of wires and/or antennas to the zone controller 204 without removing the zone controller 204 from the holder section 1006. The mounting frame 1002 with zone controller 204 in the holder section 1006 can then be secured to the wall adjacent the junction box 1004. Wires 1010 to/from the junction box 1004 are coupled to the respective ports of the zone controller 204 and may be secured by clips 1012 to frame portions of the mounting frame 1002.

FIG. 11 illustrates an example of a cover 1100 installed on the mounting frame 1002 after the zone controller 204 has been connected to the junction box 1004. As illustrated, the cover 1100 in this embodiment has an open window 1102 in a center portion thereby exposing the logo 806 on the top surface 808 of the zone controller 204. In some embodiments, the logo 806 acts as an indicator light 660 so, in addition to branding benefits, exposing the logo 806 also provides functional value by allowing external observers to watch for indicator light 660 information of the zone controller 204 even while mounted within the mounting frame 1002. The light guide within the enclosure 800 is connected to RGB LEDs 660 that blink or change color under controller of the LED AUX MCU processors 658 depending on the hardware status of the zone controller 204: booting, searching for gateway 202, problem detected and all other status needed. These lights 660 are also helpful to provide light for wiring the controller 204 when the light is low and can be dynamically activated by the processors 600 in response to receiving commands from the cloud controller 208 or a user such as via a coupled mobile phone 302.

The above structure of internal components and exterior enclosure effectively allows the zone controller 204 to become a universal IoT controller combining metering, sensing and automation capabilities to monitor and manage various aspects of a building 106 such as temperature, humidity, current, daylight, occupancy etc. Examples of functions enabled by allowing easy connection via one of the ports of the zone controller 204 including the UIO ports 630 which can be dynamically reconfigured as needed to support different sensor / actuator components 102, 104 actually installed in a particular building 106 include: environmental sensor integration, secure smart grid integration, self-programming intelligent controls, and pre-emptive maintenance & error detection. Other benefits of the zone controller 204 according to some embodiments include plug and play installation, universally compatible, sleek design and functional size, low cost and high value.

The zone controller 204 is a plug-and-play, universal controller that integrates with any building's existing mechanical and electrical systems without requiring significant upfront investment. The zone controller 204 provides building managers with a wealth of additional intelligence and tools by having different communication interfaces. In particular, the various ports 608, 612, 618, 624, 626, 630, 634, 636, 642 described above and dynamic reconfiguration of power supply 640 and port functions allows the zone controller 204 to connect locally to any heating, cooling ventilation or lighting system via low voltage control inputs or directly through electrical connectors. Fully scalable with secured links, the zone controller 204 includes wireless mesh communication radio transceivers and antennas with signal able to penetrate concrete walls. The mesh network 300 provided by the radio interface provides inter-zone-controller 204 communication (wireless MESH network 300) between a plurality of zones 206 in the building 106, and also provides for zone controller 204 to building gateway 202 communications. Support for multiple 2.4 GHz wireless protocols allows easily coupling the zone controller 204 to components in the building that utilize Zigbee, Thread, Bluetooth / BLE / Bluetooth 5.1 / Bluetooth Mesh, OpenThread, Wi-Fi, 6LoWPAN and other proprietary protocols at these same frequencies. Support for Sub-1GHz wireless protocols include LoRa, WM-Bus, EnOcean and support with 868 MHz and 915 MHz radio and proprietary protocols at these frequencies as well.

The processors 600 execute software instructions (also referred herein to firmware) loaded from the storage device 602 to provide a commissioning / provisioning mode where a user is able to manually override and change input / output values and set up ports 608, 612, 624, 626, 630, 642, 662. Override values can be sent to the zone controller 204 either utilizing commands sent via the building gateway 202 / cloud controller 208, or over any of the zone controller ports 608, 612, 624, 626, 630, 642, 662 and wireless interfaces 646, 648, 650 such as via an app running on a mobile phone 302 communicating to the zone controller 204 utilizing Bluetooth.

The above hardware structure of the zone controller 204 supports multiple protocols. Required firmware / software and configuration information is dynamically provided as needed to the zone controller 204 by the cloud controller 208 in order to support the actual protocols in use by the sensors 102 / actuators 104 connected to the zone controller 204. One examples of a supported protocol is Modbus^{™} Master Support, i.e., high connectivity using RS485 communication port 624, 626 allowing connection with devices with Modbus^{™} ASCII & Modbus^{™} RTU. Another example is BACnet^{™} MS/TP Support, which is a communication protocol designed to ensure the communication between control systems and sensors. BACnet is designed to allow the exchange of information regardless of the building system manufacturers. Yet another example of a supported protocol is 1-Wire protocol support. The zone controller 204 hardware structure further allows optional support as required for proprietary RS485 protocols. The RS484 interface is remotely configurable to be RS-232, RS-485, or RS-422.

The universal input output ports 630 (eight provided in this embodiment), include input output signalling capabilities of digital input (0 - 24V), digital output (0 - 10V), analog input (0 - 10V, 0 - 25 mA), analog output (0 - 11V, 0 - 25mA), and resistance measurements. Furthermore, as shown above in FIG. 7, the each UIO port 630 supports providing voltage supply for external devices connected to the port 630 (sensors 102 or actuators 104). Output voltage is selectable and multiple options are available: 0VDC, 5VDC, 12VDC, 24VDC, or forwarded input voltage.

In short, the universal nature of the hardware with selectable and reprogrammable port functionality provides for a wide flexibility in input/output ports, which is highly beneficial to allow a single common design of zone controller 204 to be used in many different applications. Likewise, the power input and output hardware abilities further support the zone controller 204 being utilized in different applications, which may have different power supplies and power needs. The input pins are used for powering the zone controller 204 and the output pins provide voltage supply for external devices connected to the port (sensors 102 or actuators 104). Output voltage is selectable by the processors 600 and multiple options are available: 12VDC, 24VDC, or voltage from the Terminal block 2P.

The hardware structure of this embodiment further supports quick and on-site supported diagnostics. Visualized LED indicator 660 for zone controller 204 general status (e.g., fully operational / Intervention needed) which may be shown by the solid or flashing logo 806 and horizontal LED strips 804, for example. Local commissioning / provisioning may be performed through Smartphone 302 app with Bluetooth connectivity.

The firmware executed by the processors 600 cause the zone controller 204 to operate in multiple control modes including a manual mode which grants the user the ability to command points manually through the front end webBMS interface 416 of the cloud controller 208. Alternatively, a smart mode allows the system 200 including the zone controller 204 to run automatically without the interference of the user. The systems are set in a configuration and progress according to a desired energy mode.

Examples of multiple supported energy modes include a comfort mode that grants comfort while controlling the measure in smart mode. This mode cares about facility more than energy saving. Another mode employed in some embodiments is an energy saver mode which joins the comfort with consumption reduction. Yet another mode is a super saver mode that cares more about energy savings and opts to minimize energy consumption.

Multiple system controls are supported by this embodiment including light systems. The zone controller 204 can control lights manually or automatically according to signals received by an occupancy sensor 102. HVAC systems can be controlled by the zone controller 204 using bands logic to control heating, ventilation, air conditioning, etc. Other generic systems are also fully controllable as the zone controller 204 can be dynamically configured to utilize a PID algorithm for industrial control systems or applications requiring continuously modulated control.

The variety of ports and configurability of both the port hardware and processor software 600 allows the zone controller 204 to support a large number of actuator 104 types. Examples include Modbus^{™} controls, RTU, ASCII, Relays, Lights, Thermostats, Solenoide (CO2), damper, HRV, doors & windows, humidifiers, dehumidifiers. Likewise, the different ports and dynamic reconfiguration ability of their hardware and software supports a large number of sensor 102 types including microwave, ultrasonic, Modbus controls (RTU, ASCII), thermostats, pressure sensors, occupancy, lux sensor, RTD (PT1000), and many other sensors compatible with the various ports of the zone controller 204.

Meter measurement is supported by the hardware structure in this embodiment different types are supported including Modbus^{™} Meter for any combination of energy, electrical power and current. Built-in current transformers (CT) 616 further allow directly measurement by the zone controller 204 of electrical current flowing in external wires.

The zone controller 204 is fully customizable and can be dynamically reconfigured at any time by either authorized users or the cloud controller 208. Over-the-air (OTA) updates enable secure firmware updates and secure configuration updates. Security is ensured by the processors 600 utilizing encryption while communicating with the building gateway 202 and cloud controller 208.

Remote device commands execution & access using unique MAC address enables different requests and handles to be supported by the zone controller 204. Examples of zone controller 204 requests include Modbus^{™} polling, read / write from external devices, and advertise configuration. Examples of zone controller 204 handles includes OTA firmware updates, system and application configuration updates, set values (control), read / write from external devices (polling/controlling), override commands and ports, override variables, lossless delivery such a zone controller 204 HisPoint data mechanism. The zone controller 204 can request messages include HisPoint, hardware abstraction layer (HAL), heartbeat, etc. The zone controller 204 can also be remotely rebooted when needed. In the even that additional hardware features are required, these can be provided and made available to the zone controller 204 processors 600 with onboard extensions connected to the expansion port 662.

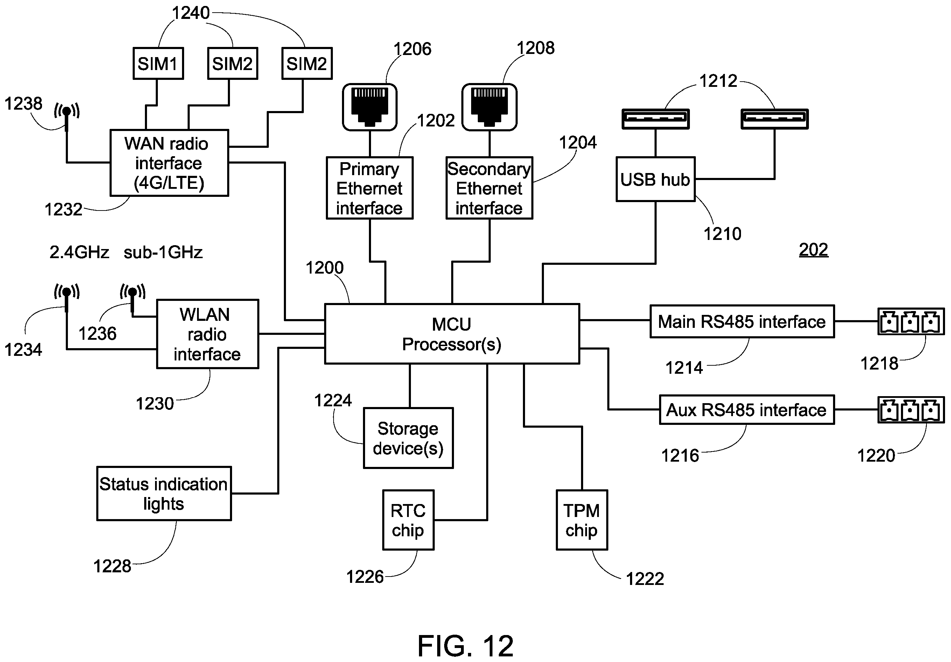

FIG. 12 illustrates a block diagram of a building gateway 202 according to an exemplary embodiment. The building gateway 202 includes a main processing unit such as a microcontroller unit (MCU) including one or more processors 1200. Again, the plural form of the word "processors" 1200 is utilized; however, it is to be understood that a single processor 1200 may also be configured to perform the described functionality in other implementations. The processors 1200 are coupled to primary and secondary Ethernet interfaces 1202, 1204 being physical layer transceivers / controllers compatible with 10/100/1000Base-T networks. The building gateway 202 includes respective primary and secondary RJ45 Ethernet ports 1206, 1208. The processors 1200 are further coupled to a universal serial bus (USB) hub controller 1210, which acts as a transceiver to for a plurality of USB ports 1212 including two regular sized ports for external usage.

The processors 1200 are further coupled to a main RS-485 interface 1214 and an auxiliary RS-485 interface 1216. The RS-485 and RS-485 aux interfaces 1214, 1216 are one or more universal asynchronous receiver/transmitters (UARTs) supporting RS-485. In some embodiments, the RS-485 ports 1218, 1220 are 3-pole connectors having A+, B-, and GND lines, supporting half-duplex designed for interfacing with the CO2/RH/Temperature 'thermostat' or other Modbus^{™} or BACnet MS/TP slave devices. The main interface connector port 1218 in this embodiment is an RJ12, p6c connector. The second, auxiliary port 1220 is accessible through a different three position terminal block header different than the main interface connector 1218.

The processors 1200 are further coupled to a trusted platform module (TPM) 1222, which is a specialized chip on the building gateway 202 that stores Rivest-Shamir-Adleman (RSA) encryption keys specific to the building gateway 202 for hardware authentication. The TMP chip 1222 in some embodiments acts as a secure crypto-processor, and is a dedicated microcontroller designed to secure hardware through integrated cryptographic keys. In some embodiments, it is used for "disk" encryption of data stored on the one or more storage devices 1224.

The processors 1200 are further coupled a real time clock (RTC) chip 1226 that accurately measures the passage of time and to one or more storage devices 1224 for storing data and software for usage by the processors 1200. The storage devices 1224 may include, for example, a combination of FLASH and RAM memory. One or more status indication lights 1228 such as light emitting diodes are further coupled to the processors 1200.

The processors 1200 are also coupled to a plurality of wireless interfaces including a wireless local area network (WLAN) radio interface 1230 and a separate wide area network (WAN) 4G/LTE interface 1232. The WLAN radio interface 1230 supports wireless local area networks and is implemented in some embodiments as a separate microcontroller enabling Wi-Fi, Thread, Zigbee and Bluetooth. The radio interface 1230 is coupled to two antennas: a first antenna 1234 for 2.4GHz communications and a second antenna 1236 for sub-1GHz communications. The WAN radio interface 1232 is a transceiver that wirelessly couples the processors 1200 of the building gateway 202 to an external network outside of the building 106. In some embodiments, the WAN radio interface 1232 couples the building gateway 202 to the Internet 116 via a 4G / LTE mobile data connection. A plurality of subscriber identity module (SIM) cards 1240 are coupled to the WAN radio interface 1232. These SIM cards 1240 in some embodiments are user-replaceable to allow for easily switching mobile providers, and the multiple SIM cards 1240 allow the building gateway 202 to have redundant mobile data connections to the Internet 116 for increased reliability.

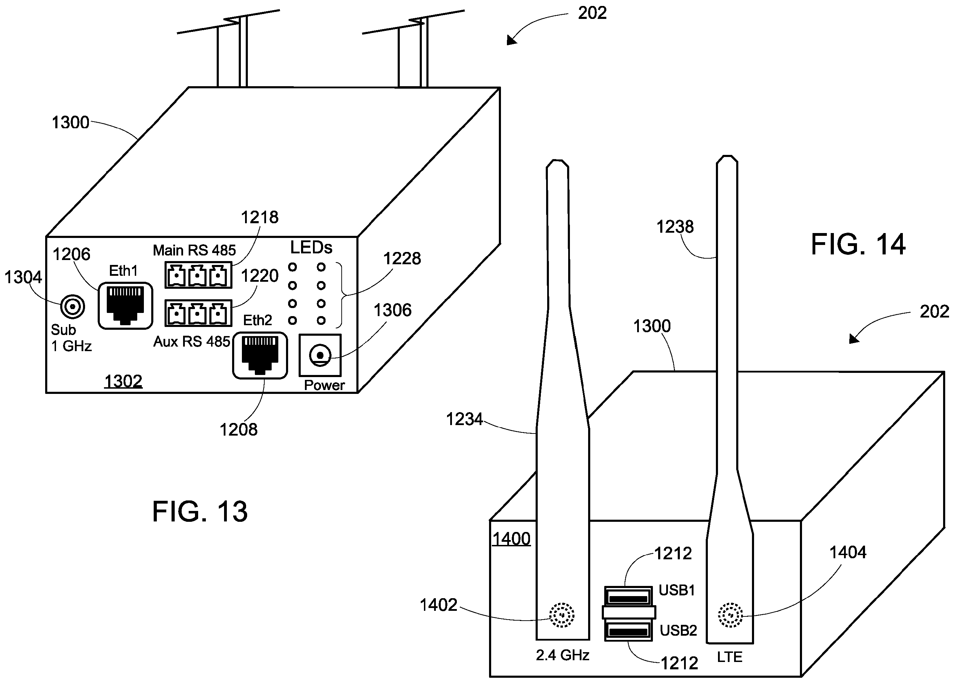

FIG. 13 illustrates a perspective front-view of an enclosure 1300 of a building gateway 202 according to an exemplary embodiment. The building gateway 202 in this embodiment is a rectangular shaped device having a plurality of ports on a front face 1302. The ports on the front face include an antenna connector 1304 for sub-1GHz wireless operations, a primary Ethernet port 1206, a secondary Ethernet port 1208, a three-terminal header block 1218 for main RS-485, a three-terminal header block 1220 for auxiliary RS-485, a power jack plug 1306, and a plurality of status indicator LEDs 1228.

FIG. 14 illustrates a perspective back-view of the enclosure 1300 of the building gateway 202 of FIG. 13 according to an exemplary embodiment. The back side 1400 in this embodiment includes a first antenna connector 1402 and external antenna 1234 for 2.4GHz wireless operations and a second antenna connector 1404 and external antenna 1238 for LTE wireless operations. Further included on the back side 1400 are the two USB ports 1212.

In summary, the building gateway 202 in this embodiment is a multi-protocol energy management device. The building gateway 202 allows simple and flexible integration across various energy & automation protocols. It enables consolidated connectivity and inter-operable rapid and encrypted communication via the cloud-based controller 208 or open API acting as a device coordinator.

The building gateway 202 includes ports 1206, 1208, 1212, 1218, 1220 such as RS485 1218, 1220 and wireless radio interfaces 1230, 1232 and can act in a similar manner as a zone controller 204. In some deployments, a single building gateway 202 may have all sensors 102 and actuators 104 and other components such as legacy building BMS 114 coupled thereto directly utilizing one of the ports 1206, 1208, 1212, 1218, 1220 or wireless interfaces 1230, 1232 of the building gateway 202. However, to further extend the reach of the building gateway 202, the building gateway 202 can be wirelessly connected by a mesh network 300 to any number of other building gateways 202 and zone controllers 204 in the building 106. For buildings 106 that include a legacy BMS 114, the building gateway 202 can be dynamically programed by the cloud controller 208 to include firmware and configuration data for supporting any desired BMS protocol 506 including BACnet / Trend / Modbus / Niagara AX/N4 / KNX / M-Bus / oBIX / OPC DA / OPC UA / SNMP / LonWorks. The result is quicker deployments and unprecedented collaboration between various systems and technologies including the zone controllers 204, building gateway 202 and cloud controller 208 in addition to the various sensors 102 / actuator 104 components and legacy building management system (BMS) 114. Additional hardware interface ports and protocols may also be added to the building gateway in other embodiments such as RS-232 and Controller Area Network (CAN).

In some embodiments, the WLAN radio interface 1230 includes two radio transceivers / controllers. A sub-1GHZ radio has a frequency band of ISM Sub-1GHz (868MHz and 915MHz) and supports protocols such as LoRa, WM-Bus, and EnOcean. A 2.4 GHz radio has a frequency band of ISM 2.4GHz and supports protocols including Zigbee, Bluetooth 5.1, Bluetooth Mesh, OpenThread, Wi-Fi, 6LoWPAN. The WAN radio interface 1232 supports a variety of frequency bands such as LTE Frequency bands (LTE-FDD: B1/ B2/ B3/ B4/ B5/ B7/ B8/ B12/ B13/ B18/ B19/ B20/ B25/ B26/ B28; LTE-TDD: B38/ B39/ B40/ B41), WCDMA Frequency bands (B1/B2/ B4/ B5/ B6/ B8/ B19) and GSM frequency bands (B2/ B3/ B5/ B8).

Regardless of how the sensor 102 and actuator 104 components are coupled to the building gateway 202, either directly to the gateway 202 or via an intermediate device such as zone controller 204, the building gateway 202 communicates with the cloud controller 208 in order to pass sensor information from the sensors 102 to the cloud controller 208 and to likewise pass commands received from the cloud controller 208 to one or more appropriate actuators 104 in the building 106. Examples of components that may be monitored and/or controlled by the building gateway 202 and other functions performed by the building gateway 202 include IoT, smart metering, energy management, automation, renewable energy, energy storage, building management, smart grid (ADR), etc. The building gateway 202 is fully expandable and possesses native plug & play wireless mesh 300 connectivity to all zone controller devices 204 within the building 106 along with other wireless and wired connectivity to sensors 102 and actuators 104 within the building 106 for seamless on-site deployments.

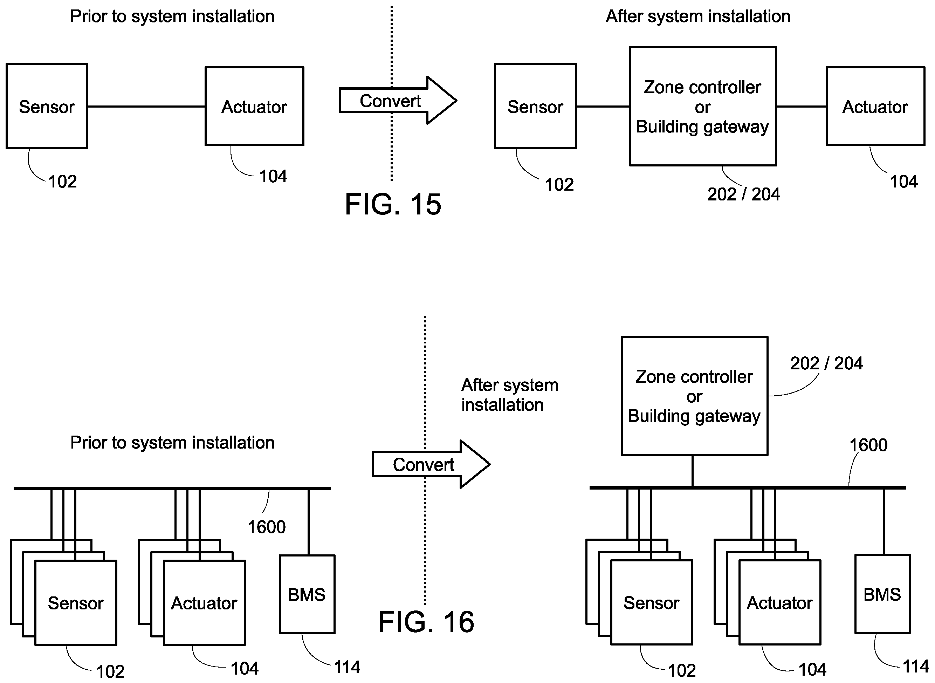

FIG. 15 illustrates a block diagram showing how a non-networked, point-to-point wired sensor-actuator pair 102, 104 in a building 106 may be connected to a zone controller 204 or building gateway 202 according to an exemplary embodiment. The left-hand side of the diagram shows the original situation in the building 106. For example, a public bathroom of an existing building may have a motion sensor 102 coupled to a light actuator 104 in order to automatically turn on the lights when someone enters the bathroom, as described above in the background section.

The right-hand side of FIG. 15 shows how the direct connection of these two devices 102, 104 is broken and instead both are wired to a zone controller 204 (or a building gateway 202). In this way, the intermediate zone controller 204 (or building gateway 202) is able to read the sensor signal 102 and report it to the cloud controller 208, and secondly is able to directly control the bathroom lights such as based on commands received from the cloud controller 208.

Although FIG. 15 shows a single sensor and actuator pair 102, 104, in actual practice it will be possible to connect a plurality of sensors 102 and actuators 104 to a single zone controller 204 (or building gateway 202). For instance, both the male / female bathrooms may have a similar setup and both may be coupled to a single zone controller 204 as the wires for both systems are physically close to each other. Likewise, other non-networked sensors 102 and actuators 104 in that physical area (i.e., zone 206) may also be coupled to the same controller 204. Especially when the intermediate device is a zone controller 204, the plurality of different types of ports 608, 612, 624, 626, 630, 642, 662 and the hardware voltage reconfiguration ability and software programming ability of the universal input output ports 630 means that installation can simply be to cut one or more wires forming the direct connection and then connect each side's component (i.e., sensor 102 and actuator 104) to the zone controller 204. As long as the sensor 102 and actuator 104 physical and protocol layers 502, 504 are supported by the zone controller 204, no other intermediate signal conversion or other integration devices are needed.

Breaking the original wired connection between the sensor 102 and actuator 104 in order to couple both to the zone controller 204 means that the sensor 102 / actuator 104 are not able to pass signal(s) therebetween without the assistance of the zone controller 204 (or building gateway 202). This is clearly beneficial to allow the intermediate zone controller 204 (or building gateway 202) to independently control the actuator 104 based on other signals besides just the sensor 102 signal such as according to commands received from the cloud provider 208. Furthermore, during installation, local instructions are configured within the zone controller 204 (or building gateway 202) that will mimic the original behaviour where the zone controller 204 will simply pass the sensor 102 signal / data to the actuator 104 and thereby enable the original behavior. Thus, the failsafe operation of the zone controller 204 (or building gateway 202) if it ever loses connection with the rest of the system 200 such as the cloud controller 208 is to simply control the actuator 104 according to the original sensor 102 signal. No further input from the rest of the system 200 is required for this failsafe behavior - worst case situation, the building 106 will operate as it did prior to installation of the system 200.

FIG. 16 illustrates a block diagram showing how a set of wired components 102, 104, 114 on a local network bus 1600 such as RS485 in a building 106 may be coupled to a zone controller 204 or building gateway 202 according to an exemplary embodiment. In this example, the thick line represents the bus 1600. As shown on the left-hand side of the diagram, before installation of the system a plurality of components such as sensors 102, actuators 104 and building legacy BMS 114 are coupled to the bus 1600. The right-hand side of FIG. 16 shows how a zone controller 204 (or a building gateway 202) simply needs to be coupled to the bus 1600. The fact that the various components 102, 104, 114 on the bus 1600 can still communicate with each other does not in many applications prevent the zone controller 204 or the building gateway 202 from overriding or changing the states of the actuators 104 as desired. For example, the cloud controller 208 may send commands to change states of the actuators 104 or BMS 114 based on other signal for energy efficiency. Furthermore, in the event that the zone controller 204 or building gateway 202 loses connection with the cloud controller 208, the fact that all the original sensor actuator components 102, 104 can still communicate with each other over the bus 1600 means that the original building 106 behavior is preserved.

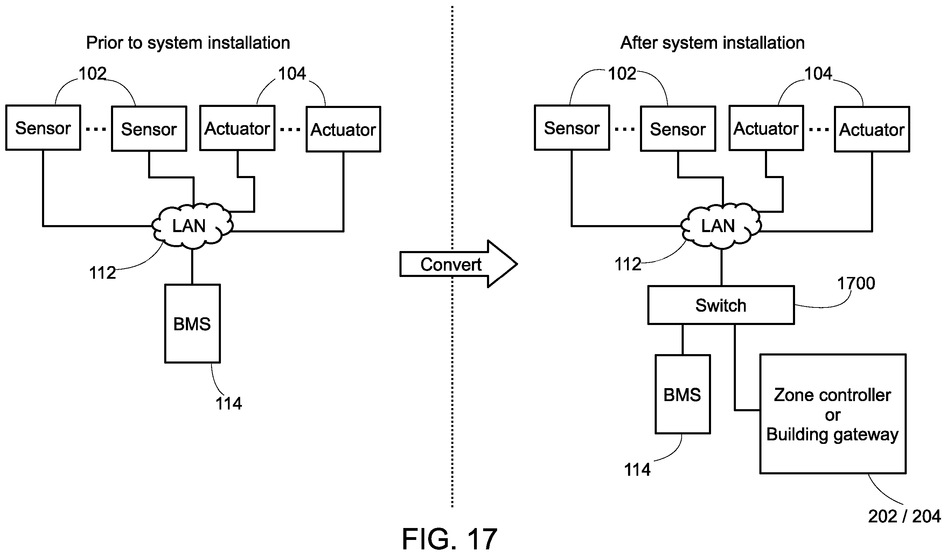

FIG. 17 illustrates a block diagram showing how a set of wired components 102, 104, 114 on a local area network 112 such as an Ethernet network in a building 106 may be coupled to a zone controller 204 or building gateway 202 according to an exemplary embodiment. As shown on the left-hand side of the diagram, before installation of the system 200, a plurality of components such as sensors 102, actuators 104 and building legacy BMS 114 are coupled together on a LAN 112.

The right-hand side of FIG. 17 shows how a zone controller 204 (or a building gateway 202) is simply coupled to LAN 114 via the addition of a new network switch 1700. For instance, in this example, the LAN 112 includes an original switch to which the legacy BMS 114 is coupled thereby providing the BMS 114 with network 112 connectivity to all the of the other sensor 102 / actuator 104 components on the LAN 112. The BMS 114 can be unplugged from its original switch port and an additional switch 1700 providing more Ethernet ports can be added and plugged to the now free original switch port, thereby allowing both the BMS 114 and the zone controller 204 (or building gateway 202) to be coupled to the LAN 112.

Other techniques are also possible. For instance, assuming there is a BMS 114 on the network 112, the zone controller 204 (or building gateway 202) can be connected to a free port of the switch to which the BMS 114 is connected. In the event there are no free switch ports and only one Ethernet port is needed on the zone controller 204 (or building gateway 202), the zone controller 204 (or building gateway 202) can itself act as a switch and the BMS 114 can plug into the zone controller 204 (or building gateway 202).

In each of the above-described options, the fact that the various components 102, 104, 114 on the network 112 can still communicate with each other over the LAN 112 does not in many applications prevent the zone controller 204 or the building gateway 202 from overriding or changing the states of the actuators 104 / BMS 114 as desired. For example, the cloud controller 208 may send commands to change states of the actuators 104 or BMS 114 based on other signals for energy efficiency. Furthermore, in the event that the zone controller 204 or building gateway 202 loses connection with the cloud controller 208, the fact that all the original sensor actuator components 102, 104 can still communicate with each other over the LAN 112 means that the original building 106 behavior is preserved.

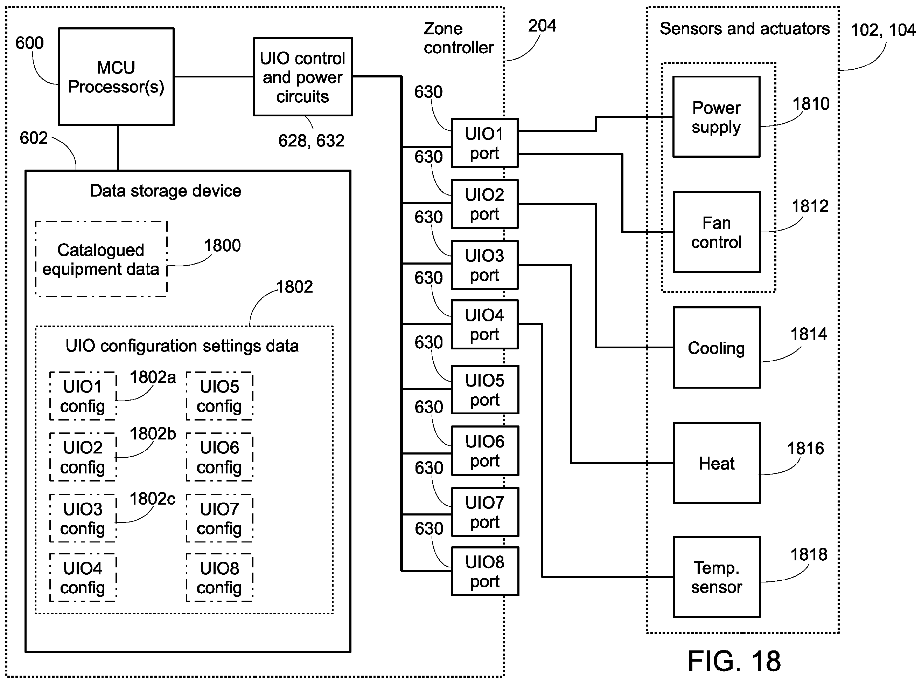

FIG. 18 illustrates a block diagram of internal configuration data for universal input output ports UIO 630 of a zone controller 204 according to an exemplary embodiment. As illustrated, the zone controller 204 includes one or more data storage devices 602 and said storage devices 602 include stored therein a catalogued equipment data 1800 and configuration settings data 1802 for each UIO port 630.

The catalogued equipment data 1800 stores information gathered during provisioning about what types of components 102, 104 are coupled to each UIO port 630. The UIO configuration settings data 1802 includes a variety of data for each UIO port 630 that is utilized by the processors 600 to configure the power management circuit 632 and UIO circuit 628 for that port to support the device type that is coupled to said port 630. Further, the UIO configuration settings data 1802 includes local instructions for how the port 630 is to operate if there are no other instructions received from the building gateway 202 / cloud controller 208.

The processors 600 set the output voltage according to a hardware abstraction layer (HAL) configuration included in the configuration data 1802 that is received from the cloud controller 208 for each particular UIO port 630. The HAL configuration defines voltage and pin outs as required for the UIO port 630 and provides a standard way for software running on the processors 600 to utilize the port 630 without requiring changes to the software to support new sensor / actuator physical layers 502 and protocols 504 that may be required at the UIO port 630. In effect, given knowledge of a particular type of sensor or actuator component 102, 104 coupled to a particular port 630 of the zone controller 204, the cloud controller 208 provides all required UIO configuration settings data 1802 to allow the zone controller 204 to successfully communicate with and/or power the particular device coupled to each UIO port 630.

For instance, in the example diagram shown in FIG. 18, there are five external components that are coupled to the zone controller 204 utilizing the first four UIO ports 630. The first UIO port 630 is coupled to a power supply 1810 and a fan control 1812. The second UIO port 630 is coupled to a cooling system 1814, the third UIO port 630 is coupled to a heating system 1816, and the fourth UIO port 630 is coupled to a temperature sensor 1818. These components 1810, 1812, 1814, 1816, 1818 and their associated identifier types are stored in the catalogued equipment data 1800 and settings required for these components 1810, 1812, 1814, 1816, 1818 are stored in the UIO configuration settings data 1802. Taking the first UIO port 630 as an example, the processors 600 read the configuration data 1802a for this port 630 and then control the first UIO power circuit 628 according to the configuration data 1802a. For instance, the configuration data 1802a instructs the processors 600 on how to set the DC-DC converter 704 for the first UIO port 630, and the relay 706 for the first UIO port 630. Furthermore, other aspects of the universal input output circuit 628 may be adjusted as necessary such as reading certain pins of the UIO port 630 with an analog-to-digital converter or measuring the current sensor 708 of the first UIO port 630 depending on the requirements of the power supply 1810 and fan control 1812 coupled thereto.

As mentioned, as a failsafe, the UIO configuration settings data 1802 may also include local instructions for how a particular actuator 104 or actuators 104 are to operate if the cloud controller 208 is unreachable or unresponsive. Taking FIG. 18 as an example, the configuration data 1802 for the UIO ports 630 one through three may include local instructions to activate the power supply 1810, the fan control 1812, the cooling system 1814, or the heat system 1816 based on time passage and / or the measured temperature value received from the temperature sensor 1818. A plurality of thresholds may be included within the UIO configuration settings 1802a for the first UIO port 630 such that the fan control 1812 is activated periodically for air circulation purposes and further activated whenever the cooling and heating system 1814, 1816 is turned on. The configuration settings data 1802b for the second UIO port 630 may include local instructions that cause the processors 600 to automatically active the cooling system 1814 when the temperature received from the temperature sensor 1818 is above a first predetermined threshold. Likewise, the configuration settings data 1802c for the third UIO port 630 may include local instructions that cause the processors 600 to automatically active the heating system 1816 when the temperature received from the temperature sensor 1818 is below a second predetermined threshold.

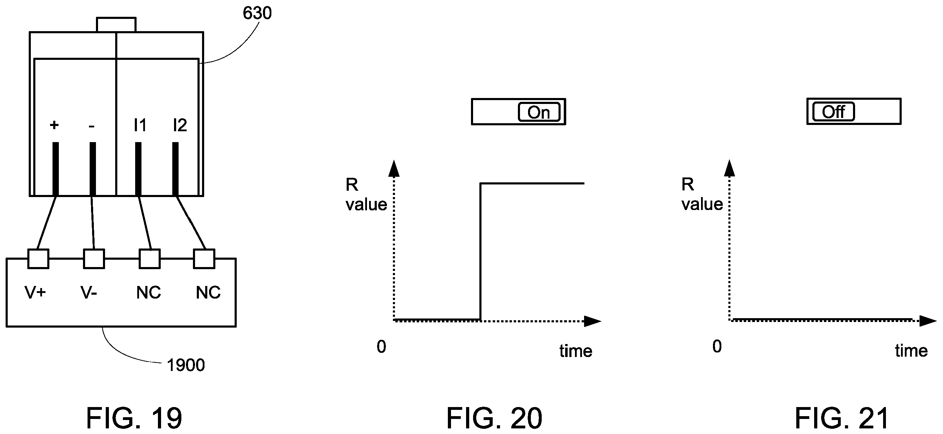

FIG. 19 illustrates a pinout of a universal input output (UIO) port 630 of the zone controller 204 and coupling of said UIO port 630 to an occupancy sensor 1900 according to an exemplary embodiment. Each universal input output port 630 has multiple separate functionalities. The example of FIG. 19 shows how an occupancy sensor 1900 can be read by an UIO port 630. FIG. 19 is a representation of port 630 pinout. Included on the port 630 are power supply lines (+) and (-) and data lines I1 and I2. The functionality of these pins are configurable through software - the data lines can change functionality and the power supply lines can change voltage value. The processors 600 of the zone controller 204 change these values according to the UIO configuration data 1802 for the particular UI port 630. For a typical occupancy sensor 1900, the connection to the UIO port 630 is as illustrated where the power supply lines of the UIO port 630 are coupled to corresponding positive / negative voltage ports of the sensor 1900.

The pins of the sensor 1900 labeled NC stands for normally closed (NC) contact pair and is a well-known type of contact pairs. Another type is normally opened (NO) and the UIO port 630 of the zone controller 204 is supports both types of contact pairs.

FIG. 20 illustrates a resistance R value that will be measured by the UIO port 630 when the occupancy sensor 1900 is detecting a positive occupancy. This "On" state is results in a high resistance R value being measured by the UIO port 630 and the processors 600 in response send data to the cloud controller 208 reporting that this particular sensor 1900 has detected people in the room. Alternatively, FIG. 21 illustrates a second resistance R value that will be measured by the UIO port 630 when the occupancy sensor 1900 is detecting a negative occupancy. This "Off" state of the sensor 1900 results in a low resistance R value being measured by the UIO port 630 and the processors 600 in response send data to the cloud controller 208 reporting that this particular sensor 1900 has not detected people in the room.

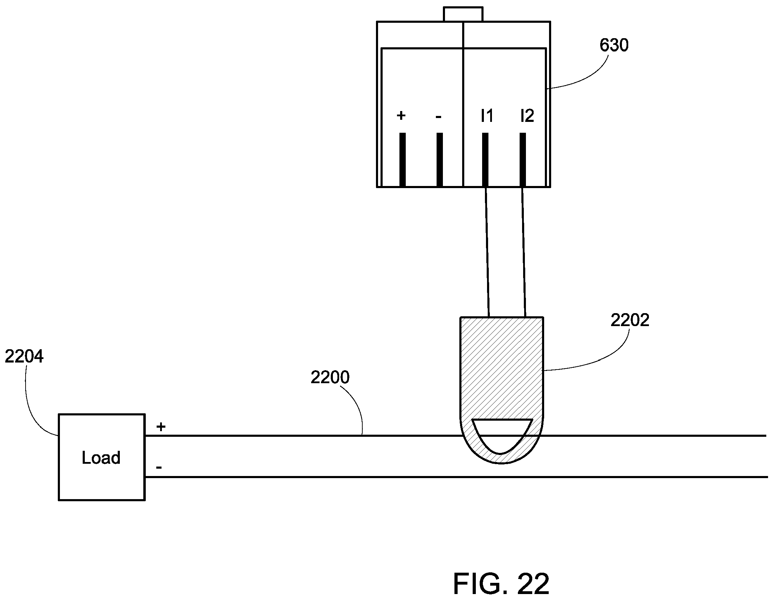

FIG. 22 illustrates utilizing an UIO port 630 in a current sense mode to measure electrical current flowing through a wire 2200. In this example, an external current transformer (CT) sensor 2202 is coupled to the data lines I1, I2 of the UIO port 630 and placed adjacent a current carrying transmission line 2200. As load 2204 drives current through the lines, the CT sensor will induce a current at the UIO port 630 that can be read by the processors 600. The CT sensor 2202 may be clip-on for easy attachment around a transmission line 2200. Including all available ports 630, 618 on the zone controller 204, in this embodiment a maximum configuration of eleven CT sensors can be simultaneously measured by the zone controller 204. Three CTs 616 are build-in and available for use at the CT port 618 and each of the eight UIO ports 630 can be utilized in conjunction with an external CT sensor 2202. The ADC sampling rate for the UIO ports 630 in some embodiments may be slower than the that of the dedicated CT ports 618. For instance, the max sampling rate for the UIO ports 630 may be 4.8 KSPS whereas the max sampling rate for CT port 618 may be 153.6 KSPS according to some embodiments. Utilizing a UIO port 630 as a CT scanner may be beneficial for current readings, accurate event detection, and accurate problems detection.

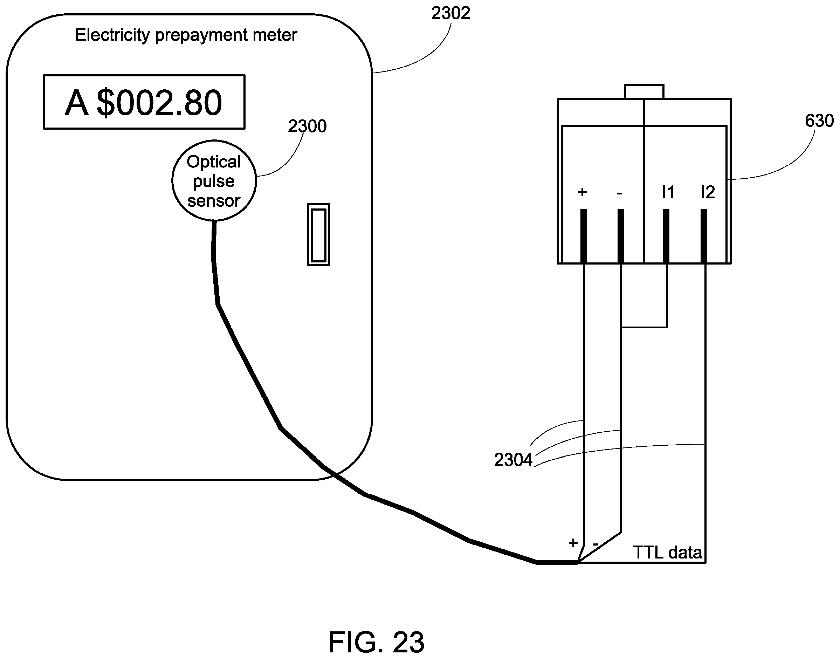

FIG. 23 illustrates an example of coupling a universal input output (UIO) port 630 of the zone controller 204 to an optical pulse sensor 2300 utilizing transistor-transistor logic (TTL) communications according to an exemplary embodiment. The optical pulse sensor 2300 in this example is affixed to the outside of a utility meter 2302 with an LED pulse output and is utilized to detect energy passing through the meter 2302 according to the pulses (each pulse corresponds to a predetermined amount of energy).

The sensor 2300 includes three wires 2304: a first two are positive and negative power lines for powering the sensor and the third line is a TTL data line. The power required by the sensor 2300 is provided by the positive and negative UIO port 630 pins. The negative power line acts as a ground and is also coupled to the I1 data line of the UIO port 630. Lastly, the TTL data line from the sensor 2300 is coupled to the I2 data line of the UIO port 630. The processors 600 of the zone controller 204 configure the UIO port 630 to provide the correct voltage power levels required for sensor 2300 operation and to read the TTL data on the I2 line. These configurations are passed to the zone controller 204 from the cloud controller 208 in the form of configuration settings data 1802 (i.e., a HAL specific for the particular sensor 2300) and are stored in the storage device 602 of the zone controller 204. The processors 600 then configure the UIO control and power circuits 628 for the particular port 630 that is coupled to the sensor 2300.

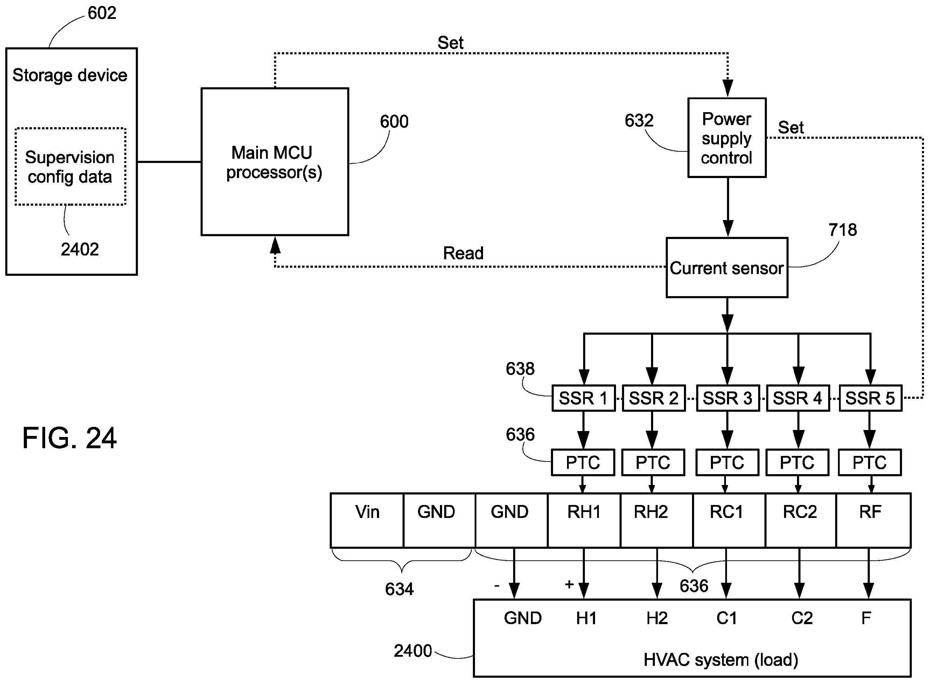

FIG. 24 illustrates an example of powering one or more external sensors or other loads 2400 via the auxiliary power output ports 636 of the zone controller 204 according to an exemplary embodiment. As illustrated, the six pins GND, RH1, RH2, RC1, RC2, RF on the right side of the port 636 in this embodiment are for providing voltage supply for external devices connected to the port 636 (sensors 102 or actuators 104). The GND line is common for all devices and a plurality of five relay ports RH1, RH2, RC1, RC2, RF are available in this embodiment. Each of these relay ports has a dynamically configurable voltage value being one of 12 VDC, 24 VCD or the AC or DC input voltage from the AUX In/Out Power supply port (terminal block connector 634). The processors 600 have control over which of which voltage is selected by changing the various solid state relays (SSR) 638 for each relay port RH1, RH2, RC1, RC2, RF. This is indicated in FIG. 24 by the "Set" signal from the processors 600 to the power supply control circuit 632 which represents one or more control signals that set states of the various aux power relays 638 (illustrated in FIG. 7). Current sensors 708 are implemented on all UIO ports 630 and one sensor 718 for all AUX Out Power supply ports 636, and the processors 600 can read the value of the current sensor 718. Supervision configuration data 2402 is stored in the storage device 602 for the relay ports 636 current sensor 718; in the event a predetermined threshold current is detected, the processors 600 disable power utilizing the "Set" control signals to protect against short circuits or other faults. One or more alerts are also sent the cloud controller 204 via the building gateway 202.

In some embodiments, the auxiliary power output ports 636 are utilized to power an HVAC system 2400, and the pins GND, RH1, RH2, RC1, RC2, RF correspond to similarly named pins GND, H1, H2, C1, C2, F on well-known HVAC systems 2400. Power sequencing of the of the GND, RH1, RH2, RC1, RC2, RF pins is available as each solid-state relay 638 can be independently turned on and off under control of the processors 600. Utilizing solid-state relays 637 here is beneficial as large spikes of current may inadvertently solder the connections of electromechanical relays and prevent the relay from being turned off.

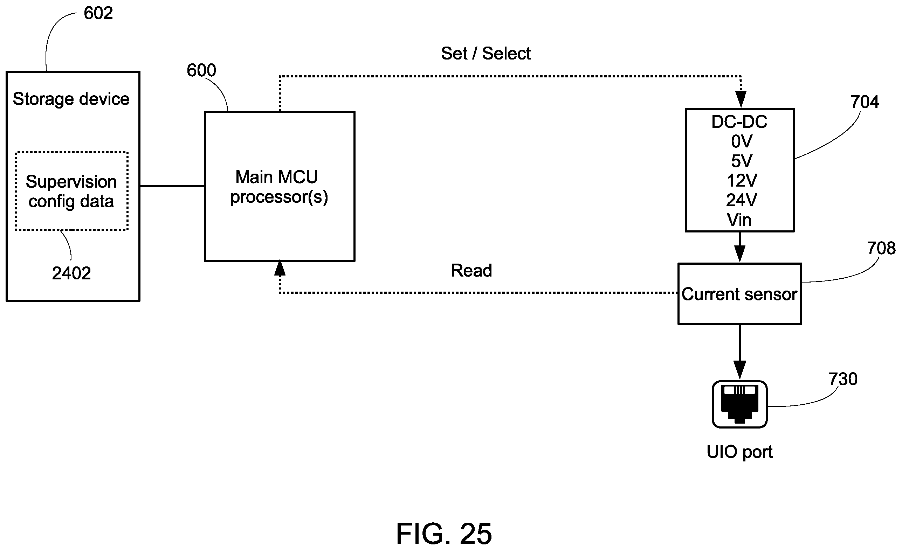

FIG. 25 shows a block diagram of how the processors 600 supervise the current flow through each UIO port 630 according to an exemplary embodiment. As mentioned, each of the UIO ports 630 also includes a current sensor 708 thereby allowing the processors 600 to supervise and independently disable any individual UIO port 630 in the event that the current flowing through that port 630 exceeds a predetermined threshold. In response to the processors 600 determining that the predetermined threshold current has been exceeded, the processors 600 disable power by selecting 0V output on the DC-DC regulator 704 associated with that UIO port 630. One or more alerts are also sent the cloud controller 208 via the building gateway 202.

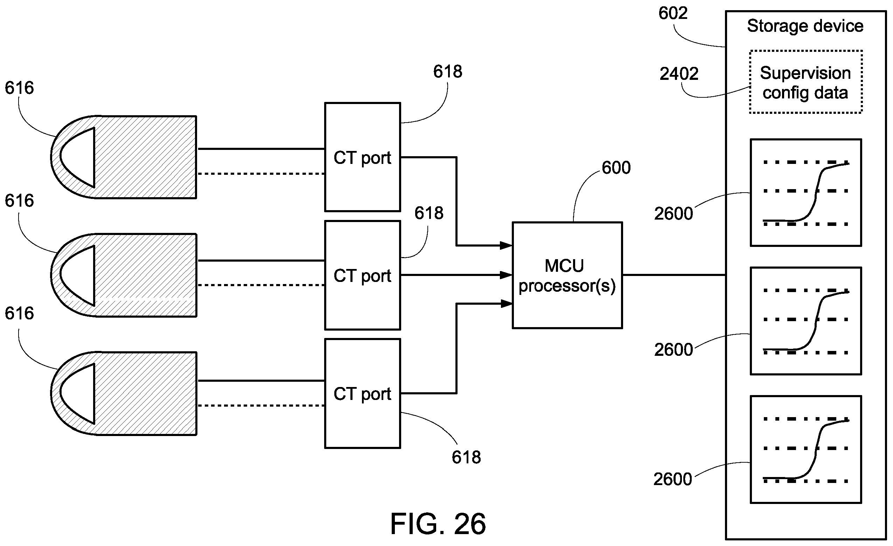

FIG. 26 illustrates a block diagram of the processors 600 performing supervision of currents flowing in external devices as measured by the CT ports 618. As shown, a CT sensor 616 is coupled to each CT ports 618 and the processors 600 store the resulting data 2600 in the storage device 602. The processors 600 further analyse the stored data 2600 according to supervision configuration data 2402 in order to detect anomalies such as whether a current threshold is reached or whether critical values are reached. When yes, one or more alerts are sent the cloud controller 208 via the building gateway 202. Although not expressly illustrated in FIG. 26, there is actually an analog-to-digital (ADC) provided by the CT input ports 618 of the processors 600 in this embodiment. In other embodiments, a separate ADC chip may be provided intermediate each CT port 618 and the processors 600 in order to convert the analog signals from the CT port 618 to the digital domain for the processors 600.

Power meter applications can be performed by the zone controller 204. For instance, when 24VAC is utilized as power supply for the zone controller 204 (e.g., connected to the DC Jack port 640 or Aux power input port 641), possible measurements (single phase or 3-phase) include: phase to neutral voltage (V), phase current (A), voltage total harmonic distortion (U%THD), current total harmonic distortion (I%THD), frequency (Hz), power factor (PF), current max demand (MD A), power max demand (MD kW), active power (kW), reactive power (kVAr), apparent power (kVA), import active energy (kWh), export active energy (kWh), total active energy (kWh), import reactive energy (kVArh), export reactive energy (kVArh), total reactive energy (kVArh).

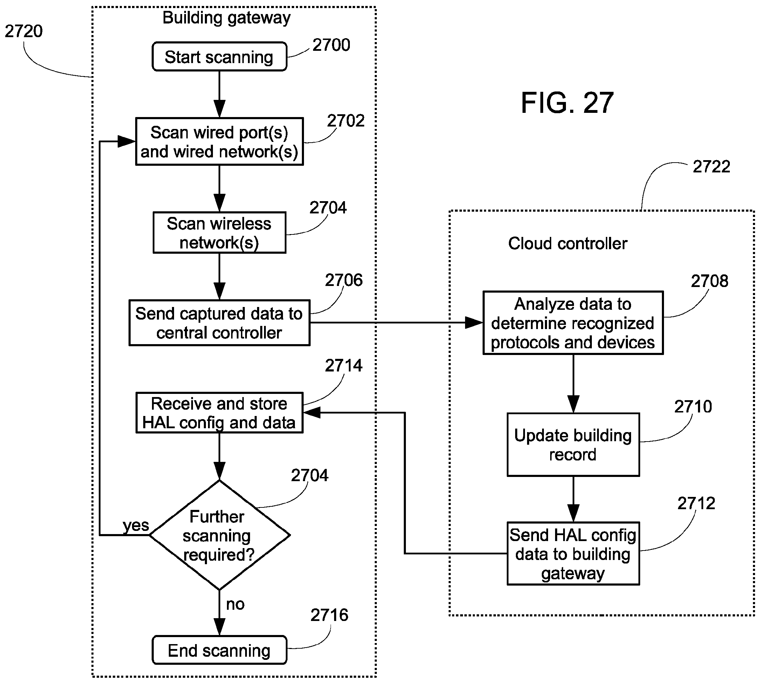

FIG. 27 shows a flowchart of a method of the building gateway 202 automatically scanning for sensor / actuator components 102, 104 that are coupled to the building gateway 202 in order to obtain required configuration data 1802 for said components 102, 104 from the cloud controller 208 according to an exemplary embodiment. Some steps 2720 of FIG. 27 may be performed by the one or more processors 1200 of the building gateway 202 along and other steps 2722 by one or more processors of the cloud controller 208 as indicated in the diagram. The steps of the flowchart are not restricted to the exact order shown, and, in other configurations, shown steps may be omitted or other intermediate steps added.

The process begins at step 2700 when the building gateway 202 begins a scanning process. In some embodiments, the scanning process is triggered by a human user during a provision process at installation of the building gateway 202 and again at later times when the human user knows that one or more additional components 102, 104, 114 have been added to the system 200. Alternatively, in other embodiments, the building gateway 202 will periodically and automatically initiate a scanning process to detect whether any newly attached components 102, 104, 114 are found.

At step 2702, the building gateway 202 scans wired ports 1206, 1208, 1212, 1218, 1220 and wired networks 112, 1600 attached thereto. The scanning process can include a variety of techniques and depends on the type of the attached wired connections, buses 1600 and networks 112. For instance, for direct, point to point connections such as RS-232, the building gateway 202 may simply monitor the port 1218 (i.e., main RS485 interface 1214 configured in a RS-232 mode) to detect whether any signals are received. For buses 2600 such as Modbus, the building gateway 202 may both monitor the bus 2600 and may further transmit a query according to the Modbus protocol requesting attached devices 102, 104, 114 to the bus to report to their presence to the building gateway 202. Similarly, on local area networks 112 such as Ethernet networks, the building gateway 202 can both monitor and transmit requests on the network 112 to discover as many attached components 102, 104, 114 as possible. MAC addresses of Ethernet frames detected on the network 112 are captured along with device type identifiers in known TCP/IP packets. Many protocols support discovery mechanisms and the building gateway 202 leverages these discovery mechanisms to gather information from the wired connections of what devices 102, 104 are present on the wired connections. Further, samples of signals and/or network traffic data can also be captured by the building gateway 202 at this step.

At step 2704, the building gateway 202 scans the wireless networks 112 in a similar manner to discover building components 102, 104, 114 present on those networks. Again, many wireless protocols support discovery mechanisms and the building gateway 202 leverages these discovery mechanisms to gather information from the wireless connections of what devices are present on the wireless connections. Further, samples of signals and/or network traffic data can also be captured by the building gateway 202 at this step.

Both of steps 2702 and 2704 may further involve the building gateway 202 polling zone controllers 204 within the building to have the zone controllers 204 report the components 102, 104, 114 or data allowing the discovery of components 102, 104, 114 coupled to each zone controller 204.

At step 2706, the building gateway 202 sends the captured data indicating component devices 102, 104, 114 found during the scanning steps of 2702 and 2704 to the cloud controller 208.

At step 2708, the cloud controller 208 analyzes the received data from the building gateway 202 in order to determine recognized components 102, 104, 114 and protocols 504 that are being utilized by the components 102, 104, 114 coupled to the building gateway 202.

At step 2710, the cloud controller 208 updates a building record being data stored in a storage database 414 of the cloud controller 208 indicating the various sensor and actuator components 102, 104 utilized in the building 106 at which the building gateway 202 is located.

At step 2712, the cloud controller 208 sends hardware abstraction layer (HAL) and other configuration data 1802 to the building gateway 202 according to the recognized components 1800 and protocols 504 determined by the cloud controller at step 2708.

At step 2714, the building gateway 202 receives the HAL configurations and associated configuration data 1802 and stores these in the storage device 1224 of the building gateway 202.

At step 2716, the building gateway 202 determines whether further scanning in required. In some embodiments, the HAL configurations and other data 1802 received from the cloud controller 208 at step 2714 will necessitate the building gateway 202 to perform additional scanning operations. For instance, the cloud controller 208 may analyse a plurality of network traffic captured by building gateway 202 and determine that one or more subnets are in use on the network 112. The cloud controller 208 may then require the building gateway 202 to perform additional scanning on that particular subnet. In another example, the cloud controller 208 may determine that one or more types of protocols 504 or sensor actuator components 102, 104 are in use but require more information in order to select or generate an appropriate HAL 1802 for the components 102, 104. In this case, the cloud controller 208 may send instructions for the building gateway 202 to perform additional scanning such as sending particular commands to certain components 102, 104 or to send particular queries on certain network 112 segments. If further scanning is required, control returns to step 2702; alternatively, if no further scanning is required, control proceeds to step 2716.

At step 2716, the scanning process is finished. From this point on, the processors 1200 of the building gateway 202 utilize the HAL configurations and associated configuration data 1802 to communicate with the various components 102, 104 coupled thereto. In other words, by the scanning and configuration process of FIG. 27, the building gateway 202 is dynamically reconfigured to support the types of the actual sensor 102 / actuator 104 and BMS 114 components that are coupled to the building gateway 202. In this way, the building gateway 202 hardware can be utilized with a large variety of building components 102, 104, 114 without requiring software for all possible building components 102, 104, 114 to be stored in advance within the gateway 202.

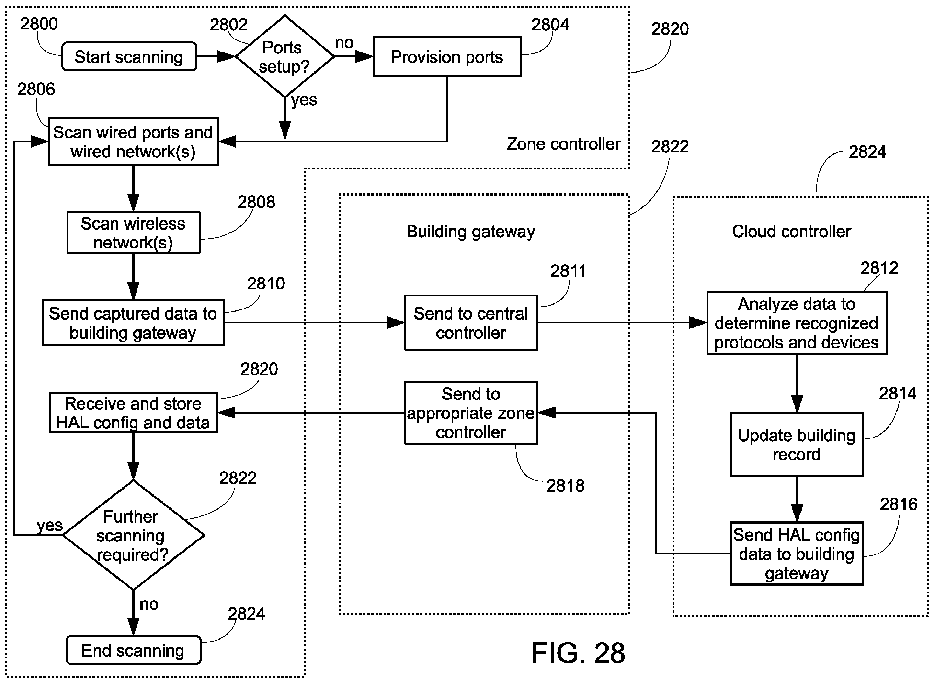

FIG. 28 shows a flowchart of a method of the zone controller 204 automatically scanning for sensor / actuator components 102, 104 that are coupled to the zone controller 204 in order to obtain required configuration data 1802 for said components 102, 104 from the cloud controller 208 according to an exemplary embodiment. Some steps 2820 of FIG. 28 may be performed by the one or more processors 600 of the zone controller 204, some steps 2822 by the one or more processors 1200 of the building gateway 202, and other steps 2824 by the one or more processors of the cloud controller 208 as indicated in the diagram. The steps of the flowchart are not restricted to the exact order shown, and, in other configurations, shown steps may be omitted or other intermediate steps added.

The flowchart of FIG. 28 has many similarities to that of FIG. 27 and therefore an abbreviated description is provided. Many of various steps 2800, 2802, 2804, 2806, 2808, 2810, 2811, 2812, 2814, 2816, 2818, 2820, 2822, 2824 indicated in the diagram as being performed by the zone controller 204 are similar to those 2700, 2702, 2704, 2708, 2710, 2712, 2714, 2704, 2716 previously described in FIG. 27 for the building gateway 202 - one difference being they are now performed by the zone controller 204. Other differences are also in the way the scanning step of 2802 is performed on the wired ports 608, 612, 624, 626, 630, 642, 662. In some embodiments, the scanning of ports 608, 612, 624, 626, 630, 642, 662 is only performed after a provisioning step 2804 has been performed by a human user or automatically by the cloud controller 208 according to known types of sensors/actuator components 102, 104 coupled to each port 608, 612, 624, 626, 630, 642, 662. This ensures that ports 608, 612, 624, 626, 630, 642, 662 and/or components 102, 104 are not damaged by driving unacceptable voltages or currents on a UIO port 630, for example.

In other embodiments, as the zone controller 204 has many more types of wired connection ports 608, 612, 624, 626, 630, 642, 662, there are a plurality of safe scanning operations available and performed at this step. For instance, each of the UIO ports 630 may be placed by the processors 600 into each of a number of available modes that will not cause damage to the port 630 such as voltage measurements, current measurements, and resistance measurements to detect and capture data from attached sensor / actuator components 102, 104.

At step 2810, the zone controller 204 sends the captured data to the cloud controller 208 via the building gateway 202. In particular, at step 2811, the building gateway 202 receives the captured data and relays it to the cloud controller 208, and, at step 2818, the building gateway 202 receives the HAL configuration and other data 1802 from the cloud controller 208 and relays it to the zone controller 204.

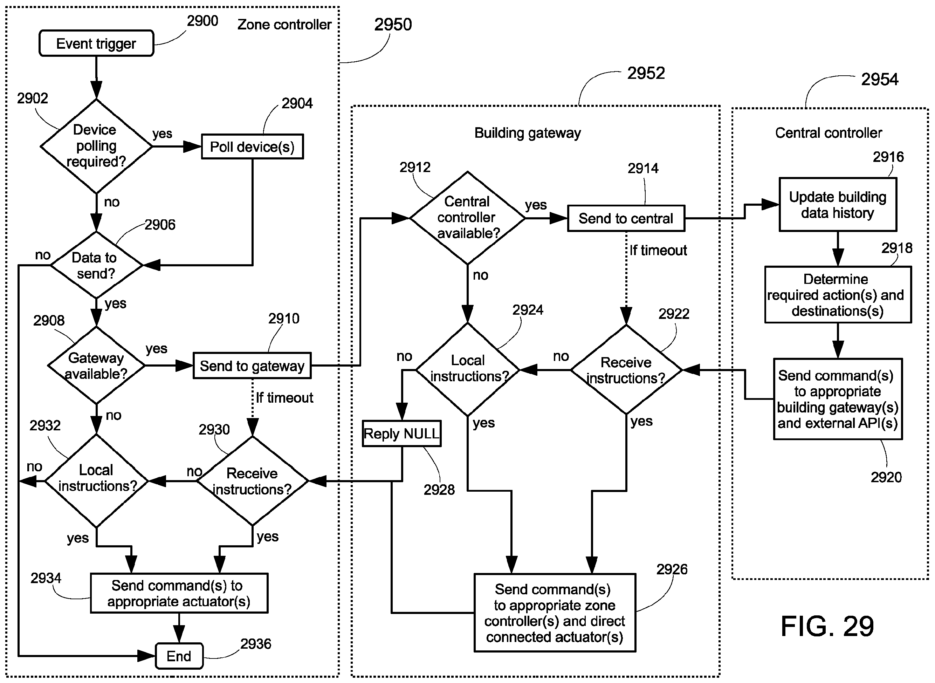

FIG. 29 shows a flowchart of a method of processing performed by the zone controller 204, building gateway 202 and cloud controller 208 of the system 200 in response to an event trigger occurring on a zone controller 204 according to an exemplary embodiment. Some steps 2950 of FIG. 29 may be performed by the one or more processors 600 of the zone controller 204, some steps 2952 by the one or more processors 1200 of the building gateway 202, and other steps 2954 by the one or more processors of the cloud controller 208 as indicated in the diagram. The steps of the flowchart are not restricted to the exact order shown, and, in other configurations, shown steps may be omitted or other intermediate steps added.

The process begins at step 2900 in response to the occurrence of an event occurrence being detected by the processors 600 of the zone controller 204. In some cases, the event trigger is the zone controller 204 detecting a sensor 102 signal changing state or value. In other cases, the event trigger is the zone controller 204 determining that a predetermined time duration has been reached or a predetermined amount of data to be sent has been reached. Any desired event trigger can be utilized in different embodiments to start the process.

At step 2902, the zone controller 204 determines whether there is any component device 102, 104, 114 polling required. For instance, the event occurrence at step 2900 may be a predetermined time duration being reached representing that a next polling interval is reached. In another situation, a change in a sensor 102 signal at a first component 102 may necessitate the zone controller polling one or more other sensor 102 / actuator 104 / BMS 114 components in order to check for changes in other values. When polling of one or more other components 102, 104, 114 is required, control proceeds to step 2904; otherwise, when no device polling is required, control proceeds to step 2906.

At step 2904, the zone controller 204 polls the one or more devices 102, 104, 114 determined at step 2902 in order to gather additional sensor / actuator 102, 104 state data.

At step 2906, the zone controller 204 determines whether a state change of one of the sensor / actuator / BMS components 102, 104, 114 coupled to the zone controller 204 has occurred or whether there is any other data to report to the cloud controller 208. For instance, either of the event trigger itself and/or the device polling at step 2904 may result in the zone controller 204 detecting that a component 102, 104, 114 coupled to the zone controller 204 has changed states. One state change example is the zone controller 204 detecting that an occupancy sensor 102 has now detected a person in a room. Another example is the zone controller 204 detecting that a temperature sensor 102 has detected a room temperature reaching a set point target. When there is data to send, control proceeds to step 2908; otherwise, if no data to send, for example in response to a polling interview being reach and no changes being detected, control in this embodiment proceeds to step 2936 to end the process.

At step 2908, the zone controller 204 determines whether a building gateway 202 is available. In this embodiment, the zone controllers 204 in a building 106 keep track of whether the building gateway 202 is properly functioning and available. In the event, the building gateway 202 is in service and has not been reported to be out of service, control proceeds to step 2910; otherwise, if the building gateway 202 is unavailable such as during a power outage at the building gateway 202 or another malfunction, control proceeds to step 2932.

At step 2910, the zone controller 204 sends information regarding the state change detected at step 2906 to the building gateway 202. If for some reason the gateway 202 goes out of service and the transmission times-out without getting any response from the building gateway 202, control proceeds to step 2930. Otherwise, assuming the gateway 202 is available, the process continues at step 2912 after the gateway 202 receives the information (which may be relayed to the gateway 202 by one or more intermediate zone controllers 204 through a mesh network 300).

At step 2912, the building gateway 202 determines whether it is in communication with the cloud controller 208 and whether the cloud controller 208 is available. When yes, control proceeds to step 2914; alternatively, when no, control proceeds to step 2926.

At step 2914, the building gateway 202 relays the information received from the zone controller 204 at step 2912 to the cloud controller 208. If for some reason the cloud controller 208 goes out of service and the transmission times-out without getting any response from the cloud controller 208, control proceeds to step 2922. Otherwise, assuming the cloud controller 208 is available, the process continues at step 2916 after the cloud controller 208 receives the information.

At step 2916, the cloud controller 208 updates the building data history. This step involves the middleware data ingestion layer 512 of FIG. 5 to update the building history stored in the database 414 of the backstage 412. In this embodiment, the cloud controller 208 stores historic data of sensor 102, actuator 104 and BMS 114 state values over time for the building 106.

At step 2918, the cloud controller 208 analyses the building data including the updated information received at step 2916 to determine required action(s) and destination(s). This step involves the optimization logic and backend engine layers 516, 514 of the stack of FIG. 5. In a simple example, a temperature in a room reaching a low threshold may trigger a heater to activate. However, for energy efficiency, the optimization logic may perform any number of enhancements and utilize any sensor 102 data for the entire building 106 to determine required action(s) and destinations. For instance, each floor has one or more CO2 sensors 102 and/or other occupancy sensors 102, the cloud controller 208 may analyse the building data and determine that there are no people in the building 106. In this case, it may not be necessary to engage the heater 1816 to activate - even though under normal operation of the building 106 the heater 1816 would always be activated when the low threshold is reached. Alternatively, only the heater 1806 for a particular floor on which the cloud controller 208 has positive occupancy data may need to be engaged. In this way, the actions required may involve any actuators 104 and/or BMS 114 at the building 106 and may be based on any sensor 102 or other state data 104 available to the cloud controller 208. In some embodiments, the cloud controller 208 has visibility of all sensor 102 information of the building 106 and therefore can made informed decisions. Likewise, different modes of operation may be utilized by the cloud controller 208 when determining the actions to take such as comfort, energy savings, super savings, etc. The destination components determined at this step correspond to the one or more actuators 104 or BMS 114 settings that need to be changed in order to carry out the determined actions.

At step 2920, the cloud controller 208 sends one or more commands to appropriate destinations to carry out the actions determined at step 2918. The appropriate destinations determined at this step include the building gateway 202 at which the actions are to be carried out and may further specify addresses of one or more zone controllers 204 and/or actuator 104 / BMS 114 components within the building 106 to allow the building gateway 202 to relay the commands. Furthermore, one or more commands may also be sent at this step to external component API servers 120 to take actions on one or more external network components 118 within the building 106. A plurality of commands may simultaneously be sent by the cloud controller 208 at this step to a plurality of different appropriate destinations. For instance, a single state change report from a particular zone controller 204 may trigger a plurality of different actuators 104 and BMS 114 state change actions to be performed and the cloud controller 208 at this step may send commands to all affected zone controllers 204 and BMS 114 to carry out the desired actions as determined by the cloud controller 208.

At step 2922, the building gateway 202 determines whether it has received a response with instructions to carry out from the cloud controller 208. When yes, control proceeds to step 2926; otherwise, when no response is received such as in the event of a timeout or failure of the cloud controller 208 or Internet 116, control proceeds to step 2924 to check for local instructions.

At step 2924, the building gateway 202 determines whether there are any local instructions applicable to the state change information as sent by the zone controller 204 at step 2910. In this embodiment, during provisioning of the gateway 202, local instructions are stored in order to replicate the default building behavior or other desired failsafe behavior to be performed in the event the cloud controller 208 is unavailable. A simple example is to turn on the bathroom lights in response to detecting a positive motion sensor 102 or occupancy sensor 102 within the bathroom. This motion sensor / occupancy sensor 102 information is beneficially sent to the cloud controller 208 and can be leveraged by the cloud controller 208 to make other decisions for energy efficiency such as determining whether or not to activate a heater 1816 or air conditioner 1814 for the floor of the building 106 on which the bathroom is located. However, even in the event the cloud controller 208 is unavailable, local instructions may be stored in the gateway 202 to ensure that the bathroom lights are still turned on automatically and immediately regardless of whether the cloud controller 208 replies with additional instructions. When local instructions for this event trigger are preconfigured in the storage device 1224 of the building gateway 202, control proceeds to step 2926 to carry them out. Alternatively, when no local instructions are available, control proceeds to step 2928.

At step 2926, the building gateway 202 sends one or more commands to appropriate zone controllers 204 and/or direct-connected actuators 104 / BMS 114 to carry out the instructions. The instructions may have been received from the cloud controller 208 at step 2922 or may be the local instructions preconfigured within the building gateway 202 at step 2924. As with step 2920, the appropriate destinations may be plural and the building gateway 202 at this step may simultaneously send a plurality of commands to different zone controllers 204 and/or direct-connected actuators 104 / BMS 114 components to carry out the instructions.

At step 2928, since there were no instructions received from the cloud controller 208 and there are no local instructions stored for this event trigger at the building gateway 202, the building gateway 202 simply replies to the zone controller 204 with a NULL message indicating no instructions are available.

At step 2930, the zone controller 204 determines whether it has received a response with instructions to carry out from the building gateway 202. When yes, control proceeds to step 2934; otherwise, when no response is received such as in the event of a timeout or failure of the building gateway 202, control proceeds to step 2932 to check for local instructions.

At step 2932, the zone controller 204 determines whether there are any local instructions applicable to the state change information as sent at step 2910. Similar to as described at step 2924 for the building gateway 202, in this embodiment, during provisioning of the zone controller 204, local instructions are stored in order to replicate the default building behavior or other desired failsafe behavior to be performed in the event the building gateway 202 or cloud controller 208 is unavailable. The same example of turning on the bathroom lights in response to detecting a positive motion sensor 102 or occupancy sensor 102 within the bathroom also applies to the zone controller 204 assuming both the sensor 102 and actuator 104 are coupled to the same zone controller 204. When local instructions for this event trigger are preconfigured in the storage device 602 of the zone controller 204, control proceeds to step 2934 to carry them out. Alternatively, when no local instructions are available, control proceeds to step 2936 to end the process.

At step 2934, the zone controller 204 sends one or more commands to appropriate actuators 104/ BMS 114 to carry out the instructions. The instructions may have been received from the building gateway 202 at step 2930 or may be the local instructions preconfigured within the zone controller 204 as retrieved at step 2932. As with steps 2926 and 2920, the appropriate destinations may be plural and the zone controller 204 at this step may simultaneously send a plurality of commands to different actuators / BMS components 104, 114 to carry out the instructions.

At step 2936, the process ends.

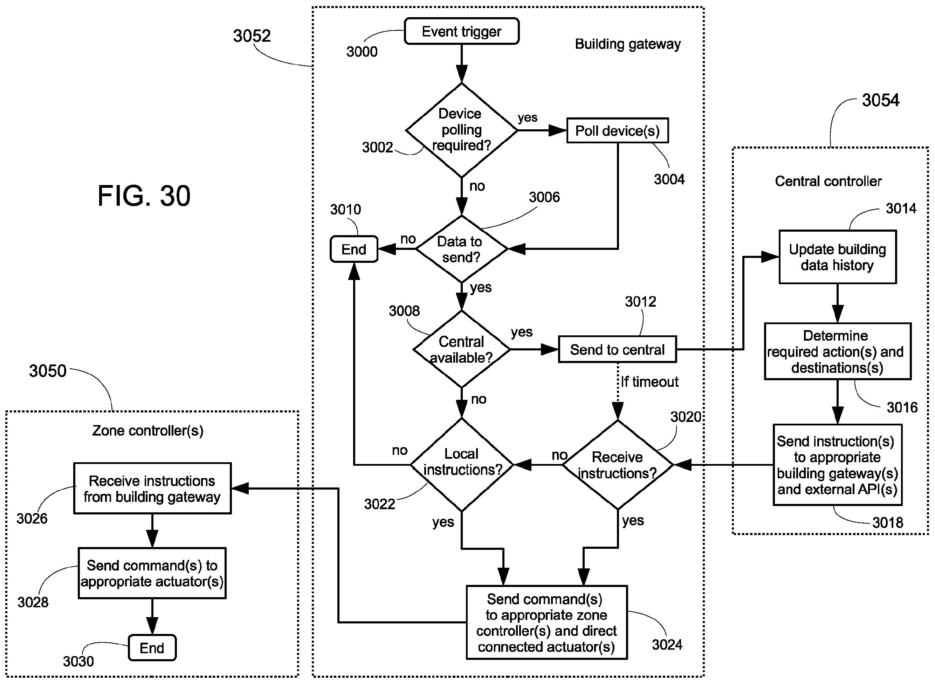

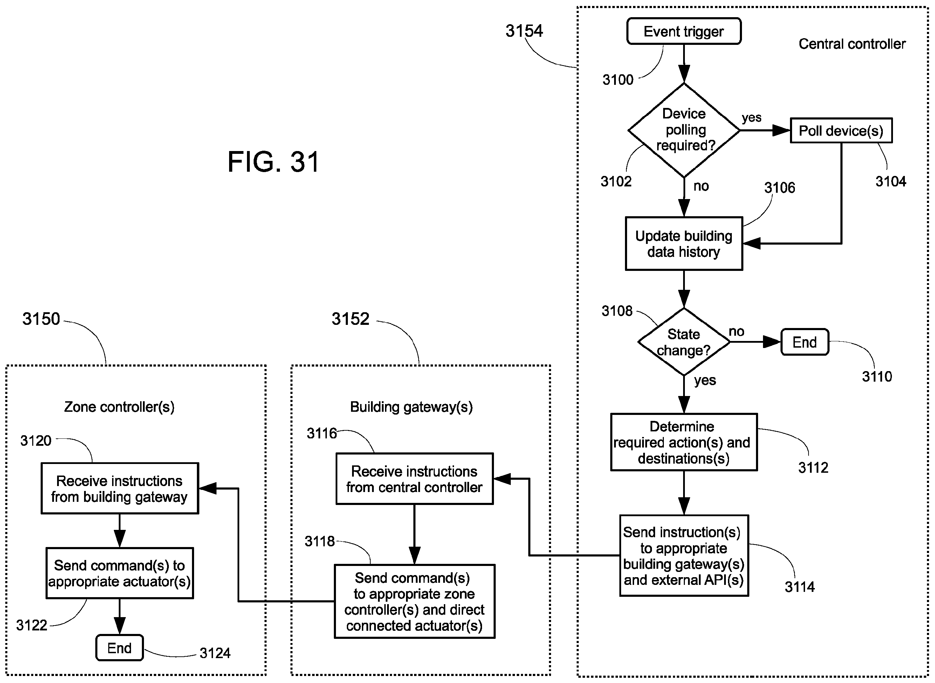

FIG. 30 shows a flowchart of a method of processing performed by the zone controller 204, building gateway 202 and cloud controller 208 of the system 200 in response to an event trigger occurring on a building gateway 202 according to an exemplary embodiment. Further, FIG. 31 shows a flowchart of a method of processing performed by the zone controller 204, building gateway 202 and cloud controller 208 of the system 200 in response to an event trigger occurring on the cloud controller 208 according to an exemplary embodiment. Some steps 3050, 3150 of FIGS. 30 and 31 may be performed by the one or more processors 600 of the zone controller 204, some steps 3052, 3152 by the one or more processors 600 of the building gateway 202, and other steps 3054, 3154 by the one or more processors of the cloud controller 208 as indicated in the diagrams. The steps of the flowcharts are not restricted to the exact order shown, and, in other configurations, shown steps may be omitted or other intermediate steps added.

The overall processes of FIGS. 30 and 31 are very similar to that illustrated in FIG. 29 and repeated description of steps 3000, 3002, 3004, 3006, 3008, 3010, 3012, 3014, 3016, 3018, 3020, 3022, 3024, 3026, 3028, 3030, 3100, 3102, 3104, 3106, 3108, 3110, 3112, 3114, 3116, 3118, 3120, 3122, 3124 with similar names and actions is omitted herein for brevity. The three flowcharts of FIGS. 29, 30, 31 differ in the device 202, 204, 208 of system 200 where the original event trigger occurs. However, regardless of where the event trigger occurs, the general process is similar in that component devices 102, 104, 114 are polled if required and data is sent to the cloud controller 208 for storage.

In some embodiments, each of the zone controllers 204, building gateways 202, and cloud controller 208 store timestamped data collected from sensors 102 and actuators 104 and other components such as BMS 114. Time stamped data is thereafter sent to the cloud controller 208 for analysis once communication links are available. In other words, when the Internet 116 goes down, the various zone controllers 204 and building gateways 202 in a building 106 continue to collect data and may communicate with each other and pass instructions based on locally configured actions in response to various detected event triggers. Once the Internet 116 link to the cloud controller 208 is restored, the various time stamped data collected at the zone controllers 204 and building gateways 202 is sent to the cloud controller 208, which may thereafter determine additional instructions as required based on the data received from the building 106.

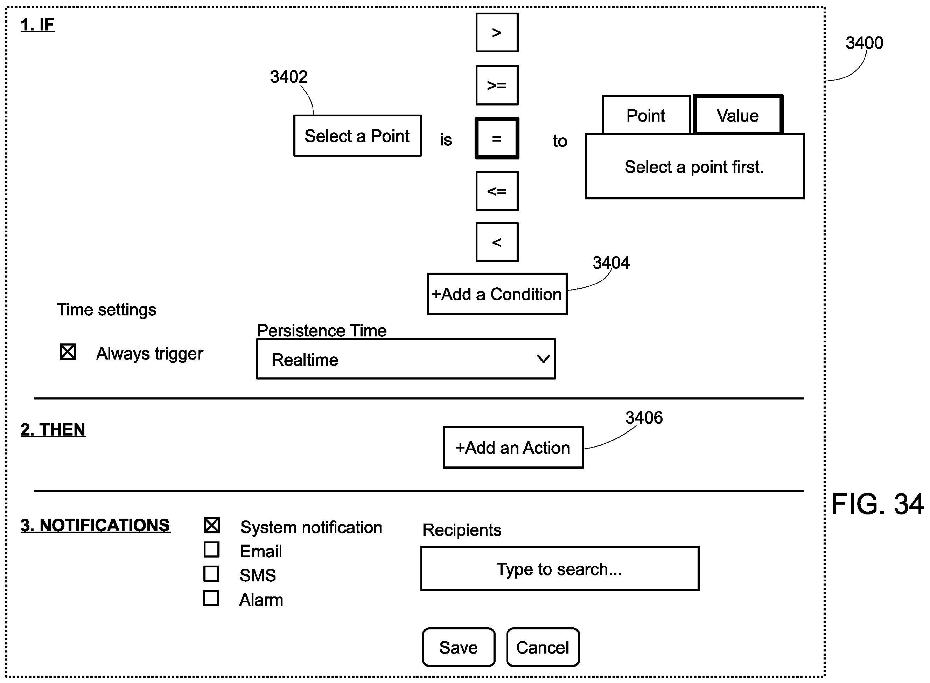

It is also worth noting that the event trigger step 3100 in FIG. 31 at the cloud controller 208 includes events that are triggered from external API servers 120 such as from third party API providers and/or manually triggered events on the FE user interface 520 on the base webBMS system 416 or the setup application. Other events include period events based on the passage of time, anomalies detected by the cloud controller 208, or one or more predetermined conditions being matched. (Further details of how users can create predetermined conditions is provided below with reference to FIG. 34.)

Instructions and actions at steps 2920, 2926, 2934, 3018, 3024, 3028, 3114, 3118, 3122 may also be executed by the zone controllers 204 / building gateways 202 based on priority of instructions. For instance, there may be situations where multiple events 2900, 3000, 3100 are triggered in rapid succession thereby starting the various processes of FIGS. 29-31. At each device, e.g., zone controller 204, building gateway 202, and cloud controller 208, decisions may be made regarding which instructions to execute first and which will override others or be ignored in view of other conflicting inputs.

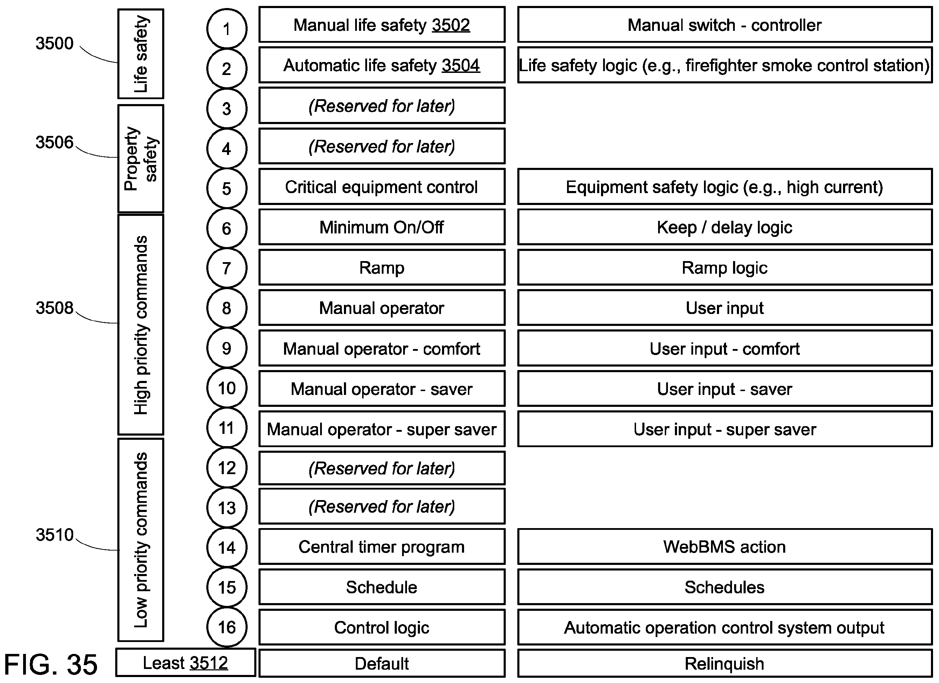

FIG. 35 illustrates a point priority diagram showing how different inputs and outputs such as sensor 102 inputs and actuator 104 outputs are ranked in a priority order according to an exemplary embodiment. In some embodiments, the zone controller 204 and/or building gateway 202 updates a sensor / actuator component 102, 104 or processes it every time a related event occurs. That means that if a sensor / actuator component 102, 104 (stored and catalogued as a "point" within the system) has a new output, the data (i.e., point) linked to the component 102, 104 output is updated. The sensor / actuator components 102, 104 (i.e., points) that should be updated are indexed in a queue within the storage device 602, 1224 of the zone controller 204 and/or building gateway 202.

As shown in FIG. 35, the zone controller 204 and/or building gateway 202 in some embodiments is able to handle multiple priorities within the point, and these priorities are split into four categories:

### 1. Life Safety Logic 3500

Life safety 3500 is the highest priority in the logic process. There are two levels. The first one and the highest is manual life safety 3502 which should be a manual switch, either digital or analog (usually close to the zone controller 204 or building gateway 202) or an emergency stop button.

The second highest level is the automatic life safety 3504, which is very similar to the manual life safety but the input is a logic and not a physical switch. for example, a firefighter's smoke control station signal.

### 2. Property Safety 3506

This logic follows the same logic as automatic life safety 3504, but a goal of this implementation is to protect the device 202, 204, 102, 104. For instance, the input is a logic of current usage. If the device 202, 204, 102, 104 is consuming high current, it should stop.

### 3. High Priority Commands 3508

This part concerns the user input and some logic that should override the existent value. In some embodiments, manual operators with energy modes are reserved for internal use and will not be set by the user. Normal manual operator, (defined as Priority 8 in BACnet) is the user input. This value could be set by the user from a user end point (e.g., via the webBASE API 416). Ramp priority is used to override the actual value using a slope to avoid high difference in intensity. For example, if there is a FAN off (0%), and there is a command to turn it on (100%) with a 25% ramp, the output will be increased by the processors by 25% every second to reach the 100%.

Minimum on/off is used also to override the actual value of the point according to an algorithm. In some embodiments, the Present_Value is ACTIVE and the time since the last change of state of the Present_Value is less than the Minimum_On_Time, then element 6 of the Priority_Array shall contain a value of ACTIVE. If the Present_Value is INACTIVE and the time since the last change of state of the Present_Value is less than the Minimum_Off_Time, then element 6 of the Priority_Array shall contain a value of INACTIVE. If neither (a) nor (b) is true, then element 6 of the Priority_Array shall contain a value of NULL.

### 4. Low Priority Commands 3510

The low priority commands 3510 concerns the logic in both the zone controller 204 / gateway controller 202 and WebBMS 416. Control logic could be a reading from a physical port, or a system output. Schedules are set by the user - they override the value set by the logic using the RTC time and calendars. Central timer program is very similar to the schedules, but the WebBMS 416 is handling the conditions and the logic. Commands are sent from the cloud.

### Least Priority 3512

The least priority 3512 is defined as default value. This value is set when none of the priorities is defined. It is defined in the configuration of the point itself.

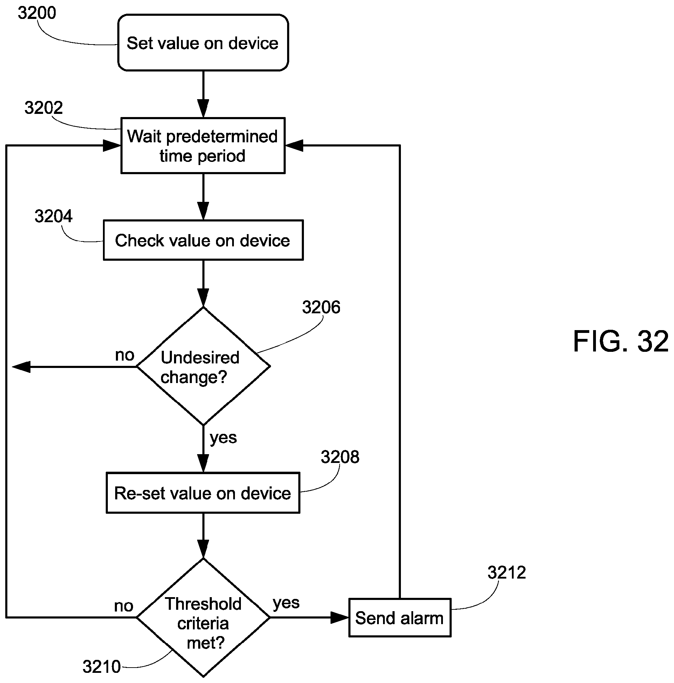

FIG. 32 shows a flowchart of a method of overriding a legacy building management system (BMS) 114 or other actuator 104 in the building 106 according to an exemplary embodiment. For description purposes, the flowchart is described as being performed by the building gateway 202; however, it is to be understood that the steps of FIGS. 32 may be performed by any combination of the one or more processors 1200, 600 of the building gateway 202, zone controller 204, and/or cloud controller 208. The steps of the flowchart are not restricted to the exact order shown, and, in other configurations, shown steps may be omitted or other intermediate steps added.

The process begins at step 3200 when a value is set on a device 104, 114. For instance, taking the example where the building gateway 202 is overriding a building BMS 114, the process may start in response to the building gateway 202 carrying out instructions received from the cloud controller 208 or carrying out local instructions stored in a storage device 1224 of the building gateway 202 in order to set an actuator 104 to a certain value. The term value in this flowchart can include setting an actuator 104 to a value of either ON or OFF, setting an actuator 104 to a value of positive or negative, setting a register value to a particular integer or other numeric value, setting a variable of a component 104, 114 to a value, etc. Any type of action to set a desired value on a component 104, 114 of the system 200 can trigger the start of the process of FIG. 32.

At step 3202, the building gateway 202 waits a predetermined time period. The predetermined time period may be a fixed duration such as X seconds or may be a dynamically changing time duration such that each time around the loop from step 3210 to 3202 increases the time duration, for example.

At step 3204, the building gateway 202 checks the value on the device 104, 114 that was adjusted at step 3200. For instance, this step can be done by the building gateway 202 simply reading back the value as set at step 3200. This may be possible when the actuator 104 or other components 114 set at step 3200 supports value readback. Alternatively, when the component 104, 114 set at step 3200 does not support readback, the building gateway 202 may query another component in the system to indirectly check the value on the device. An example of indirectly checking the value may be checking a current level through an HVAC power supply line after the power supply for the heating unit has been set at step 3200 to a disabled state.

At step 3206, the building gateway 202 determines whether there is an undesirable change to the value. For instance, an undesirable change may occur when the value set at step 3200 is no longer set when checked at step 3204. In other words, the value did not hold and was changed away from the desired value set at step 3200. In a building with a working BMS 114 and multiple components 102, 104 on a bus 1600 or local area network 112, this situation may occur when the building BMS 114 is programmed to drive behaviour of actuators 104 in the building 106 differently than the cloud controller 208 and/or building gateway 202 wishes the building to operate. For energy efficiency, the cloud controller 208 may wish to lower a temperature set point of a certain floor when there is no positive occupancy sensor 102 signals before the heating unit of the building 106 is engaged. However, the BMS 114 may be programmed to always activate the heater a fixed set point temperature. For this reason, even if the building gateway 202 shuts off the heater power supply, the BMS 114 may thereafter turn it back on. This difference in the on/off state of the heating unit is detected at step 3206 as an undesirable change. When there is an undesirable change, control proceeds to step 3208 to re-set the desired value. Alternatively, when no undesirable change has occurred, control returns to steep 3202 to wait another predetermined time period.

At step 3208, the building gateway 202 re-sets the desired value. In some embodiments, step 3208 is executed by the processors 1200 of the building gateway 202 in the same manner as step 3200.

At step 3210, the building gateway 202 determines whether a threshold criteria has been reached. The threshold criteria at this step may be a predetermined number of re-sets at step 3208. For instance, after X times of re-setting a desired value on a particular device 104, 114, the threshold criteria is determined to be met by the building gateway 202.

More complicated threshold criteria are also possible taking into account the sensor 102 data and other building 106 history such as stored at the cloud controller 208. For example, it may be the case that the BMS 114 has a schedule where the set point temperature is changed at certain times of the day such as once in the evening and once in the morning. Since this is a known change that will be driven by the BMS 114, the building gateway 202 will not determine these attempts at these specific times by the BMS to override the desired value to meet the threshold criteria. However, if the value on the device 104, 114 is changed in an undesirable way at other times of the day, this would meet the threshold criteria at step 3210 because it should not happen based on the building history and known operation of the BMS 114. Instead, it may indicate another fault or problem.

When the threshold criteria is determined by the building gateway 202 to be met, control proceeds to step 3212; otherwise, control simply returns to step 3202 to wait another predetermined time period to see if the undesirable change reoccurs.

At step 3212, an alert is set. The alerts may be sent to cloud controller 208 or directly to a mobile device 302 utilized by a human user such as building management or a vendor responsible for the system 200, for example. Examples of alerts at this step include emails, SMS messages, online indications on the front end webBMS user interface 520, and audible tones within a control centre.

Any desired type of alert and any desired destinations for alert messages may be configured by users at this step.

Other embodiments for overriding a BMS 114 besides or in addition to the process illustrated in FIG. 32 include simply monitoring for an actuator 104 command to be sent from the BMS 114. The monitoring can be performed by a zone controller 204 or building gateway 202 and in response to detecting the command, the zone controller 204 / building gateway 202 is configured to simply set the value on the device 104, 114 to be the desired value. This is a simplified version of the process of FIG. 32 involving steps 3206 and 3208. In another embodiment, a zone controller 204 or a building gateway 202 will update a schedule on the BMS 114 by sending one or commands directly to the BMS 114 to thereby change the BMS's 114 behaviour. A concrete example might be sending a command to the BMS 114 to make the BMS 114 think the current is time is different than it actually is. Date changes may also be performed such as to make the BMS 114 think the day of the week is a weekend instead of a weekday for example. These types of scheduling changes are beneficial in some cases to cause the BMS 114 to "step out of the way" by switching the BMS 114 to think the building is closed or inactive and thereby causing the BMS 114 to stop making undesirable changes to actuators 104.

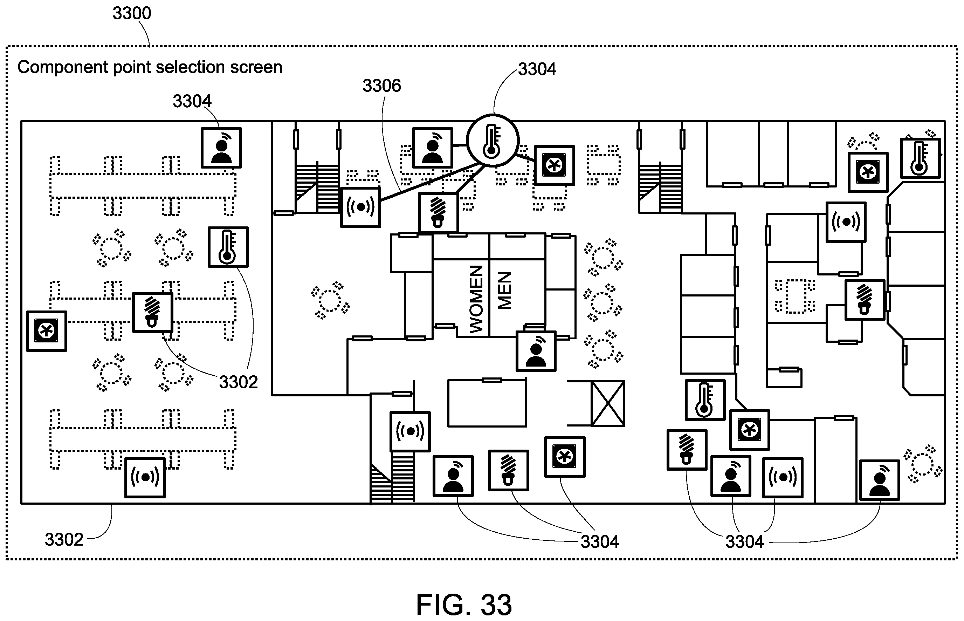

FIG. 33 illustrates a component point selection user interface screen 3300 generated and provided by the webBMS 416 front end 520 web server according to an exemplary embodiment. In this embodiment, the webBMS 416 displays configured component data points as icons 3304 on a floorplan 3302 of the building 106. Each floor 3302 of the building 106 may be separately displayed as selected by a user. On the floorplan 3302, the icons 3404 represent points located on or otherwise associated with that floor and the icons 3304 are positioned on the floorplan 3302 in correspondence with their real-world positions on the actual building floor.

The user interface screen 3300 allows a user to select and view information about each point by clocking on the icon 3304 for the component. For instance, in the example of FIG. 33, non-selected components 3304 have square boxes around them whereas a selected component 3304 as a circle icon. When selected, the user interface draws linking lines 3306 indicating to the user which other components 3304 are linked to the selected component 3304 such as via one or more user defined conditions for triggering actions.

In this embodiment, the various components and their associated icons 3304 are referred to onscreen as "points" because each of icons 3304 represents as a data point that can be monitored and/or changed by one of the zone controllers 204, building gateway 202, or cloud controller 208. The data for floorplan 3302 and the points 3304 located and/or associated therewith is stored in the database 414 of the cloud controller 208. These data points 3304 (also referred to herein as points) are the atomic data units that cannot be further divided. For instance, a single sensor component 102 may measure temperature, pressure, and on/off of a switch. Thus, this sensor 102 corresponds to three separate points 3304: one for temperature, one for pressure, and one for the setting of the on/off switch.

FIG. 34 illustrates a condition set-up screen 3400 for configuring rules for carrying out desired actions based on any points 3304 available with a building 106 according to an exemplary embodiment. Beneficially in this embodiment, users such as building managers can set up conditions for triggering actions based on any points 3304 available in the building 106 without needing to write software. The entire process is graphical and is accessed via the front end webBMS 416.

Creating a condition in this step is generally divided into three parts:
1. defining the Boolean logic for detecting the condition;
2. defining one or more actions when the condition requirement are met; and
3. defining one or more notifications to be sent when the condition requirements are met.

Defining the Boolean logic for detecting the condition firstly involves the user clicking a button 3402 to select a point 3304 from the building 106 upon which the condition is based. For instance, upon clicking the 'select a point' button 3402, the component point selection screen 3300 illustrated in FIG. 33 may be displayed allowing a user to select a particular point 3304.

UI screen 3400 further includes a plurality of operators including greater than, greater than equal to, equal to, less then equal to, and less than which can be utilized to compare a value of the selected component point with a reference. Each of the operators is a button that can be selected. The reference value can either be a specific value or another point. For instance, a temperature sensor 102 may be selected as a point 3304 and an operator may be less than and the reference may be another temperature sensor 102 or a predetermined value such as a specific temperature. Any number of conditions may be added by clicking the "Add condition" button 3404, and Boolean operators such as "AND" and "OR" can be utilized to join multiple conditions.

Time settings are configurable such as to always trigger or simply trigger one time only. Persistence times are also configurable defining when the condition should be evaluated and possible to trigger; options include in real time or after certain events or at designated times, for example.

The second part of the condition set up involves specifying the action to perform after the condition defined in the first part is met. The "Add an action' button 3406 allows any number of actions to be configured. Examples of actions include set a specific value to a specific actuator, turning on or off a specific component, power cycling a specific components, etc.

The third part of the condition set up involves specifying desired notifications to be sent after the condition defined in the first part is met. Any type of alert and associated recipient destinations for the alert message may be specified at this point. Examples include system 200 notifications on the front-end UI 520, emails, SMS messages, visual or audible alarms, etc.

To give just one concrete example of a user-defined condition, a condition may be configured to monitor a room temperature sensor 102 and to trigger an alert if the sensor 102 ever reports a value below freezing or some other threshold temperature. An alert in this manner may help building managers detect a variety of problems including a window being inadvertently left open (causing the HVAC to enter a very energy intensive "anti-freezing condition" or a burglary in progress if the condition occurs suddenly in the middle of the night when occupancy was otherwise zero. In another case, the alert may help the building management detect a simple broken temperature sensor 102 that is always reporting the wrong value. Without the alert, the building 106 may continue to operate in a very energy intensive mode due to the faulty sensor 102 information.

Other user interface (UI) screens provided by the front-end platform user interface layer 520 may include timelines of energy usage of the building 106 as an aggregate and/or on a per actuator 104 or energy utilizing system basis. Individual sensors 102 or actuator 104 data may be viewed as graphical timelines based on the timestamps added to the data by the zone controllers 204 and building gateways 202 at time of collection. Users may zoom in and zoom out of the various graphical data.

The webBMS 416 and the various stack 500 layers including optimization logic 516, backend engine 514 and frontend user UI 520 screens may also be utilized to simulate building 106 operation. As previously mentioned, the cloud controller 208 may learn the building 106 operation and behavior and schedules etc. from monitoring timestamped sensor 102 and actuator 104 data collected by the zone controllers 204 and building gateways 202 at the building. This collected data can then be utilized to create a simulated version of the building 106 that can be accessed by a building manager through the webBMS interface 416 in order to test and experiment and validate new conditions. The user interfaces between the real building 106 and the simulated version of the building 106 may generally look the same; however, the changes made by the user to the simulated version would not affect the real building 106. The simulated building 106 is also useful for training purposes of new employees where they can learn to make changes and see the effects the changes would have on energy usage, for example, in a safe environment without changing actual building 106 behaviour.

Although the invention has been described in connection with preferred embodiments, it should be understood that various modifications, additions and alterations may be made to the invention by one skilled in the art without departing from the spirit and scope of the invention. For example, although the above description of system has included a single building gateway 202 per building 106, in other embodiments, any number of additional building gateways 202 may be included in a single building 106. Providing multiple gateways 202 in a building 106 increases the coverage range and reduces the number of hops that messages from zone controllers 204 need to traverse to reach a nearest building gateway 202. Furthermore, the plurality of building gateways 202 also acts as redundant points of contact for higher reliability of the system 200. Whereas a single building gateway 202 would act as a single point of failure should the gateway 202 malfunction or become broken, a system 200 comprising multiple building gateways 202 overcomes this problem. If one of the building gateways 202 should become disabled, the various zone controllers 204 will simply communicate with cloud controller 208 via another of the building gateways 202 via the mesh network 300 and the building 106 will continue to operate with much of the cloud-based functionality intact.

Although the above description has focused on an automatic building system 200 for optimizing energy efficiency of the building 106, the present invention is equally applicable to other usages in addition to or instead of optimizing energy efficiency. For instance, building automation systems 200 disclosed herein are utilized in other embodiments for utility and sustainability applications such as real-time utility monitoring, real-time CO2e calculations, machine learning optimizations, energy baselining MoM/YoY, anomaly detection, operational optimization. Equipment and operation applications are also supported by building automation system 200 disclosed herein in some embodiments including fault detection and diagnostics, real-time alerts and bureau features, providing workflow management, performing condition-based maintenance, performing customized 'rule set', etc. In yet other embodiments, building automation systems 200 disclosed herein are utilized health and comfort applications such as indoor air quality monitoring, legionnaires (l8) disease reporting, RESET certified platform, viral load calculations, real-time confirm analysis, etc. Embodiments are also applicable to and the disclosed technology may be utilized outside of buildings 106, such as EV charging stations, parking systems, outdoor lighting, security, and all other types of commercial real-estate.

In another example modification, although it is often beneficial to utilize the cloud-based automation system 200 to compliment rather than replace a legacy building BMS 114, in other embodiments, the systems 200 disclosed herein may be utilized to replace the building BMS 114. Likewise, buildings 106 that do not include a BMS 114 can also be automated by the automation system 200 disclosed herein and there is no need to add another BMS 114. The systems 200 disclosed herein act as a building management system in some embodiments.

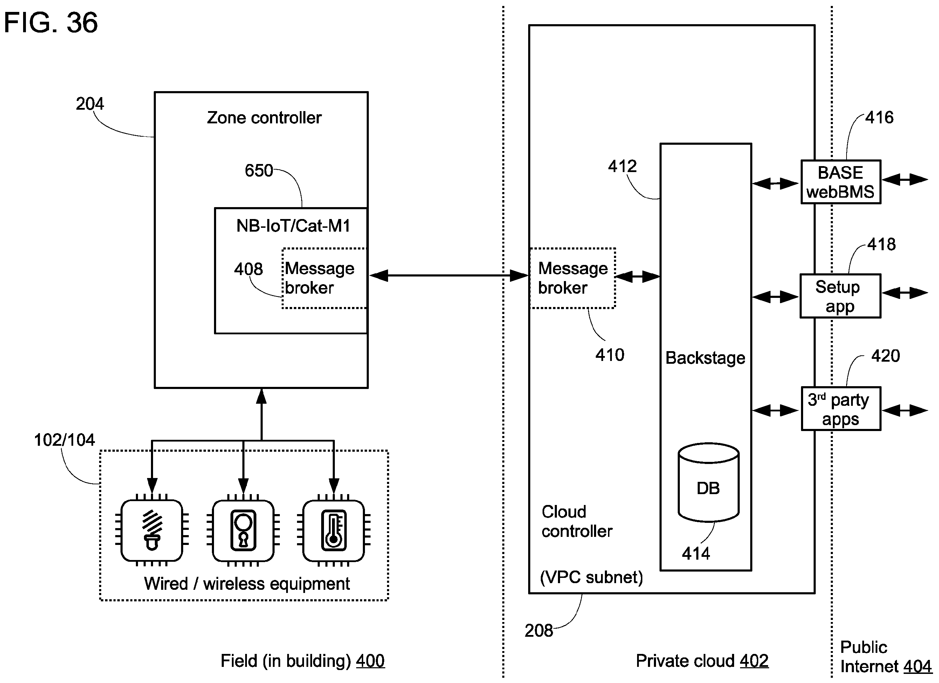

As shown in FIG. 36, it also possible in some embodiments to deploy the system 200 in a building 106 with a zone controller 204 communicating directly with the cloud controller 208 rather than through a building gateway. In some embodiments, the zone controller 204 can reach cloud controller 208 directly without using a link via a building gateway 202. For instance, as shown in FIG. 36, the zone controller 204 is enabled with Narrow Band IoT (NB-IoT) or with Cat-M1 direct link to the Private Cloud/Central Controller 208. Furthermore, the zone controller 204 and building gateway 202 are combined in a single apparatus in some embodiments.

In another example modification, although having separate physical hardware devices for the zone controller 204 and/or building gateway 202 such as illustrated above in FIGS. 8-11 and FIGS. 13-14, in other embodiments, the software for the zone controller 204 and/or building gateway 202 is instead run on a generic computer such as a desktop computer, netbook, notebook, mobile phone, etc. In some embodiments, the source code for the middleware software is written in a portable manner such that it can be compiled to be run on a variety of different hardware platforms. To give a specific example, the building gateway 202 software may be compiled into an object code for execution on the same physical computer on which the building's legacy BMS 114 is being executed. The building gateway 202 software may be completely separate from the BMS 114 software and there is no need for changes to the BMS 114 software; however, especially in cases when the computer running the BMS 114 has excess capacity, sharing the underlying physical processors 1200 and memory 1224 to run both the building gateway 202 and BMS 114 may be beneficial for cost saving purposes.

The described functionality, modules and associated flowcharts and method steps may be implemented by software executed by one or more processors operating pursuant to instructions stored on a tangible computer-readable medium such as a storage device 600, 1224 to perform the above-described functions of any or all aspects of the zone controller 204, gateway 202, and/or cloud controller 208. Examples of the tangible computer-readable medium include optical media (e.g., CD-ROM, DVD discs), magnetic media (e.g., hard drives, diskettes), and other electronically readable media such as flash storage devices and memory devices (e.g., RAM, ROM). The computer-readable medium may be local to the computer executing the instructions, or may be remote to this computer such as when coupled to the computer via a computer network such as the Internet. The processors may be included in a general-purpose or specific-purpose computer that becomes the zone controller 204, gateway 202, and/or cloud controller 208 or any of the above-described modules as a result of executing the instructions.

In other embodiments, rather than being software modules executed by one or more processors, the described functionality, modules and associated flowcharts may be implemented as hardware modules configured to perform the above-described functions. Examples of hardware modules include combinations of logic gates, integrated circuits, field programmable gate arrays, and application specific integrated circuits, and other analog and digital circuit designs.

Functions of single modules may be separated into multiple units, or the functions of multiple modules may be combined into a single unit. Unless otherwise specified, features described may be implemented in hardware or software according to different design requirements. In addition to a dedicated physical computing device, the word "server" may also mean a service daemon on a single computer, virtual computer, or shared physical computer or computers, for example. All combinations and permutations of the above described features and embodiments may be utilized in conjunction with the invention.

## Claims

1. A method of building automation comprising:
transmitting collected data from a communication interface included on one or more on-premises equipment located on-premises at a building (106) to a cloud controller (208) via an external network (116), the cloud controller (208) being located outside of the building (106) and coupled to the on-premises equipment via the external network (116);
analysing the collected data by the cloud controller (208) in order to determine one or more components that are coupled to the on-premises equipment via the communication interface;
updating, by the cloud controller (208), a building record stored in a data storage device to store a record of the one or more components determined to be coupled to the on-premises equipment; and
transmitting configuration data by the cloud controller (208) to the on-premises equipment according to the one or more components determined to be coupled to the on-premises equipment; and
utilizing the configuration data by the on-premises equipment to dynamically reconfigure the communication interface to enable the on-premises equipment to communicate with the one or more components determined to be coupled to the on-premises equipment and performing at least one of receiving information from the one or more components and sending information to the one or more components, and **characterized in that** at least one of the on-premise equipment further comprises locally stored logic comprising one or more predefined rules to provide control over one or more of the components separately from the cloud controller (208).

2. The method of claim 1, further comprising:
determining by the cloud controller (208) a type of the one or more components according to the collected data;
generating the configuration data by the cloud controller (208) according to the type; and
dynamically reconfiguring, by the on-premises equipment, the communication interface by dynamically reconfiguring software running on the on-premises equipment according to the configuration data received from the cloud controller (208) thereby enabling the on-premises equipment to communicate with the type of the one or more components.

3. The method of any one of claims 1 to 2, further comprising:
determining a required supply voltage of the one or more components by the cloud controller (208) according to the collected data;
generating the configuration data by the cloud controller (208) to include an indication of the required supply voltage; and
dynamically reconfiguring, by the on-premises equipment, the communication interface by dynamically reconfiguring a voltage supply pin of the communication interface according to the configuration data received from the cloud controller (208) thereby enabling the one or more components to receive the required supply voltage from the voltage supply pin.

4. The method of any one of claims 1 to 3, wherein:
the communication interface is an input output port that has a plurality of dynamically configurable modes; and
the method further comprises dynamically reconfiguring the communication interface by dynamically configuring a mode of the input output port by the on-premises equipment to be one of the dynamically configurable modes according to the configuration data received from the cloud controller (208).

5. The method of claim 4, wherein the dynamically configurable modes at least include a voltage input mode, a voltage output mode, a current input mode, and a current output mode.

6. The method of any one of claims 4 to 5, wherein the dynamically configurable modes at least include a digital input mode and a resistance temperature detector mode.

7. The method of any one of claims 1 to 6, wherein:
the on-premises equipment includes a plurality of pieces of on-premises equipment;
each piece of the on-premises equipment includes a respective communication interface; and
the method further comprises:
automatically collecting by each piece of on-premises equipment a plurality of respective collected data from the respective communication interface;
transmitting, by each piece of on-premises equipment, the respective collected data collected at that piece of on-premises equipment to the cloud controller (208) via the external network (116);
analysing, by the cloud controller (208), the respective collected data received from each piece of on-premises equipment in order to determine one or more respective components that are coupled to each piece of on-premises equipment;
updating, by the cloud controller (208), the building record stored in the data storage device to store a record of the one or more respective components determined to be coupled to each piece of on-premises equipment;
transmitting, by the cloud controller (208), one or more respective configuration data to each piece of on-premises equipment according to the one or more respective components determined to be coupled to that piece of on-premises equipment; and
utilizing, by each piece of on-premises equipment, the respective configuration data received from the cloud controller (208) to dynamically reconfigure the respective communication interface of that piece of on-premises equipment to enable that piece of on-premises equipment to communicate with the one or more components determined to be coupled to that piece of on-premises equipment and performing at least one of receiving information from the one or more respective components and sending information to the one or more respective components coupled to that piece of on-premises equipment.

8. The method of any one of claims 1 to 7, further comprising:
sending, by the on-premises equipment, information to a particular one of the components in order to a set a value on the particular one of the components;
a predetermined time period after setting the value on the particular one of the components, automatically receiving information from the particular one of the components and checking the value by the on-premises equipment and determining whether there has been an undesired change of the value; and
in response to determining there has been an undesired change of the value, sending information by the on-premises equipment to the particular one of the components in order to re-set the value on the particular one of the components.

9. The method of claim 8, further comprising:
in response to determining there has been an undesired change of the value, determining by the on-premises equipment whether a threshold criteria has been met; and
in response to determining the threshold criteria has been met, sending an alarm message to the cloud controller (208) by the on-premises equipment.

10. The method of any one of claims 1 to 9, further comprising:
receiving by the cloud controller (208) a plurality of timestamped data from the on-premises equipment according to one or more sensors at the building (106);
analysing the timestamped data by the cloud controller (208) in order to detect an occurrence of a condition;
in response to detecting the occurrence of the condition, sending one or more instructions by the cloud controller (208) to the on-premises equipment to set a value on an actuator at the building (106); and
setting the value on the actuator at the building (106) by the on-premises equipment according to the instructions received from the cloud controller (208).

11. The method of claim 10, further comprising setting the value on the actuator by the on-premises equipment sending instructions to an intermediate piece of on-premises equipment to which the actuator is coupled, the intermediate piece of on-premises equipment thereafter transmitting instructions to set the value on the actuator.

12. The method of any one of claims 10 to 11, providing by the cloud controller (208) a graphical front end user interface that allows a user to create the condition without requiring the user to write software.

13. The method of any one of claims 10 to 12, further comprising, in response to detecting the occurrence of the condition, sending one or more instructions by the cloud controller (208) to an external server located outside of the building (106) via the external network (116) to set a value on an external network actuator at the building, wherein the external network actuator is in communication with the external server via the external network (116).

14. The method of any one of claims 1 to 13, further comprising:
storing by the on-premises equipment a plurality of sensor data according to one or more sensors at the building (106);
when communications with the cloud controller (208) are possible, sending the sensor data by the on-premises equipment to the cloud controller (208) via the external network (116); and
when communications with the cloud controller (208) are not possible, determining one or more local instructions stored at the on-premises equipment applicable to the sensor data, and sending one or more commands by the on-premises equipment to one or more actuators at the building according to the one or more local instructions applicable to the sensor data.

15. The method of any one of claims 1 to 14, wherein the one or more components that are coupled to the communication interface of the on-premises equipment include a combination of sensor components and actuator components.

16. A building automation system comprising:
one or more on-premises equipment located on-premises at a building (106); and
a cloud controller (208) located outside of the building (106) and coupled to the on-premises equipment via an external network (116):
the on-premises equipment including a communication interface, wherein the building automation system is configured to perform the steps of the method of building automation according to any one of claims 1 to 15.

17. A non-transitory processor-readable medium comprising processor executable instructions that when executed by one or more processors cause the one or more processors to perform all steps of the method of any one of claims 1 to 15.

## Patentansprüche

1. Verfahren zur Gebäudeautomatisierung, umfassend:
Übertragen erfasster Daten von einer Kommunikationsschnittstelle, die in einer oder mehreren Vor-Ort-Ausrüstungen, die sich vor Ort in einem Gebäude (106) befinden, enthalten ist, über ein externes Netzwerk (116) an eine Cloud-Steuerung (208), wobei sich die Cloud-Steuerung (208) außerhalb des Gebäudes (106) befindet und über das externe Netzwerk (116) mit der Vor-Ort-Ausrüstung gekoppelt ist;
Analysieren der erfassten Daten durch die Cloud-Steuerung (208), um eine oder mehrere Komponenten zu bestimmen, die über die Kommunikationsschnittstelle mit der Vor-Ort-Ausrüstung gekoppelt sind;
Aktualisieren eines auf einer Datenspeichervorrichtung gespeicherten Gebäudedatensatzes durch die Cloud-Steuerung (208), um einen Datensatz der einen oder mehrerer Komponenten zu speichern, von denen bestimmt wurde, dass sie mit der Vor-Ort-Ausrüstung gekoppelt sind; und
Übertragen von Konfigurationsdaten durch die Cloud-Steuerung (208) an die Vor-Ort-Ausrüstung entsprechend der einen oder mehreren Komponenten, von denen bestimmt wurde, dass sie mit der Vor-Ort-Ausrüstung gekoppelt sind; und
Verwenden der Konfigurationsdaten durch die Vor-Ort-Ausrüstung zum dynamischen Neukonfigurieren der Kommunikationsschnittstelle, um die Vor-Ort-Ausrüstung in die Lage zu versetzen, mit der einen oder den mehreren Komponenten zu kommunizieren, von denen bestimmt wurde, dass mit der Vor-Ort-Ausrüstung gekoppelt sind, und Ausführen von mindestens einem von Empfangen von Informationen von der einen oder den mehreren Komponenten und Senden von Informationen an die eine oder mehreren Komponenten, und
**dadurch gekennzeichnet, dass** mindestens eine der Vor-Ort-Ausrüstung ferner eine lokal gespeicherte Logik umfasst, die eine oder mehrere vordefinierte Regeln umfasst, um die Kontrolle über eine oder mehrere der Komponenten getrennt von der Cloud-Steuerung (208) bereitzustellen.

2. Verfahren nach Anspruch 1, ferner umfassend:
Bestimmen eines Typs der einen oder mehreren Komponenten durch die Cloud-Steuerung (208) entsprechend den erfassten Daten;
Erzeugen der Konfigurationsdaten durch die Cloud-Steuerung (208) entsprechend dem Typ; und dynamisches Neukonfigurieren der Kommunikationsschnittstelle durch die Vor-Ort-Ausrüstung durch dynamisches Neukonfigurieren von Software, die auf der Vor-Ort-Ausrüstung ausgeführt wird, entsprechend den von der Cloud-Steuerung (208) empfangenen Konfigurationsdaten, wodurch die Vor-Ort-Ausrüstung in die Lage versetzt wird,
mit dem Typ der einen oder mehreren Komponenten zu kommunizieren.

3. Verfahren nach einem der Ansprüche 1 bis 2, ferner umfassend:
Bestimmen einer erforderlichen Versorgungsspannung der einen oder mehrerer Komponenten durch die Cloud-Steuerung (208) entsprechend den erfassten Daten;
Erzeugen der Konfigurationsdaten durch die Cloud-Steuerung (208), um eine Angabe der erforderlichen Versorgungsspannung zu umfassen; und
dynamisches Neukonfigurieren der Kommunikationsschnittstelle durch die Vor-Ort-Ausrüstung durch dynamisches Neukonfigurieren eines Spannungsversorgungspins der Kommunikationsschnittstelle entsprechend den von der Cloud-Steuerung (208) empfangenen Konfigurationsdaten, wodurch die eine oder mehreren Komponenten in die Lage versetzt werden, die erforderliche Versorgungsspannung von dem Spannungsversorgungspin zu erhalten.

4. Verfahren nach einem der Ansprüche 1 bis 3, wobei:
die Kommunikationsschnittstelle ein Eingangs-/Ausgangsport ist, der eine Vielzahl dynamisch konfigurierbarer Modi aufweist; und
das Verfahren ferner das dynamische Neukonfigurieren der Kommunikationsschnittstelle umfasst, indem ein Modus des Eingangs-/Ausgangsports durch die Vor-Ort-Ausrüstung dynamisch dazu konfiguriert wird, einer der dynamisch konfigurierbaren Modi entsprechend den von der Cloud-Steuerung (208) empfangenen Konfigurationsdaten zu sein.

5. Verfahren nach Anspruch 4, wobei die dynamisch konfigurierbaren Modi zumindest einen Spannungseingangsmodus, einen Spannungsausgangsmodus, einen Stromeingangsmodus und einen Stromausgangsmodus umfassen.

6. Verfahren nach einem der Ansprüche 4 bis 5, wobei die dynamisch konfigurierbaren Modi mindestens einen digitalen Eingangsmodus und einen Widerstandstemperaturdetektormodus umfassen.

7. Verfahren nach einem der Ansprüche 1 bis 6, wobei:
die Vor-Ort-Ausrüstung eine Vielzahl von Geräten der Vor-Ort-Ausrüstung umfasst;
jedes Gerät der Vor-Ort-Ausrüstung eine jeweilige Kommunikationsschnittstelle umfasst; und das Verfahren ferner umfasst:
automatisches Erfassen einer Vielzahl von jeweils erfassten Daten von der jeweiligen Kommunikationsschnittstelle durch jedes Gerät der Vor-Ort-Ausrüstung;
Übertragen durch jedes Gerät der Vor-Ort-Ausrüstung der jeweiligen erfassten Daten, die an diesem Gerät der Vor-Ort-Ausrüstung erfasst wurden, über das externe Netzwerk (116) an die Cloud-Steuerung (208);
Analysieren der jeweiligen erfassten Daten, die von jedem Gerät der Vor-Ort-Ausrüstung empfangen wurden, durch die Cloud-Steuerung (208), um eine oder
mehrere jeweilige Komponenten zu bestimmen, die mit jedem Gerät der Vor-Ort-Ausrüstung gekoppelt sind;
Aktualisieren des auf der Datenspeichervorrichtung gespeicherten Gebäudedatensatzes durch die Cloud-Steuerung (208), um einen Datensatz der einen oder mehrerer jeweiligen Komponenten zu speichern, von denen bestimmt wurde, dass sie mit jedem Gerät der Vor-Ort-Ausrüstung gekoppelt sind;
Übertragen von einem oder mehreren jeweiligen Konfigurationsdaten durch die Cloud-Steuerung (208) an jedes Gerät der Vor-Ort-Ausrüstung entsprechend der einen oder mehreren jeweiligen Komponenten, von denen bestimmt wurde,
dass sie mit diesem Gerät der Vor-Ort-Ausrüstung gekoppelt sind; und
Verwenden der jeweiligen, von der Cloud-Steuerung (208) empfangenen Konfigurationsdaten durch jedes Gerät der Vor-Ort-Ausrüstung zum dynamischen Neukonfigurieren der jeweiligen Kommunikationsschnittstelle dieses Geräts der Vor-Ort-Ausrüstung, um dieses Gerät der Vor-Ort-Ausrüstung in die Lage zu versetzen, mit der einen oder den mehreren Komponenten zu kommunizieren, von denen bestimmt wurde, dass mit diesem Gerät der Vor-Ort-Ausrüstung gekoppelt sind, und Ausführen von mindestens einem von Empfangen von Informationen von der einen oder den mehreren jeweiligen Komponenten und Senden von Informationen an die eine oder mehreren jeweiligen Komponenten, die mit diesem Gerät der Vor-Ort-Ausrüstung gekoppelt sind.

8. Verfahren nach einem der Ansprüche 1 bis 7, ferner umfassend:
Senden von Informationen durch die Vor-Ort-Ausrüstung an eine bestimmte der Komponenten, um einen Wert für die bestimmte der Komponenten festzulegen;
nach einem vorbestimmten Zeitraum nach dem Festlegen des Werts für die bestimmte der Komponenten, automatisches Empfangen von Informationen von der bestimmten der Komponenten und Überprüfen des Werts durch die Vor-Ort-Ausrüstung und Bestimmen, ob eine unerwünschte Änderung des Werts stattgefunden hat; und
als Reaktion auf das Bestimmen einer unerwünschten Änderung des Werts, Senden von Informationen durch die Vor-Ort-Ausrüstung an die bestimmte der Komponenten, um den Wert für die bestimmte der Komponenten zurückzusetzen.

9. Verfahren nach Anspruch 8, ferner umfassend:
als Reaktion auf das Bestimmen, dass eine unerwünschte Änderung des Wertes stattgefunden hat, Bestimmen durch die Vor-Ort-Ausrüstung, ob ein Schwellenwertkriterium erfüllt wurde; und
als Reaktion auf das Bestimmen, dass das Schwellenwertkriterium erfüllt wurde, Senden einer Alarmmeldung an die Cloud-Steuerung (208) durch die Vor-Ort-Ausrüstung.

10. Verfahren nach einem der Ansprüche 1 bis 9, ferner umfassend:
Empfangen einer Vielzahl von zeitgestempelten Daten von der Vor-Ort-Ausrüstung durch die Cloud-Steuerung (208) entsprechend einem oder mehreren Sensoren im Gebäude (106);
Analysieren der zeitgestempelten Daten durch die Cloud-Steuerung (208), um das Auftreten eines Zustands zu erkennen;
als Reaktion auf das Erkennen des Auftretens des Zustands, Senden einer oder mehrerer Anweisungen durch die Cloud-Steuerung (208) an die Vor-Ort-Ausrüstung, um einen Wert an einem Aktuator im Gebäude (106) festzulegen; und
Festlegen des Werts an dem Aktuator im Gebäude (106) durch die Vor-Ort-Ausrüstung entsprechend den von der Cloud-Steuerung (208) empfangenen Anweisungen.

11. Verfahren nach Anspruch 10, das ferner das Festlegen des Werts an dem Aktuator umfasst, indem die Vor-Ort-Ausrüstung Anweisungen an ein Zwischengerät der Vor-Ort-Ausrüstung sendet, mit dem der Aktuator gekoppelt ist, wobei das Zwischengerät der Vor-Ort-Ausrüstung anschließend Anweisungen zum Festlegen des Werts an dem Aktuator überträgt.

12. Verfahren nach einem der Ansprüche 10 bis 11, wobei die Cloud-Steuerung (208) eine grafische Frontend-Benutzerschnittstelle bereitstellt, die es einem Benutzer ermöglicht, den Zustand zu erstellen, ohne dass der Benutzer Software schreiben muss.

13. Verfahren nach einem der Ansprüche 10 bis 12, ferner umfassend, als Reaktion auf das Erkennen des Auftretens des Zustands, das Senden einer oder mehrerer Anweisungen durch die Cloud-Steuerung (208) an einen externen Server außerhalb des Gebäudes (106) über das externe Netzwerk (116), um einen Wert an einem externen Netzwerkaktuator im Gebäude festzulegen, wobei der externe Netzwerkaktuator über das externe Netzwerk (116) mit dem externen Server in Verbindung steht.

14. Verfahren nach einem der Ansprüche 1 bis 13, ferner umfassend:
Speichern einer Vielzahl von Sensordaten durch die Vor-Ort-Ausrüstung entsprechend einem oder mehreren Sensoren im Gebäude (106);
wenn eine Kommunikation mit der Cloud-Steuerung (208) möglich ist, Senden der Sensordaten durch die Vor-Ort-Ausrüstung an die Cloud-Steuerung (208) über das externe Netzwerk (116); und
wenn eine Kommunikation mit der Cloud-Steuerung (208) nicht möglich ist, Bestimmen einer oder mehrerer lokaler Anweisungen, die in der Vor-Ort-Ausrüstung gespeichert sind und auf die Sensordaten anwendbar sind, und Senden eines oder mehrerer Befehle durch die Vor-Ort-Ausrüstung an einen oder mehrere Aktuatoren im Gebäude entsprechend der einen oder mehreren lokalen Anweisungen, die auf die Sensordaten anwendbar sind.

15. Verfahren nach einem der Ansprüche 1 bis 14, wobei die eine oder mehreren Komponenten, die mit der Kommunikationsschnittstelle der Vor-Ort-Ausrüstung gekoppelt sind, eine Kombination aus Sensorkomponenten und Aktuatorkomponenten umfassen.

16. Gebäudeautomatisierungssystem, umfassend:
eine oder mehrere Vor-Ort-Ausrüstungen, die sich vor Ort in einem Gebäude (106) befinden; und
eine Cloud-Steuerung (208), die sich außerhalb des Gebäudes (106) befindet und über ein externes Netzwerk (116) mit der Vor-Ort-Ausrüstung gekoppelt ist;
wobei die Vor-Ort-Ausrüstung eine Kommunikationsschnittstelle umfasst, wobei das Gebäudeautomatisierungssystem dazu konfiguriert ist, die Schritte des Verfahrens zur Gebäudeautomatisierung nach einem der Ansprüche 1 bis 15 auszuführen.

17. Nicht-transitorisches, prozessorlesbares Medium, das prozessorausführbare Anweisungen umfasst, die bei Ausführung durch den einen oder die mehreren Prozessoren den einen oder die mehreren Prozessoren veranlassen, alle Schritte des Verfahrens nach einem der Ansprüche 1 bis 15 auszuführen.

## Revendications

1. Procédé d'automatisation de bâtiment comprenant :
transmettre les données collectées à partir d'une interface de communication incluse sur un ou plusieurs équipements sur site situés sur site dans un bâtiment (106) à un contrôleur cloud (208) via un réseau externe (116), le contrôleur cloud (208) étant situé à l'extérieur du bâtiment (106) et couplé à l'équipement sur site via le réseau externe (116) ;
analyser les données collectées par le contrôleur cloud (208) afin de déterminer un ou plusieurs composants qui sont couplés à l'équipement sur site via l'interface de communication ;
mettre à jour, par le contrôleur cloud (208), un enregistrement de bâtiment stocké dans un dispositif de stockage de données pour stocker un enregistrement de l'un ou plusieurs composants déterminés à être couplés à l'équipement sur site ; et
transmettre des données de configuration par le contrôleur cloud (208) à l'équipement sur site selon l'un ou plusieurs composants déterminés comme étant couplés à l'équipement sur site ; et
utiliser les données de configuration par l'équipement sur site pour reconfigurer dynamiquement l'interface de communication pour permettre à l'équipement sur site de communiquer avec l'un ou plusieurs composants déterminés pour être couplés à l'équipement sur site et effectuer au moins un parmi recevoir des informations à partir du ou des composants et envoyer des informations à l'un ou plusieurs composants, et **caractérisé en ce qu'**au moins un des équipements sur site comprend en outre une logique stockée localement comprenant une ou plusieurs règles prédéfinies pour fournir contrôle sur un ou plusieurs des composants séparément du contrôleur cloud (208).

2. Procédé selon la revendication 1, comprenant en outre :
déterminer par le contrôleur cloud (208) un type de l'un ou plusieurs composants en fonction des données collectées ;
générer les données de configuration par le contrôleur cloud (208) selon le type ; et reconfigurer dynamiquement, par l'équipement sur site, l'interface de communication en reconfigurant dynamiquement le logiciel s'exécutant sur l'équipement sur site selon les données de configuration reçues du contrôleur cloud (208), permettant ainsi à l'équipement sur site de communiquer avec le type de l'un ou plusieurs composants.

3. Procédé selon l'une quelconque des revendications 1 à 2, comprenant en outre :
déterminer une tension d'alimentation requise de l'un ou plusieurs composants par le contrôleur cloud (208) en fonction des données collectées ;
générer les données de configuration par le contrôleur cloud (208) pour inclure une indication de la tension d'alimentation requise ; et
reconfigurer dynamiquement, par l'équipement sur site, l'interface de communication en reconfigurant dynamiquement une broche d'alimentation en tension de l'interface de communication en fonction des données de configuration reçues du contrôleur cloud (208), permettant ainsi à l'un ou plusieurs composants de recevoir la tension d'alimentation requise de la broche d'alimentation en tension.

4. Procédé selon l'une quelconque des revendications 1 à 3, dans lequel :
l'interface de communication est un port d'entrée - de sortie qui a une pluralité de modes configurables dynamiquement ; et
le procédé comprend en outre reconfigurer dynamiquement l'interface de communication en configurant dynamiquement un mode du port d'entrée - de sortie par l'équipement sur site pour être l'un des modes configurables dynamiquement selon les données de configuration reçues du contrôleur cloud (208).

5. Procédé selon la revendication 4, dans lequel les modes configurables dynamiquement comprennent au moins un mode d'entrée de tension, un mode de sortie de tension, un mode d'entrée de courant et un mode de sortie de courant.

6. Procédé selon l'une quelconque des revendications 4 à 5, dans lequel les modes configurables dynamiquement comprennent au moins un mode d'entrée numérique et un mode détecteur de température à résistance.

7. Procédé selon l'une quelconque des revendications 1 à 6, dans lequel :
l'équipement sur site comprend une pluralité de pièces d'équipement sur site ; chaque pièce de l'équipement sur site comprend une interface de communication respective ; et le procédé comprend en outre :
collecter automatiquement par chaque équipement sur site une pluralité de données collectées respectives à partir de l'interface de communication respective ;
transmettre, par chaque équipement sur site, les données collectées respectives collectées sur cet équipement sur site au contrôleur cloud (208) via le réseau externe (116) ;
analyser, par le contrôleur cloud (208), les données collectées respectives reçues de chaque équipement sur site afin de déterminer un ou plusieurs composants respectifs qui sont couplés à chaque équipement sur site ;
mettre à jour, par le contrôleur cloud (208), l'enregistrement de bâtiment stocké dans le dispositif de stockage de données pour stocker un enregistrement du ou des composants respectifs déterminés à être couplés à chaque pièce d'équipement sur site ;
transmettre, par le contrôleur cloud (208), une ou plusieurs données de configuration respectives à chaque pièce d'équipement sur site selon l'un ou
plusieurs composants respectifs déterminés comme étant couplés à cette pièce d'équipement sur site ; et
utiliser, par chaque pièce d'équipement sur site, les données de configuration respectives reçues du contrôleur cloud (208) pour reconfigurer dynamiquement l'interface de communication respective de cette pièce d'équipement sur site pour permettre à cette pièce d'équipement sur site de communiquer avec l'un ou plusieurs composants déterminés pour être couplés à cette pièce d'équipement sur site et effectuer au moins un parmi recevoir des informations à partir du ou des composants respectifs et envoyer des informations à l'un ou plusieurs composants respectifs couplés à cette pièce d'équipement sur site.

8. Procédé selon l'une quelconque des revendications 1 à 7, comprenant en outre :
envoyer, par l'équipement sur site, des informations à un composant particulier parmi les composants afin de régler une valeur sur le composant particulier parmi les composants ;
une période de temps prédéterminée après avoir réglé la valeur du composant particulier parmi les composants, recevoir automatiquement des informations du composant particulier parmi les composants et vérifier la valeur par l'équipement sur site et déterminer s'il y a eu un changement indésirable de la valeur ; et
en réponse à déterminer qu'il y a eu un changement indésirable de la valeur, envoyer des informations par l'équipement sur site au composant particulier parmi les composants afin de réinitialiser la valeur sur le composant particulier parmi les composants.

9. Procédé selon la revendication 8, comprenant en outre :
en réponse à déterminer qu'il y a eu un changement indésirable de la valeur, déterminer par l'équipement sur site si un critère de seuil a été atteint ; et
en réponse à déterminer que les critères de seuil ont été satisfaits, envoyer un message d'alarme au contrôleur cloud (208) par l'équipement sur site.

10. Procédé selon l'une quelconque des revendications 1 à 9, comprenant en outre :
recevoir par le contrôleur cloud (208) une pluralité de données horodatées provenant de l'équipement sur site selon un ou plusieurs capteurs au niveau du bâtiment (106) ;
analyser les données horodatées par le contrôleur cloud (208) afin de détecter une occurrence d'une condition ;
en réponse à détecter l'occurrence de la condition, envoyer une ou plusieurs instructions par le contrôleur cloud (208) à l'équipement sur site pour régler une valeur sur un actionneur au niveau du bâtiment (106) ; et
régler la valeur sur l'actionneur au niveau du bâtiment (106) par l'équipement sur site selon les instructions reçues du contrôleur cloud (208).

11. Procédé selon la revendication 10, comprenant en outre régler la valeur sur l'actionneur par l'équipement sur site envoyant des instructions à une pièce intermédiaire d'équipement sur site à laquelle l'actionneur est couplé, la pièce intermédiaire d'équipement sur site transmettant ensuite des instructions pour régler la valeur sur l'actionneur.

12. Procédé selon l'une quelconque des revendications 10 à 11, fournissant par le contrôleur cloud (208) une interface utilisateur graphique frontale qui permet à un utilisateur de créer la condition sans exiger que l'utilisateur écrive un logiciel.

13. Procédé selon l'une quelconque des revendications 10 à 12, comprenant en outre, en réponse à détecter l'occurrence de la condition, envoyer une ou plusieurs instructions par le contrôleur cloud (208) à un serveur externe situé à l'extérieur du bâtiment (106) via le réseau externe (116) pour régler une valeur sur un actionneur de réseau externe au niveau du bâtiment, dans lequel l'actionneur de réseau externe est en communication avec le serveur externe via le réseau externe (116).

14. Procédé selon l'une quelconque des revendications 1 à 13, comprenant en outre :
stocker par l'équipement sur site une pluralité de données de capteurs selon un ou plusieurs capteurs au niveau du bâtiment (106) ;
lorsque des communications avec le contrôleur cloud (208) sont possibles, envoyer les données de capteur par l'équipement sur site au contrôleur cloud (208) via le réseau externe (116) ; et
lorsque les communications avec le contrôleur cloud (208) ne sont pas possibles, déterminer une ou plusieurs instructions locales stockées au niveau de l'équipement sur site applicables aux données de capteur, et envoyer une ou
plusieurs commandes par l'équipement sur site à un ou plusieurs actionneurs au niveau du bâtiment selon la ou les instructions locales applicables aux données de capteur.

15. Procédé selon l'une quelconque des revendications 1 à 14, dans lequel l'un ou plusieurs composants qui sont couplés à l'interface de communication de l'équipement sur site incluent une combinaison de composants de capteur et de composants d'actionneur.

16. Système d'automatisation de bâtiment comprenant :
un ou plusieurs équipements sur site situés sur site dans un bâtiment (106) ; et
un contrôleur cloud (208) situé à l'extérieur du bâtiment (106) et couplé à l'équipement sur site via un réseau externe (116) ;
l'équipement sur site incluant une interface de communication, dans lequel le système d'automatisation de bâtiment est configuré pour exécuter les étapes du procédé d'automatisation de bâtiment selon l'une quelconque des revendications 1 à 15.

17. Support lisible par processeur non transitoire comprenant des instructions exécutables par le processeur qui, lorsqu'elles sont exécutées par un ou plusieurs processeurs, amènent l'un ou plusieurs processeurs à effectuer toutes les étapes du procédé selon l'une quelconque des revendications 1 à 15.
